# EUROPEAN PATENT APPLICATION

(11) **EP 1 914 616 A1**
(43) Date of publication of application: **23.04.2008**
(21) Application number: 06782049.8
(22) Date of filing: 31.07.2006
(51) Int. Cl.: G06C 13/00

(54) **INFORMATION PROCESSING DEVICE, AND INFORMATION PROCESSING PROGRAM TO BE USED IN THE DEVICE**

(30) Priority: 01.08.2005 JP 2005222466
(71) Applicant: Media Laboratory Co., Ltd., Saitama-shi Saitama 3300000 (JP)
(72) Inventor: KITABATAKE, Kentaro, Saitama-shi, Saitama 3360000 (JP)
(74) Representative: Vossius & Partner
(86) International application number: PCT/JP2006/315171
(87) International publication number: WO 2007/015468

(57) **Abstract**

Provided are an information processing device capable of utilizing a plurality of pieces of data having correlations, more effectively, and an information processing program to be used in the device. The information processing device processes information with a plurality of pieces of data stored in advance. The information processing device comprises storage means for storing the correlated pieces of data together with relation information, data processing means for processing the pieces of data on the basis of the relation information, and storage control means for newly storing the data processed by the data processing means in the storage means, together with the processed contents of the data as the relation information.

## Description

### Technical Field

The present invention relates to an information processing device realized as a personal computer or a server which stores desired data and an information processing program used in the device, and more particularly, to an information processing device enabling the effective use of a plurality of pieces of data related to each other and an information processing program used in the device.

### Background Art

With an advancement and diffusion of so-called information technology (IT) such as an information processing technique as represented by a personal computer and an information communication technique as represented by the Internet, an information processing device such as a personal computer and a server has been widely penetrating into large-scale enterprises as well as small and medium-sized enterprises, organizations such as public offices, and homes. Furthermore, in the recent situation, each of the information processing devices is provided with a communication function to constitute a network. As a result, an access can be easily made to various information for use.

There can be cited a wide variety of information as those accessible by using the personal computer as described above. In the enterprises, various information about personnel affairs, sales, management and employee training is handled. Even at home, various information about a household budget, education and an address list is managed and used. Each of the information as described above is generally recorded as individual data on recording means such as a hard disk of a personal computer or a recording medium such as a floppy (registered trademark) disk, a CD-ROM or a DVD.

However, each of a wide variety of data as described above is merely recorded as individual data on recording means such as a hard disk of a personal computer or a recording medium such as a floppy (registered trademark) disk, a CD-ROM or a DVD. A user of the data reads out each of the data based on his/her own memory, knowledge or experiences to only use the readout data in combination with other data, for example, as a reference or for comparison with other data. Therefore, a wide variety of data recorded in a personal computer are used merely depending on the memory, knowledge or experiences of the data user. Accordingly, it cannot be believed that the data are fully effectively used.

In view of the above-described situation, the applicant of the present invention has already proposed an information processing device for storing information in a form which facilitates the use of the information, as disclosed in Japanese Patent Application Laid-open No. 2001-229205 (hereinafter, referred to as Patent Document 1).

The information processing device as described in Patent Document 1 mainly includes storage means for storing first data, second data and relation information indicating the relation between the first data and the second data and data processing means for processing the first data and/or the second data based on the relation information.

### Disclosure of the Invention

### Problems to be solved by the Invention

However, the related art described above has the following problem. Specifically, the information processing device described in Patent Document 1 includes the storage means for storing the first data, the second data and the relation information indicating the relation between the first data and the second data and the data processing means for processing the first data and/or the second data based on the relation information. The information processing device merely processes the first data and/or the second data based on the relation information. Therefore, the information processing device has a problem in that the processed data cannot be fully effectively used with the first or the second data.

More specifically, the information processing device as described in Patent Document 1 only processes the first data and/or the second data based on the relation information. Therefore, the information processing device has a problem in that the data processed by the data processing means cannot be provided for a further effective use to be synergistically or cumulatively used in combination with the first data or the second data prestored in the storage means.

For example, by executing an employee training program, the score of each employee on questions can be grasped as data. In addition, the answers of a section chief or a division chief who has experiences and knowledge to the same questions are grasped as data. As a result, it is believed that the answers of the section chief and the division chief are effectively used as data which serves to mark and evaluate the answers of the other employees. Moreover, the result of evaluation is provided not merely for evaluating the employee but for giving the employee training feedback. As a result, the data can be more effectively used.

In the case of the above-described related art, however, the execution of the employee training program only serves to grasp the answer of each employee to a question as score data. Since the obtained data cannot be more effectively used, the synergistic or cumulative use of the data cannot be expected.

Moreover, the employee training program is used exclusively for employee training and cannot be used in cooperation with project management, personnel affairs management, or profitability management. Therefore, the data cannot be synergistically or cumulatively used.

The present invention is devised to solve the above-described problem of the related art and has an object of providing an information processing device enabling the further effective use of a plural ity of pieces of data related to each other and an information processing program used in the device.

### Means for solving the Problems

Therefore, the invention according to Claim 1 relates to an information processing device for processing information by using a plurality of pieces of prestored data, characterized by including: storage means for storing the plurality of pieces of data related to each other together with relation information; data processing means for processing the plurality of pieces of data based on the relation information; and storage control means for newly storing the data processed by the data processing means in the storage means with a content of processing of the data as relation information.

The multiple data stored in the storage means are identified as, for example, first data and second data. However, the terms "first data" and "second data" do not mean specific data. When two pieces of data are selected from the plurality of pieces of data stored in the storage means, the "first data" is one piece of data and the "second data" is the other piece of data. Specifically, each of the "first data" and the "second data" does not designate one specific piece of data. The "first data" can be plural, and the "second data" can also be plural. For example, in one mode, one piece of the "first data" exists, whereas one piece of the "second data" corresponding to the first data exists. In another mode, one piece of the "first data" exists, whereas a plurality of pieces of the "second data" corresponding to the first data exist.

Further, the invention according to Claim 2 relates to an information processing device according to Claim 1, characterized in that the data stored in the storage means is managed by a page of a database storing the data, an attribute of the data, and a parameter of the data.

Further, the invention according to Claim 3 relates to an information processing device according to Claim 1, characterized in that the data stored in the storage means is managed by a class indicating an order in a data processing procedure, an item of the data, and a parameter of the data.

Further, the invention according to Claim 4 relates to an information processing device according to any one of Claims 1 to 3, characterized in that the data processing means performs a process of searching for and displaying data having the same relation information as or relation information similar to relation information input by input means based on the relation information input by the input means.

Further, the invention according to Claim 5 relates to an information processing device according to any one of Claims 1 to 3, characterized in that the data processing means performs a process of searching for and evaluating data having the same relation information as or relation information similar to relation information input by input means based on the relation information input by the input means.

Further, the invention according to Claim 6 relates to an information processing device according to any one of Claims 1 to 5, characterized in that the storage control means stores the data processed by the data processing means, the data being provided with data processing performed by the data processing means as history information.

Further, the invention according to Claim 6 relates to an information processing program executed by using a computer resource for processing information using a plurality of pieces of prestored data, characterized by including: a first step of selecting data from storage means storing the plurality of pieces of data related to each other together with relation information; a second step of selecting and reading another piece of data related to the data selected by the first step from the storage means based on the data selected by the first step; a third step of processing the data read by the second step by data processing means; and a fourth step of newly storing the data processed by the third step in the storage means with a content of processing of data as relation information.

Further, the invention according to Claim 8 relates to an information processing program characterized by including the steps of: identifying all actions of an employee for accomplishing a task as any one of five steps of: problem proposal for proposing a problem related to the task to be accomplished; information collection for collecting information about the proposed problem; planning of setting a plan of the task to be accomplished based on the collected information; implementation for implementing the set plan; and evaluation/review of evaluating and reviewing the implemented plan; converting data for at least one of the five steps of the problem proposal, the information collection, the planning, the implementation, and the evaluation/review into numeric data; and calculating a degree of contribution to sales of the task accomplished by the employee based on the obtained numeric data.

Further, the invention according to Claim 9 relates to an information processing program according to Claim 8, characterized in that the degree of contribution to the sales of the task accomplished by the employee is calculated by converting at least one of the five steps of the problem proposal, the information collection, the planning, the implementation, and the evaluation/review into numeric data as four parameters of person, money, skill and information and by calculating a rate of the four numeric parameters of the person, the money, the skill and the information of the employee to totals.

Further, the invention according to Claim 10 relates to an information processing program according to Claim 8, characterized in that the number of proposals written by the employee on a bulletin board as problems related to the task to be accomplished is used as data related to the problem proposal.

Further, the invention according to Claim 11 relates to an information processing program according to Claim 8, characterized in that the number of pieces of information written by the employee on a bulletin board as information related to the proposed problem is used as data related to the information collection.

Further, the invention according to Claim 12 relates to an information processing program according to Claim 8, characterized in that the number of plans written by the employee on a bulletin board as a plan of the task to be accomplished is used as data related to the planning.

Further, the invention according to Claim 13 relates to an information processing program according to Claim 8, characterized in that a value calculated by multiplying time data required for the employee to accomplish the task and hourly salary data of the employee is used as data related to the implementation.

Further, the invention according to Claim 14 relates to an information processing program according to Claim 8, characterized in that the number of pieces of information written by the employee on a bulletin board as an evaluation and a review of the implemented plan is used as data related to the evaluation/review.

Further, the invention according to Claim 15 relates to an information processing program according to Claim 8, characterized in that a numerical value of an evaluation by a third party or himself/herself for the task accomplished by the employee is used as data related to the evaluation/review.

Further, the invention according to Claim 16 relates to an information processing program characterized by including the steps of: identifying an action of an individual for playing a game having a match mode in which the individual fights against an opponent or answers a question given by the opponent as any one of five steps of: question proposal for proposing a question related to the game; information collection for collecting information about the proposed question; planning of planning a strategy to be implemented based on the collected information; implementation for implementing the planned strategy; and evaluation/review of evaluating and reviewing the implemented strategy; converting data for at least one of the five steps of the question proposal, the information collection, the planning, the implementation, and the evaluation/review into numeric data; and evaluating a preference of the individual based on the obtained numeric data.

Further, the invention according to Claim 17 relates to an information processing program characterized by including the steps of: identifying an action of an individual for purchasing a product or a service through the Internet as any one of five steps of: question proposal for proposing a question related to a purchase; information collection for collecting information about the proposed question; planning of setting a plan to be implemented based on the collected information; implementation for implementing the set plan to purchase the product or the service; and evaluation/review of evaluating and reviewing the purchased product or service; converting data for at least one of the five steps of the question proposal, the information collection, the planning, the implementation, and the evaluation/review into numeric data; and evaluating a preference of the individual who purchased or unpurchased the product or the service based on the obtained numeric data.

Further, the invention according to Claim 18 relates to an information processing program characterized by including the steps of: identifying an action of an individual for seeking a job through the Internet as any one of five steps of: question proposal for proposing a question related to the job; information collection for collecting information about the proposed question; planning of setting a plan for seeking the job based on the collected information; implementation for implementing the set plan to seek the job; and evaluation/review of evaluating and reviewing the found job; converting data for at least one of the five steps of the question proposal, the information collection, the planning, the implementation, and the evaluation/review into numeric data; and evaluating an aptitude of the individual seeking the job based on the obtained numeric data.

Further, the invention according to Claim 19 relates to an information processing device characterized by including: identification means for identifying all actions of an employee for accomplishing a task as any one of five steps of: problem proposal for proposing a problem related to the task to be accomplished; information collection for collecting information about the proposed problem; planning of setting a plan of the task to be accomplished based on the collected information; implementation for implementing the set plan; and evaluation/review of evaluating and reviewing the implemented plan; processing means for converting data for at least one of the five steps of the problem proposal, the information collection, the planning, the implementation, and the evaluation/review into numeric data; and calculation means for calculating a degree of contribution to sales of the task accomplished by the employee based on the obtained numeric data.

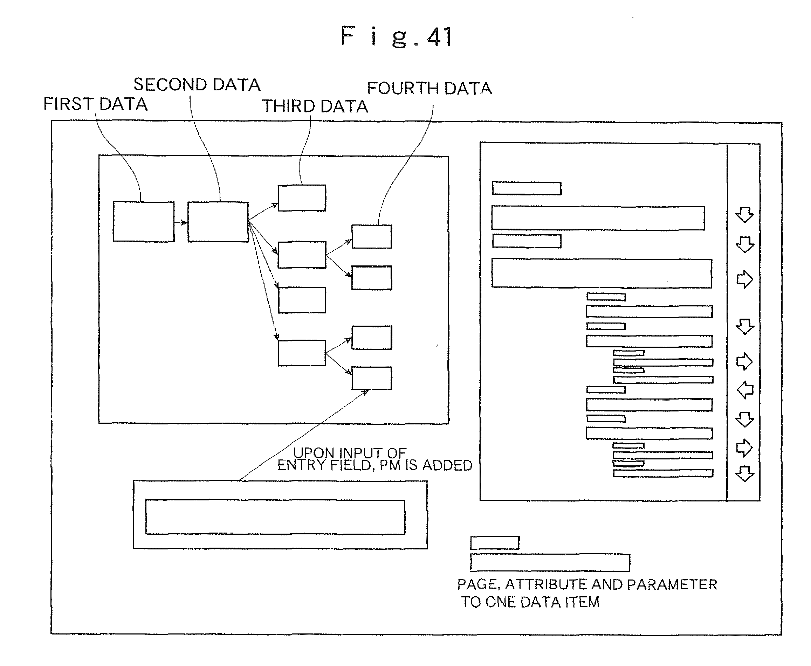

In the present invention, as illustrated in Fig. 41, multiple pieces of data related to each other such as the first data and the second data are stored together with the relation information in the storage means. The contents of the first data and the second data may be any such as a concept, an object, an event, an act, a state and an assertion. For example, business data, conversation data, study data and news data can be cited. A data format of each of the first data and the second data may be any such as a text, a specific document file, a still image, a motion image, a sound and the combination thereof.

The relation information indicates the relation between the first data and the second data described above. Various information such as generalization and concretization, a superordinate concept and a subordinate concept, a question and an answer, a reply, similarity, and opposition can be cited. The content of the relation information is arbitrary as long as the relation information indicates the relation between the first data and the second data. More specifically, for example, when the first data and the second data are business data, relation information indicating a problem in business and the cause thereof and relation information indicating a problem and a solution for the problem can be given. When the first data and the second data are conversation data, relation information indicating a question in a conversation and an answer to the question can be given. When the first data and the second data are study data, relation information indicating a question in study and an answer to the question can be given. When the first data and the second data are news data, relation information indicating news related with each other can be cited.

The first and the second data may be on a one-to-one basis or on a one-to-many basis.

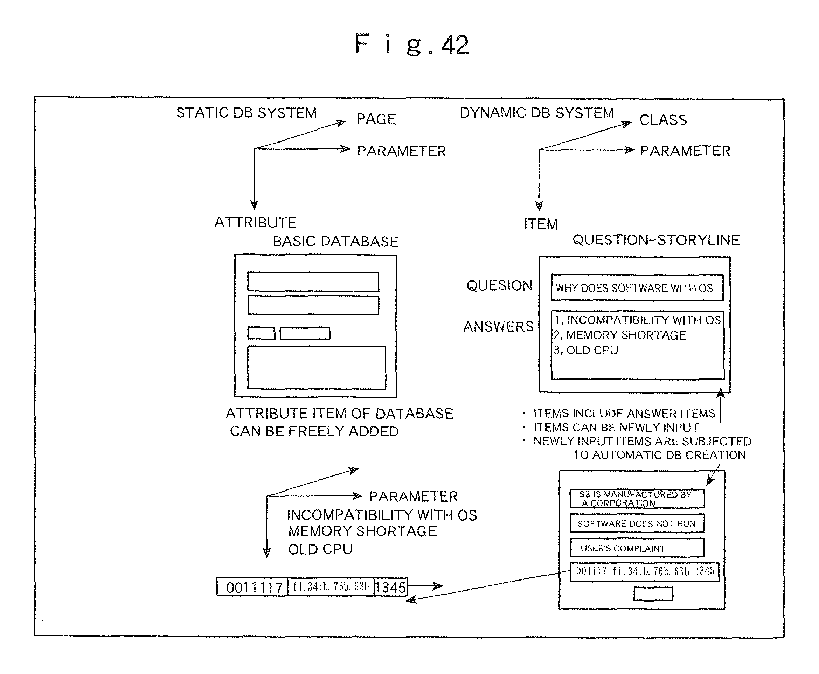

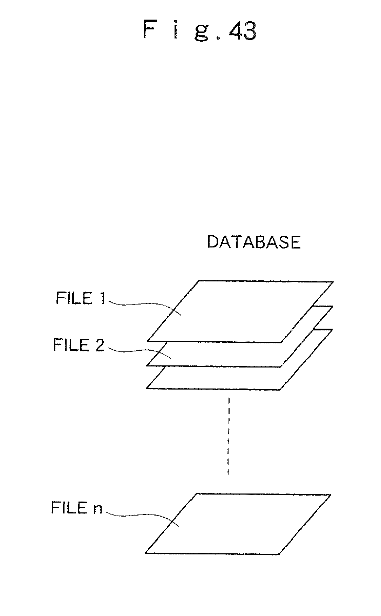

For example, the plurality of pieces of data stored in the storage means are classified into a static database system and a dynamic database system. The static database system is configured by a basic database as illustrated in Fig. 42. The basic database includes a plurality of files as illustrated in Fig. 43. Each of the files has a plurality of pages. Each of the pages of the basic database is provided with two pieces of relation information which are an attribute and a parameter. The attribute of the basic database can be freely added.

The dynamic database system is a question-storyline database system as illustrated in Fig. 42. The dynamic database has a plurality of hierarchical levels. With a question and an answer or with the evolution of a story, the user successively proceeds to a higher level. The user is allowed to freely proceed to a higher level or return to a lower level. Each of the levels of the database is provided with two pieces of relation information which are an item and a parameter. The item of the dynamic database can be freely input to be added.

As described above, the plurality of pieces of data stored in the storage means are managed by the static database system and the dynamic database system. Each of the data is provided with at least one of the relation information, that is, the page, the attribute and the parameter of the static database, and the level, the item and the parameter of the dynamic database.

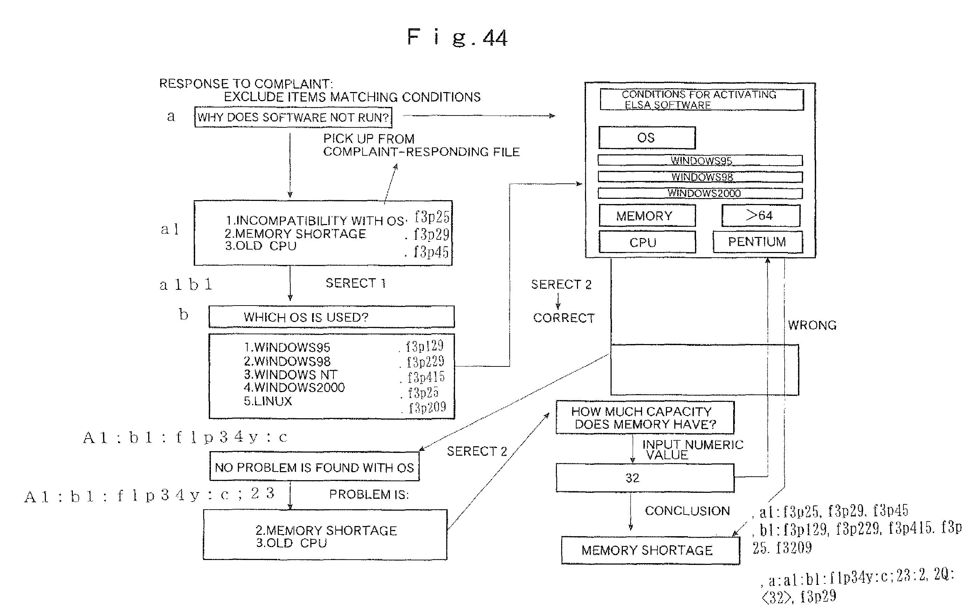

For a specific description, as illustrated in Fig. 44, for example, a response to a complaint in the dynamic database system is considered. Upon entry of a question "Why doesn't the software start?", the data processing means reads out data "1. Incompatibility with the OS", "2. Memory shortage" and "3. Old CPU" from a complaint response file f3 in the static database system, using "software activation" as the relation information to display the readout data in a solution field of the dynamic database.

In this case, each of a question "a" and an answer "a1" is provided with a level "A" in the dynamic database system. At the level "A", a parameter of the question is "a", whereas a parameter of the answer is "a1". Furthermore, the answer with the parameter "a1" is provided with three items, i.e., "1. Incompatibility with the OS", "2. Memory shortage" and "3. Old CPU". For the three items, a parameter ".f3p25" is provided for "1. Incompatibility with the OS", ".f3p29" for "2. Memory shortage", and ".f3p45" for "3. Old CPU" as parameters of the static database system. The parameters of the static database system are also used as parameters of the dynamic database system.

The parameters of the static database system mean that the data "1. Incompatibility with the OS" is stored on, ".f3p25", specifically, page 25 of a file 3, and the data "2. Memory shortage" is stored on ".f3p29", specifically, page 29 of the file 3.

Next, when "1. Incompatibility with the OS" is selected from the three answers described above, the user proceeds to the next level b. At this level, the user enters "Which OS is used?" as a question, the data processing means reads out the data, "1. Windows 95" (.f3p129), "2. Windows 98" (.f3p229), "3. Windows NT" (.f3p429), "4. Windows 2000" (.f3p225), and "5. LINUX" (.f3p209) as the answers and displays the readout data in an answer field of the dynamic database.

Then, for example, when the answer "2. Windows 98" is selected, the data processing means reads out data "Conditions for activating the ELSA software". After the data processing means verifies that the selected "2. Windows 98" is included as the "OS" of the "Conditions for activating the ELSA software", the data processing means displays an answer "No problem found with the OS". The answer is provided with "A1:b1:f1p34y:c" as the level.

Then, the data processing means displays the remaining two items, "2. Memory shortage" and "3. Old CPU" as potential causes of the problem. When "2. Memory shortage" is selected, the data processing means displays "How much capacity does the memory have?" as a question. When the user enters "32" as an answer, the data processing means reads out the data "Conditions for activating the ELSA software" to verify the memory capacity from the "Conditions for running the ELSA software". Since the memory capacity is defined as being "64" or larger, the message "Memory shortage" is selected to be displayed.

The massage "Memory shortage" is provided with relation information ",a:a1:b1:f134y:c;23:2,2Q:<32>,f3429". Therefore, by checking the history ",a:a1:b1:f134y:c;23:2,2Q:<32>,f3429" based on the message "Memory shortage", a series of operations described above can be reproduced.

The above-described series of operations are represented as a flowchart and a hierarchy diagram as illustrated in Fig. 41.

For the selection of an answer, various modes such as "selection refinement" or "ordering" for selecting a required answer or "entry of a new option" can be conceived.

Moreover, a priority order can be provided for the history database of the above-described static database. The priority order is given based on, for example, an individual ID, an evaluation ID, a business ID, and a functional ID. Moreover, for example, the answer "1. Incompatibility with the OS" is not suitable for the question "Why doesn't the software start?" as a response to the complaint. Therefore, "5" in 10-level evaluation can be provided for the answer "1. Incompatibility with the OS" as a priority order, whereas "8" can be provided for the answer "2. Memory shortage" as a priority order. The priority order is newly added by the data processing means as relation information for the answer to be executed.

### Effect of the Invention

According to the present invention, an information processing device and an information processing program which enable the further effective use of a plurality of pieces of data related to each other can be provided.

### Brief Description of the Drawings

[Fig. 1] Fig. 1 is a system configuration diagram illustrating a knowledge management system using an information processing device according to a first embodiment of the present invention.
[Fig. 2] Fig. 2 is a schematic diagram illustrating various data stored in a server of the knowledge management system using the information processing device according to the first embodiment of the present invention.
[Fig. 3] Fig. 3 is an outer configuration diagram illustrating a personal computer serving as the information processing device according to the first embodiment of the present invention.
[Fig. 4] Fig. 4 is a block diagram illustrating functional blocks of the personal computer serving as the information processing device according to the first embodiment of the present invention.
[Fig. 5] Fig. 5 is a configuration diagram illustrating an initial window of the knowledge management system using the information processing device according to the first embodiment of the present invention.
[Fig. 6] Fig. 6 is a configuration diagram illustrating a proposal bulletin board and the like of the knowledge management system using the information processing device according to the first embodiment of the present invention.
[Fig. 7] Fig. 7 is an explanatory view illustrating an overall configuration of the knowledge management system using the information processing device according to the first embodiment of the present invention.
[Fig. 8] Fig. 8 is a configuration diagram illustrating a window of a regular employee of the knowledge management system using the information processing device according to the first embodiment of the present invention.
[Fig. 9] Fig. 9 is a schematic view illustrating an employee hierarchy in an enterprise.
[Fig. 10] Fig. 10 is a configuration diagram illustrating a leader screen of the knowledge management system using the information processing device according to the first embodiment of the present invention.
[Fig. 11] Fig. 11 is a configuration diagram illustrating a sales management screen of the knowledge management system using the information processing device according to the first embodiment of the present invention.
[Fig. 12] Fig. 12 is configuration diagram illustrating another sales management screen of the knowledge management system using the information processing device according to the first embodiment of the present invention.
[Fig. 13] Fig. 13 is a configuration diagram illustrating a specialized skill screen.
[Fig. 14] Fig. 14 is a configuration diagram illustrating another specialized skill screen.
[Fig. 15] Fig. 15 is a configuration diagram illustrating a general screen of a leader.
[Fig. 16] Fig. 16 is a configuration diagram illustrating a screen showing a question and an answer to the question.
[Fig. 17] Fig. 17 is a configuration diagram illustrating a schedule screen.
[Fig. 18] Fig. 18 is a configuration diagram illustrating another schedule screen.
[Fig. 19] Fig. 19 is a configuration diagram illustrating a further schedule screen.
[Fig. 20] Fig. 20 is a configuration diagram illustrating a further schedule screen.
[Fig. 21] Fig. 21 is a configuration diagram illustrating a further schedule screen.
[Fig. 22] Fig. 22 is a configuration diagram illustrating a further schedule screen.
[Fig. 23] Fig. 23 is a configuration diagram illustrating a further schedule screen.
[Fig. 24] Fig. 24 is a configuration diagram illustrating a further schedule screen.
[Fig. 25] Fig. 25 is a configuration diagram illustrating a further schedule screen.
[Fig. 26] Fig. 26 is a configuration diagram illustrating the content of the specialized skill.
[Fig. 27] Fig. 27 is a configuration diagram illustrating a schedule screen of a large-scale project.
[Fig. 28] Fig. 28 is a configuration diagram illustrating a schedule screen of a middle-scale project.
[Fig. 29] Fig. 29 is a configuration diagram illustrating a schedule screen of a small-scale project.
[Fig. 30] Fig. 30 is a configuration diagram illustrating another schedule screen of the small-scale project.
[Fig. 31] Fig. 31 is a configuration diagram illustrating a management screen of a project schedule.
[Fig. 32] Fig. 32 is a configuration diagram illustrating another management screen of the project schedule.
[Fig. 33] Fig. 33 is a configuration diagram illustrating a target management screen.
[Fig. 34] Fig. 34 is a configuration diagram illustrating the content of a general skill.
[Fig. 35] Fig. 35 is a configuration diagram illustrating a screen of a performance evaluation sheet.
[Fig. 36] Fig. 36 is a configuration diagram illustrating a screen of a contribution margin.
[Fig. 37] Fig. 37 is a configuration diagram illustrating another general screen of the knowledge management system using the information processing device according to the first embodiment of the present invention.
[Fig. 38] Fig. 38 is a configuration diagram illustrating a further general screen of the knowledge management system using the information processing device according to the first embodiment of the present invention.
[Fig. 39] Fig. 39 is an explanatory view illustrating relation information of the knowledge management system using the information processing device according to the first embodiment of the present invention.
[Fig. 40] Fig. 40 is a configuration diagram of a project profit management screen.
[Fig. 41] Fig. 41 is an explanatory view illustrating relation information of the knowledge management system using the information processing device according to the first embodiment of the present invention.
[Fig. 42] Fig. 42 is an explanatory view illustrating a database of the knowledge management system using the information processing device according to the first embodiment of the present invention.
[Fig. 43] Fig. 43 is another explanatory view illustrating the database of the knowledge management system using the information processing device according to the first embodiment of the present invention.
[Fig. 44] Fig. 44 is an explanatory view illustrating relation information of data of the knowledge management system using the information processing device according to the present invention.

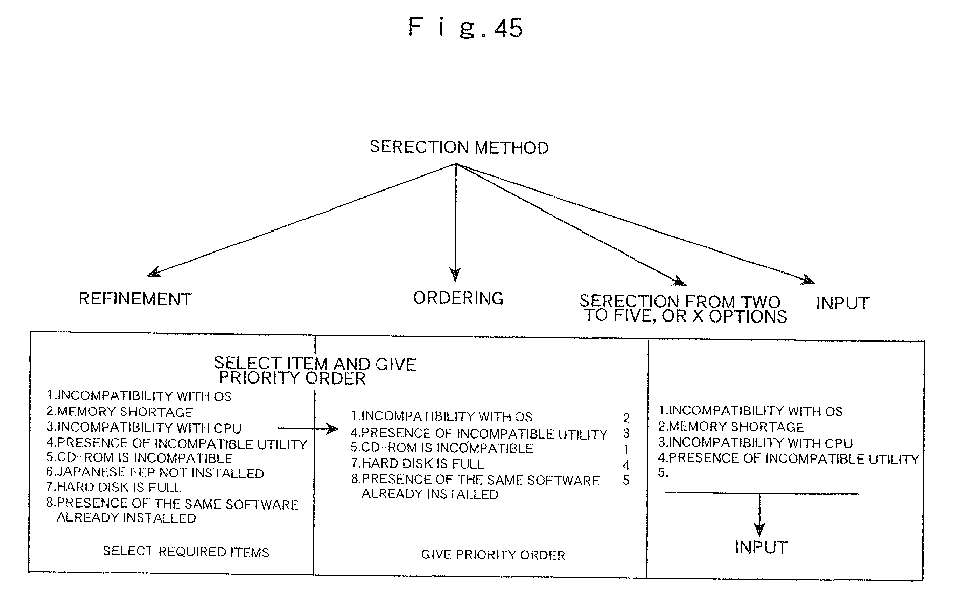

[Fig. 45] Fig. 45 is an explanatory view illustrating a data selecting method of the knowledge management system using the information processing device according to the present invention.
[Fig. 46] Fig. 46 is an explanatory view illustrating a database of the knowledge management system using the information processing device according to the present invention.
[Fig. 47] Fig. 47 is an explanatory view illustrating relation information of data of the knowledge management system using the information processing device according to the present invention.
[Fig. 48] Fig. 48 is an explanatory view illustrating a knowledge management system using an information processing device according to a second embodiment of the present invention.
[Fig. 49] Fig. 49 is another explanatory view illustrating the knowledge management system using the information processing device according to the second embodiment of the present invention.
[Fig. 50] Fig. 50 is a further explanatory view illustrating the knowledge management system using the information processing device according to the second embodiment of the present invention.
[Fig. 51] Fig. 51 is a further explanatory view illustrating the knowledge management system using the information processing device according to the second embodiment of the present invention.
[Fig. 52] Fig. 52 is a further explanatory view illustrating the knowledge management system using the information processing device according to the second embodiment of the present invention.
[Fig. 53] Fig. 53 is a further explanatory view illustrating the knowledge management system using the information processing device according to the second embodiment of the present invention.
[Fig. 54] Fig. 54 is a further explanatory view illustrating the knowledge management system using the information processing device according to the second embodiment of the present invention.
[Fig. 55] Fig. 55 is a further explanatory view illustrating the knowledge management system using the information processing device according to the second embodiment of the present invention.
[Fig. 56] Fig. 56 is a further explanatory view illustrating the knowledge management system using the information processing device according to the second embodiment of the present invention.
[Fig. 57] Fig. 57 is a further explanatory view illustrating the knowledge management system using the information processing device according to the second embodiment of the present invention.
[Fig. 58] Fig. 58 is a further explanatory view illustrating the knowledge management system using the information processing device according to the second embodiment of the present invention.
[Fig. 59] Fig. 59 is a further explanatory view illustrating the knowledge management system using the information processing device according to the second embodiment of the present invention.
[Fig. 60] Fig. 60 is a further explanatory view illustrating the knowledge management system using the information processing device according to the second embodiment of the present invention.
[Fig. 61] Fig. 61 is a further explanatory view illustrating the knowledge management system using the information processing device according to the second embodiment of the present invention.
[Fig. 62] Fig. 62 is a further explanatory view illustrating the knowledge management system using the information processing device according to the second embodiment of the present invention.
[Fig. 63] Fig. 63 is a further explanatory view illustrating the knowledge management system using the information processing device according to the second embodiment of the present invention.
[Fig. 64] Fig. 64 is a further explanatory view illustrating the knowledge management system using the information processing device according to the second embodiment of the present invention.
[Fig. 65] Fig. 65 is a further explanatory view illustrating the knowledge management system using the information processing device according to the second embodiment of the present invention.
[Fig. 66] Fig. 66 is a further explanatory view illustrating the knowledge management system using the information processing device according to the second embodiment of the present invention,
[Fig. 67] Fig. 67 is a further explanatory view illustrating the knowledge management system using the information processing device according to the second embodiment of the present invention.
[Fig. 68] Fig. 68 is a further explanatory view illustrating the knowledge management system using the information processing device according to the second embodiment of the present invention.
[Fig. 69] Fig. 69 is a further explanatory view illustrating the knowledge management system using the information processing device according to the second embodiment of the present invention.
[Fig. 70] Fig. 70 is a further explanatory view illustrating the knowledge management system using the information processing device according to the second embodiment of the present invention.
[Fig. 71] Fig. 71 is a further explanatory view illustrating the knowledge management system using the information processing device according to the second embodiment of the present invention.
[Fig. 72] Fig. 72 is a further explanatory view illustrating the knowledge management system using the information processing device according to the second embodiment of the present invention.
[Fig. 73] Fig. 73 is a further explanatory view illustrating the knowledge management system using the information processing device according to the second embodiment of the present invention.
[Fig. 74] Fig. 74 is a further explanatory view illustrating the knowledge management system using the information processing device according to the second embodiment of the present invention.
[Fig. 75] Fig. 75 is a further explanatory view illustrating the knowledge management system using the information processing device according to the second embodiment of the present invention.
[Fig. 76] Fig. 76 is a further explanatory view illustrating the knowledge management system using the information processing device according to the second embodiment of the present invention.
[Fig. 77] Fig. 77 is a further explanatory view illustrating the knowledge management system using the information processing device according to the second embodiment of the present invention.
[Fig. 78] Fig. 78 is a further explanatory view illustrating the knowledge management system using the information processing device according to the second embodiment of the present invention.
[Fig. 79] Fig. 79 is a further explanatory view illustrating the knowledge management system using the information processing device according to the second embodiment of the present invention.
[Fig. 80] Fig. 80 is a further explanatory view illustrating the knowledge management system using the information processing device according to the second embodiment of the present invention.
[Fig. 81] Fig. 81 is a further explanatory view illustrating the knowledge management system using the information processing device according to the second embodiment of the present invention.
[Fig. 82] Fig. 82 is a further explanatory view illustrating the knowledge management system using the information processing device according to the second embodiment of the present invention.
[Fig. 83] Fig. 83 is a further explanatory view illustrating the knowledge management system using the information processing device according to the second embodiment of the present invention.
[Fig. 84] Fig. 84 is a further explanatory view illustrating the knowledge management system using the information processing device according to the second embodiment of the present invention.
[Fig. 85] Fig. 85 is a further explanatory view illustrating the knowledge management system using the information processing device according to the second embodiment of the present invention.
[Fig. 86] Fig. 86 is a further explanatory view illustrating the knowledge management system using the information processing device according to the second embodiment of the present invention.
[Fig. 87] Fig. 87 is a further explanatory view illustrating the knowledge management system using the information processing device according to the second embodiment of the present invention.
[Fig. 88] Fig. 88 is a further explanatory view illustrating the knowledge management system using the information processing device according to the second embodiment of the present invention.
[Fig. 89] Fig. 89 is a further explanatory view illustrating the knowledge management system using the information processing device according to the second embodiment of the present invention.
[Fig. 90] Fig. 90 is a further explanatory view illustrating the knowledge management system using the information processing device according to the second embodiment of the present invention.
[Fig. 91] Fig. 91 is a further explanatory view illustrating the knowledge management system using the information processing device according to the second embodiment of the present invention.
[Fig. 92] Fig. 92 is a further explanatory view illustrating the knowledge management system using the information processing device according to the second embodiment of the present invention.
[Fig. 93] Fig. 93 is a further explanatory view illustrating the knowledge management system using the information processing device according to the second embodiment of the present invention.
[Fig. 94] Fig. 94 is a further explanatory view illustrating the knowledge management system using the information processing device according to the second embodiment of the present invention.
[Fig. 95] Fig. 95 is a further explanatory view illustrating the knowledge management system using the information processing device according to the second embodiment of the present invention.
[Fig. 96] Fig. 96 is a further explanatory view illustrating the knowledge management system using the information processing device according to the second embodiment of the present invention.
[Fig. 97] Fig. 97 is a further explanatory view illustrating the knowledge management system using the information processing device according to the second embodiment of the present invention.
[Fig. 98] Fig. 98 is a further explanatory view illustrating the knowledge management system using the information processing device according to the second embodiment of the present invention.

### Description of Reference Numerals

1: knowledge management information processing system
2₁₁, 2₁₂, 2₁₃, ..., 2₂₁, 2₂₂, 2₂₃, ...: personal computer
3: server

### Best Mode for carrying out the Invention

Hereinafter, embodiments of the present invention will be described referring to the accompanying drawings.

### First Embodiment

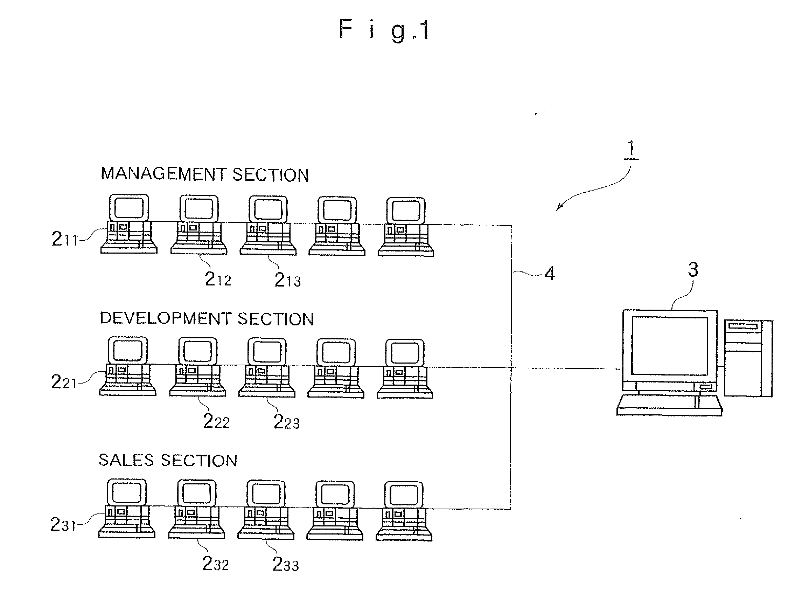

Fig. 1 is an overall configuration diagram illustrating a knowledge management information processing system using an information processing device according to a first embodiment of the present invention.

A knowledge management information processing system 1 includes, as illustrated in Fig. 1, a plurality of personal computers 2₁₁, 2₁₂, 2₁₃, and the like, 2₂₁, 2₂₂ , 2₂₃, and the like, and 2₃₁, 2₃₂, 2₃₃ and the like serving as information processing devices, and a server 3 similarly serving as an information processing device. The multiple personal computers 2₁₁, 2₁₂, 2₁₃, 2₂₁, 2₂₂, 2₂₃, 2₃₁, 2₃₂, 2₃₃ and the like are provided in, for example, a management section, a development section, or a sales section of an enterprise. However, the placement of the personal computers is not limited thereto. It is apparent that the personal computers may be provided in an arbitrary section or department. The server 3 is provided as, for example, a server for human resource development or a personnel manager, and offers various types of service to the other personal computers 2. Each of the personal computers 2₁₁, 2₁₂, 2₁₃, 2₂₁, 2₂₂, 2₂₃, 2₃₁, 2₃₂, 2₃₃ and the like functions as a client which receives various types of service from the server 3. The server 3 and each of the clients 2 are connected through Intranet 4 to be communicable with each other, and are configured to be also connected to the Internet and the like as needed. In Fig. 1, each of the personal computers 2₁₁, 2₁₂, 2₁₃, 2₂₁, 2₂₂, 2₂₃, 2₃₁, 2₃₂, 2₃₃ and the like and the server 3 are connected through the single Intranet 4. As a result, it is apparent that not only each of the personal computers 2₁₁, 2₁₂, 2₁₃, 2₂₁, 2₂₂, 2₂₃, 2₃₁, 2₃₂, 2₃₃ and the like is communicable with the server 3, but also the personal computers 2₁₁, 2₁₂, 2₁₃, 2₂₁, 2₂₂, 2₂₃, 2₃₁, 2₃₂, 2₃₃ and the like are connected to be communicable with each other. For the communication between the server 3 and each of the clients 2, for example, a TCP/IP is used as a communication protocol. However, a protocol to be used is not limited thereto. It is apparent that other protocols may be used. Moreover, although only one server 3 is illustrated in Fig. 1 for convenience, it is apparent that a plurality of servers may be provided.

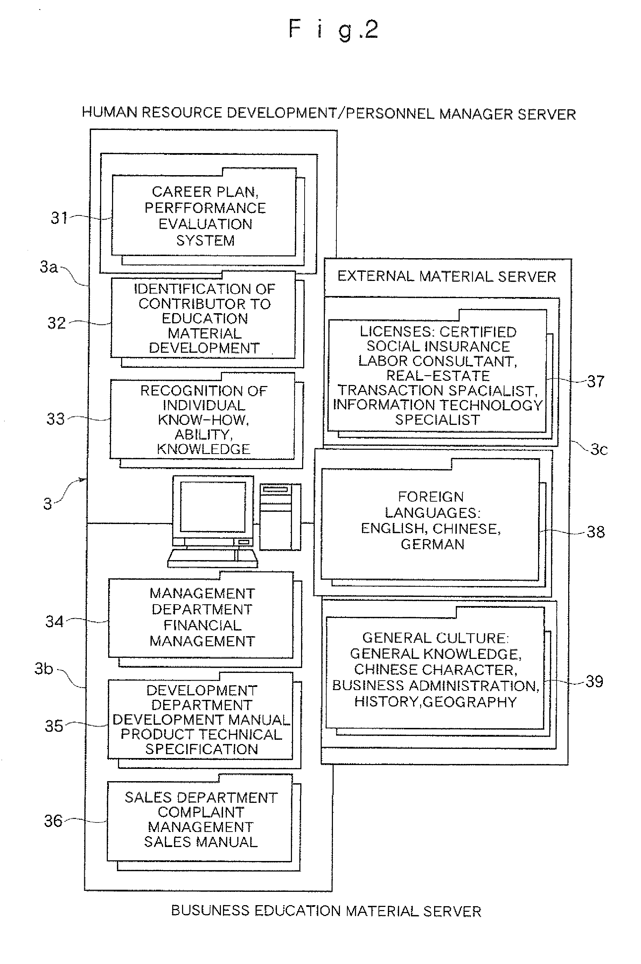

Moreover, the server 3 is provided as a server 3a for human resource development or a personnel manager, which serves as an information processing device using a knowledge management program as illustrated in Fig. 2. The server 3 is not limited thereto. It is apparent that the server 3 may be provided as a server 3b for providing a business education material or an external material server 3c. The server 3 stores various data (including programs) as illustrated in Fig. 2. As the data stored in the server 3, for example, various data such as personnel management data, project management data, sales management data, general skills data, and specialized skills data are cited. When the server 3 is the server 3a for human resource development or a personnel manager, data such as "career plan", "performance evaluation system", "identification of educational material development contributors", "identification of personal know-how, ability and knowledge" are stored. The business educational material server 3 stores data and programs such as "accounting management" and "financial management" for the "management department", "development manual" and "product technical specifications" for the "development department, and "complaint management" and "sales manual" for the "sales department".

The external material server 3c stores, as illustrated in Fig. 2, data and programs such as "certified social insurance and labor consultant, real-estate transaction specialist, information technology specialist" as "licenses", "English", "Chinese" and "German" as "foreign languages", and "general knowledge", "Chinese character", "business administration", "history" and "geography" as "general culture".

The server 3 is used for, for example, distributing data stored in performance evaluation manual CDs to management-level employees, allowing the personnel department to know the tendency of performance evaluation by the management-level employees, allowing employees to download a training material, or allowing the personnel department to know the result and the process of training of an employee, and the like.

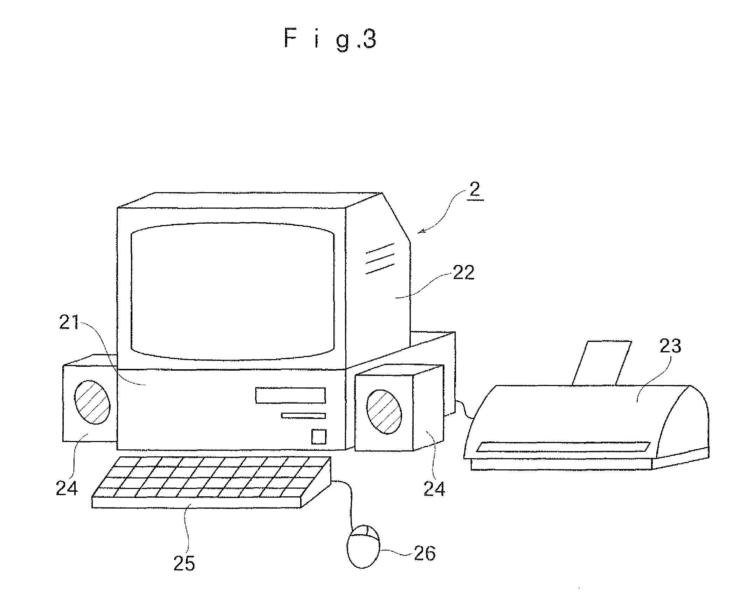

Fig. 3 more specifically illustrates a configuration of the personal computer 2 constituting the knowledge management information processing system 1 illustrated in Fig. 1.

The personal computer 2 includes a personal computer (PC) main body 21, a display device 22 consisting of a CRT, a liquid crystal display panel or the like as an output device, a printer device 23, an audio speaker 24, and a keyboard 25 and a mouse 26 as input devices.

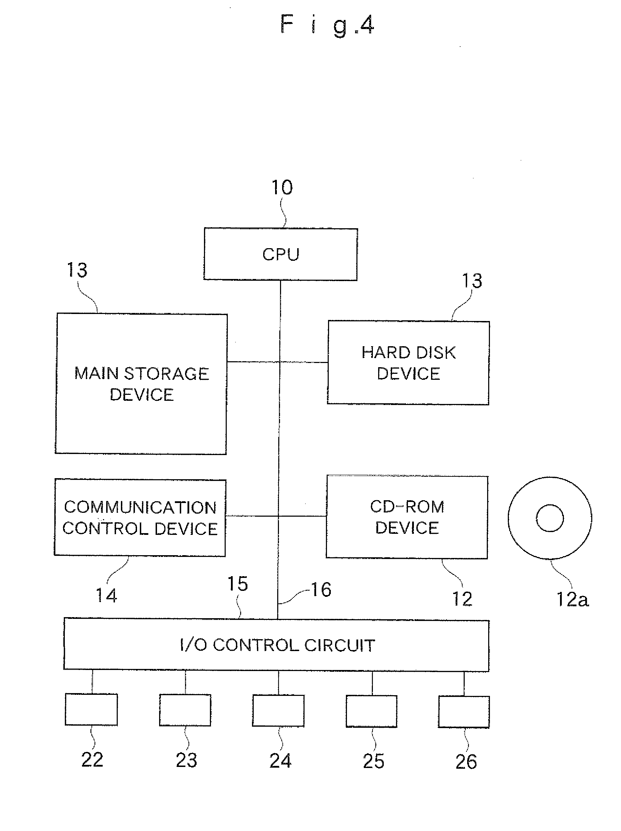

Fig. 4 illustrates the personal computer illustrated in Fig. 3 by using a functional block diagram.

Specifically, the PC main body 21 includes a CPU 10 serving as arithmetic control means for performing various arithmetic controls, a main storage unit 11 having a program area and a work area, a hard disk device 13 serving as storage means for storing programs and data, a CD-ROM 12a and a CD-ROM driver 12, a communication control device 14 enabling the transmission/reception of data through the communication line 4, and an I/O control circuit 15 for controlling various input/output devices such as the display device 22, the printer device 23, the audio speaker 24, the keyboard 25, and the mouse 26. The above-described components are connected to each other through a system bus 16.

As described above, the personal computer 2 is composed of a plurality of functional blocks. The CPU 10 and the like function as various function-realizing means such as data processing means and memory control means according to, for example, software (program) stored in the CD-ROM 12a read by the CD-ROM drive 12 to cause the personal computer 2 to execute various information processing operations as described below.

In this embodiment, the system is configured by the personal computer 2 as described above. However, the system configuration is not limited thereto. For example, the system may be realized by a work station, a home-use game machine, a specialized machine, a portable terminal, a cellular phone or the like.

The above-described server 3 is basically configured in the same manner as the personal computer 2 illustrated in Fig. 4.

As described above, the server 3 stores various data as illustrated in Fig. 2 and mainly functions as storage means. However, the server 3 also has functions as data processing means and storage control means for controlling a data storage operation. Each of the personal computers 2 accesses the server 3 to perform various processing such as reading required data, processing data or storing the processed data.

The personal computer 2 serving as the information processing device is configured to perform predetermined processing on various data stored in the server 3 by displaying a predetermined screen on the display device 22 according to a program installed on the hard disk device 13 or a program executed by the server 3 or performing various operations such as a character input operation or a selecting operation with the keyboard 25 or the mouse 26 functioning as the input device with respect to the screen displayed on the display device 22.

An OS (operating system) for managing the computer resources described above and providing a user-friendly computer environment is preinstalled on the hard disk 13 of the personal computer 2. As such an OS, for example, Windows (registered trademark) by Microsoft Corporation and Mac OS (registered trademark) by Apple Inc. can be cited.

As application software running on the OS as described above, a knowledge management program (functioning as data processing means) as an information processing program according to this embodiment is installed on the hard disk device 13 of each of the personal computers 2. The program has: (1) a data display function, (2) a data addition function, (3) an employee training function, (4) an employee evaluation function, (5) a manual preparation function, and the like. Furthermore, the hard disk device 13 of the server computer 3 stores a database which is subjected to various types of processing by the above-described knowledge management program.

The application software or the database as described above may be a commercially available packaged product stored in the CD-ROM 12a. The application software or the database may also be a commercially available one stored in another storage medium or may be distributed or commercially available through various computer networks.

### Data structure

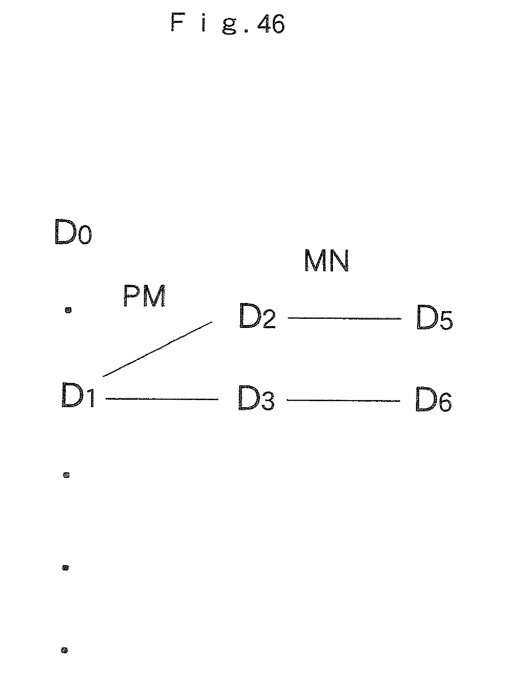

Fig. 46 schematically illustrates a data structure of the database stored in the hard disk device 13 of the server 3. As illustrated in Fig. 46, the database has a tree structure. Each data is classified into Problem (hereinafter, abbreviated as P), Measure (measure against the problem; hereinafter, abbreviated as M), or Note (note for taking the measure; hereinafter, abbreviated as N) from a root node to leaf nodes. For example, "slow application activation" is stored as (P) for data D1, "memory expansion" is stored as (M) for data D2, and the details of a memory expansion method for each type of personal computer are stored as (N) for data D5.

Furthermore, relation information indicating a relation between those pieces of data is added between the data. For example, relation information (PM) indicating a relation of (P) and (M) is added between the data D1 and the data D2 and D3. Similarly, relation information (MN) indicating a relation of (M) and (N) is added between the data D2 and the data D5, and the data D3 and the date D6.

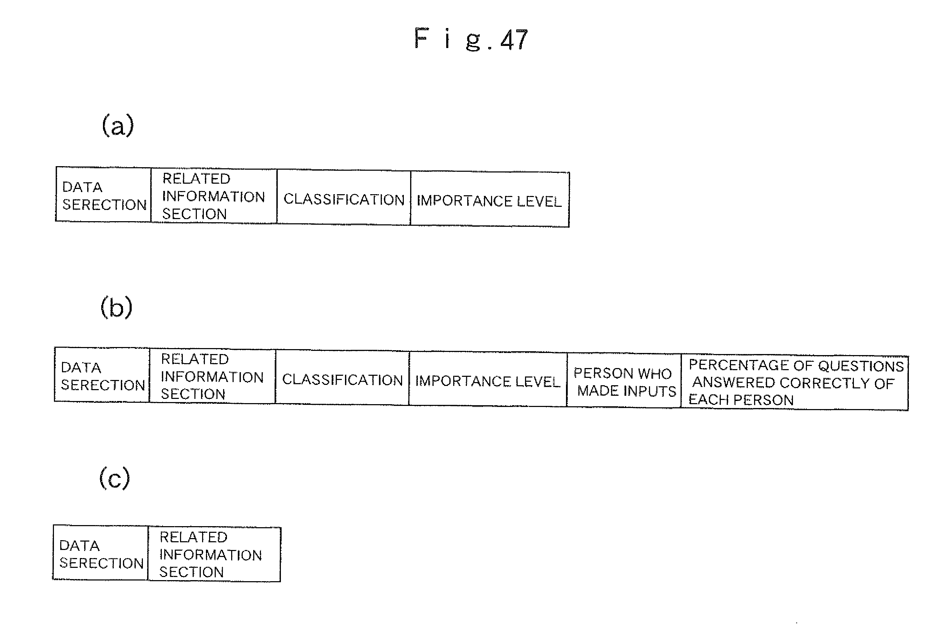

Fig. 47 schematically illustrates each of the data of (P), (M) and (N). Fig. 47(a) schematically illustrates the data of (P). The data has a data section, a relation information section, and an attribute information section as a data structure. The data section stores a certain (P) as text information. To the relation information section, information indicating that the text information in the data section has a relation (P) to another data and the degree of relation is added. To the attribute information section, attributes of the text information in the data section, specifically, a field and the level of importance are added as the attribute of (P).

For example, for the above-described data D1, the data section stores "slow application activation" as the text information. The relation information section stores relation information, PM(D2:6) and PM(D3:3) . The relation information means that the data D1 and the data D2 and D3 have a relation of (P) and (M) and the degree of relation is evaluated on a scale of 1 (the lowest relation) to 10 (the highest relation). Herein, the data D1 and the data D2 have "6" as the degree of relation, and the data D1 and the data D3 have "3" as the degree of relation. The attribute information section stores "3" which indicates the "P" is related to "operational feeling" as a field and "1" which indicates that (P) is not serious as the level of importance.

Fig. 47(b) schematically illustrates the data of (M). The data of (M) has a data section, a relation information section, an attribute information section as a data structure. The data section stores a certain (M) as text information. To the relation information section, information indicating that the text information in the data section is (M) with respect to another data as a relation and the degree of relation is added. To the attribute information section, attributes of the text information in the data section, specifically, a field, the level of importance, a person who inputs data, a percentage of questions answered correctly (of each person) is added as the attributes of (M).

For example, for the above-described data D2, "memory expansion" is stored as the text information in the data section. The relation information section stores relation information, MP (D1 : 6). The relation information indicates that the data D2 and the data D1 have a relation of (M) and (P) and that the degree of relation is "6" on a scale of 1 (the lowest relation) to 10 (the highest relation). The attribute information section stores "1" which indicates "increase in hardware resources" as the field, "2" which indicates "middle importance" as the level of importance, "A" which indicates "an employee A" as the person who inputs the data, "A(100)" which indicates that the percentage of questions answered correctly of the employee A is 100% and "B(50)" which indicates that the percentage of questions answered correctly of an employee B is 50% as the percentage of questions answered correctly of each person.

Fig. 47(c) schematically illustrates the data of (N). The data of (N) has a data section and a relation information section as a data structure. The data section stores a certain (N) as text information. To the relation information section, information indicating that the text information in the data section is (N) with respect to another data as a relation is added.

For example, for the data D5 described above, the details of a memory expansion method for each type of personal computer are stored as text information in the data section. The relation information section stores relation information of NM (D2). The relation information indicates that the data D2 and the data D5 have a relation of (M) and (N).

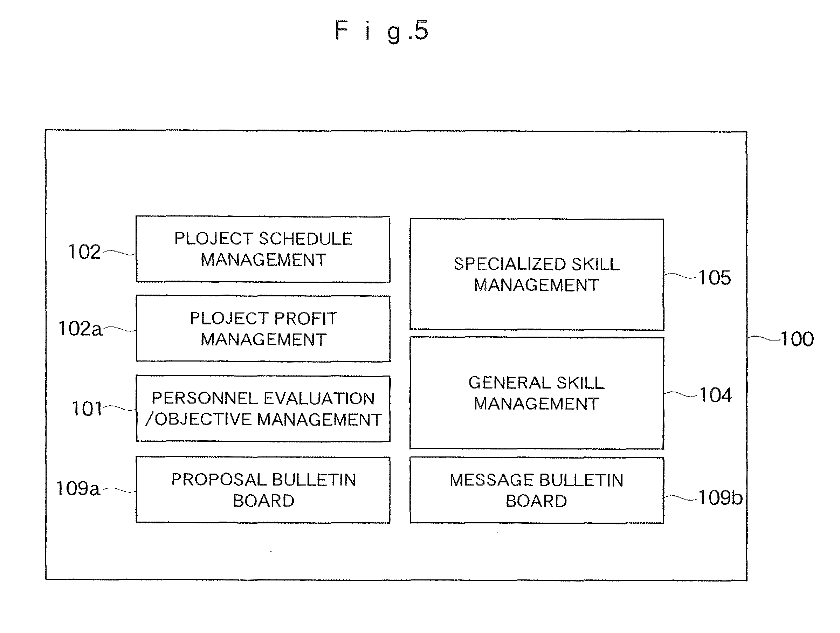

The personal computer 2 reads out, for example, the knowledge management program installed on the hard disk device 13 to display a basic screen 100 as illustrated in Fig. 5 on the display device 22 of the personal computer 2. The basic screen 100 includes a project schedule management sub-window 102, a project profit management sub-window 102a, a personnel evaluation objective management sub-window 101, a specialized skill management sub-window 105, a general skill management sub-window 104, a proposal bulletin board sub-window 109a, and a message bulletin board sub-window 109b.

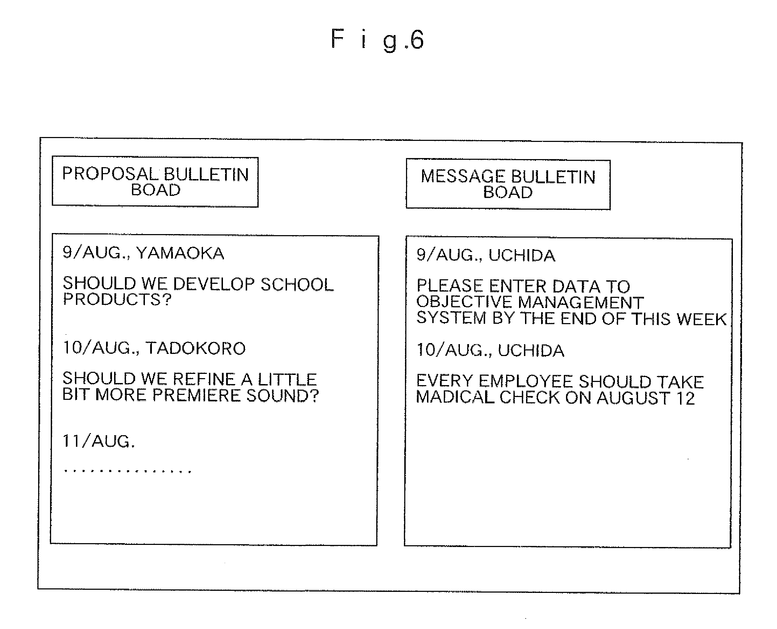

Any employee is free to use the proposal bulletin board sub-window 109a and the message bulletin board sub-window 109b. By clicking any of the proposal bulletin board sub-window 109a and the message bulletin board sub-window 109b, for example, as illustrated in Fig. 6, a proposal from an employee or a message to an employee can be displayed.

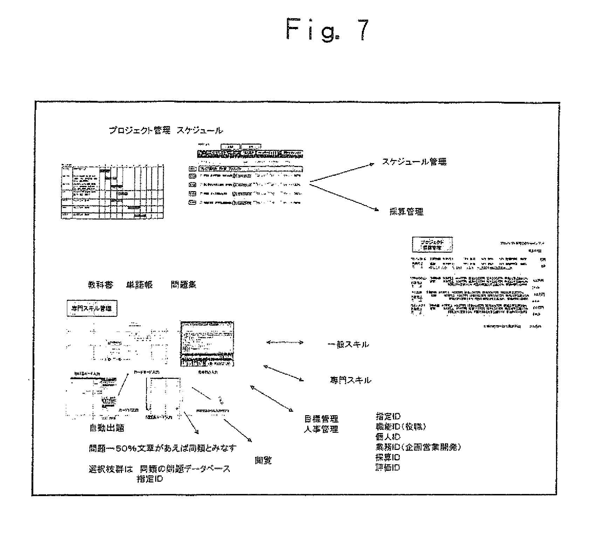

The basic functions of the knowledge management program according to this embodiment are roughly classified into a project schedule management function and a function as a textbook/wordbook/workbook, as illustrated in Fig. 7. The project schedule management function is realized as the project schedule management sub-window 102 and the project profit management sub-window 102a, as illustrated in Fig. 5. The function as the textbook/wordbook/workbook is converted into data in the form of a sheet or a card. The content of each page of the textbook or the workbook is stored as one sheet data. The wordbook is converted into data and stored as one card. The function of the textbook/wordbook/workbook stored as data in the form of a sheet or a card is realized in association with the personnel evaluation objective management sub-window 101 containing data in the form of a sheet or a card for personnel management, the specialized skill management sub-window 105 containing the data in a sheet or a card as the text book, the workbook or the wordbook for specialized skill management, the general skill management sub-window 105 similarly containing data in a sheet or a card as the textbook, the workbook or the wordbook for general skill management. The content of the textbook, the wordbook or the workbook data in the form of a sheet or a card can be arbitrarily added or deleted. Therefore, collective data as the textbook can be converted into one sheet. On the contrary, one-sheet data can be incorporated into the textbook to be additionally stored. Similarly, new card data can be added to the wordbook, a plurality of pieces of card data can be gathered into one sheet, and even one-sheet data can be converted into a plurality of pieces of card data.

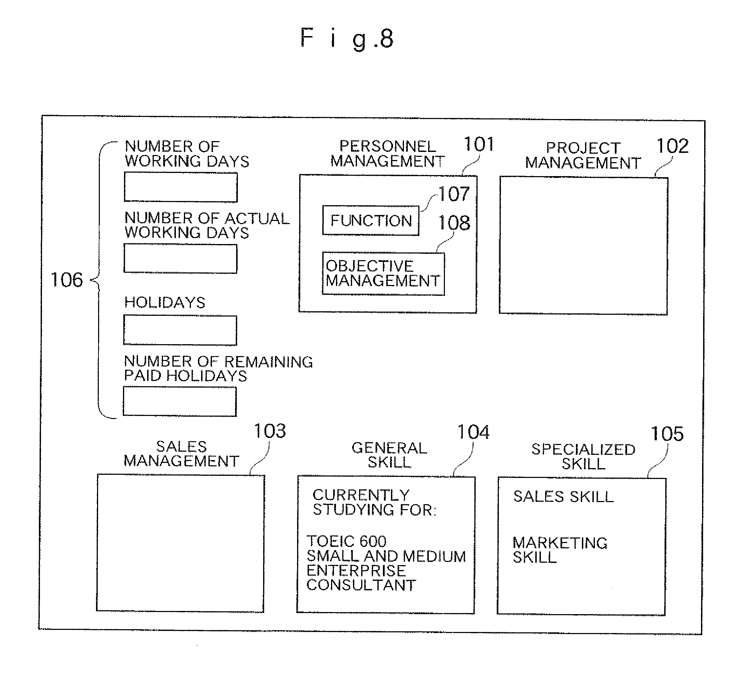

In the knowledge management program, the user inputs his/her own name or a password (not shown) from the keyboard 25 of the personal computer 2 on the initial screen 100 as illustrated in Fig. 5 to display the initial window 100 as illustrated in Fig. 8, for example. The initial window 100 is set to allow a displayed function or a usable range to be varied according to the function corresponding to the "level" as relation information. The initial window 100 is composed of, for example, the personnel management sub-window 101, the project management sub-window 102, the sales management sub-window 103, the general skill sub-window 104, the specialized skill sub-window 105, and a sub-window 106 for displaying the number of working days, the number of actual working days, the number of holidays and the number of remaining paid holidays of an employee who inputs the data. On the personnel management sub-window 101, an icon 107 for indicating a function of the employee and an icon 108 indicating objective management are displayed.

The initial window 100 is stored as, for example, the knowledge management program installed on the hard disk device 13. The data of the initial window 100 is managed as data of, for example, an employee's name.

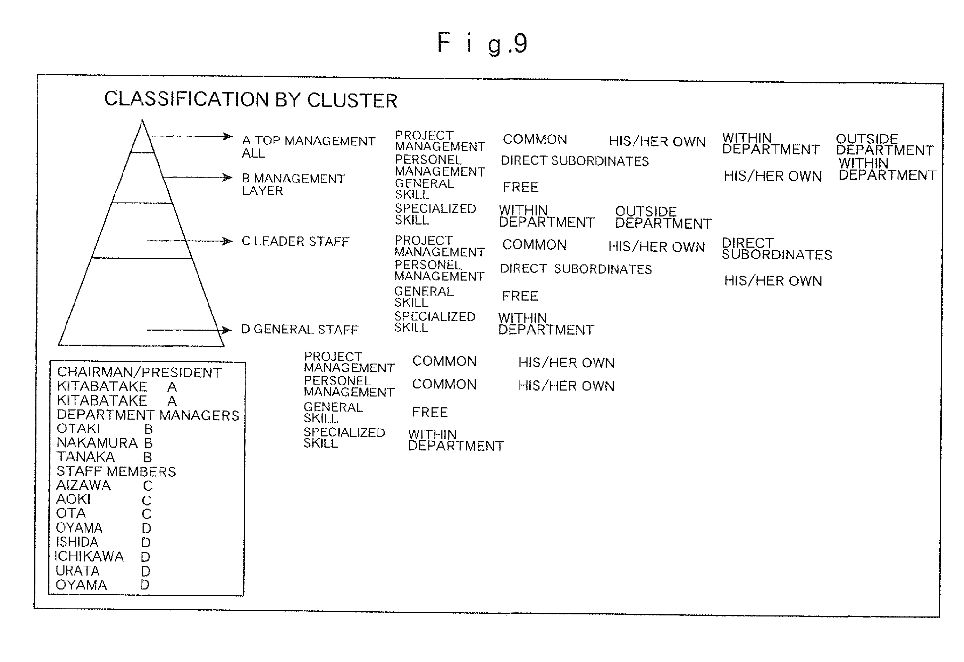

As personnel management data, as described above, data concerning the function management 107 or the objective management 108 can be cited. As the function management, for example, as illustrated in Fig. 8, the function icon 107 is clicked with the mouse 26 of the personal computer 2. As a result, the function cluster to which the input employee' name belongs can be identified, as illustrated in Fig. 9. The function is classified into clusters of A: top management, B: management level, C: leader staff, and D: general staff. The usable data in the server 3 is set to be different for each function cluster. Now, a name "Aizawa" is input. Then, it is recognized that he/she is a leader staff in the function cluster C.

The top management people can access all the data as illustrated in Fig. 9, whereas the management level people can only use common data, his/her own data, data of his/her department and the other departments for the project management, common data, his/her own data, data of his/her department for the personnel management, all the data for the general skill, and data of his/her department and the other departments for the specialized skill. The leader staff can only access the common data, his/her own data, and the data of his/her direct subordinates for the project management, the data of his/her direct subordinates and his/her own data for the personnel management, all the data for the general skill, and the data of his/her department for the specialized skill. The general staff can only use the common data and his/her own data for the project management, the common data and his/her own data for the personnel management, all the data for the general skill, and the data of his/her department for the specialized skill.

The type of data which can be accessed according to the function can be arbitrarily changed by operating the server 3. For example, when a sales staff is temporarily involved in a development project, the sales staff is allowed to access the data of the other departments for the specialized skill. It is apparent that the authorization for determining the type of accessible data is limited to the top management or the management-level function.

As illustrated in Fig. 8, on the initial window 100 of the general staff, only the common data and his/her own data are accessible for the personnel management, and the function 107 and the objective management 108 are displayed. For the project management 102, the common data and his/her own data are displayed. Furthermore, the data for the general skill 104 is freely accessible. As materials currently being studied, "TOEIC 600" and "Small and Medium Enterprise Consultant" are displayed. For the specialized skill 105, only the data of his/her department is accessible. A "sales skill" and a "marketing skill" are selectively displayed.

On the other hand, when a leader staff inputs his/her name and a password, a leader screen 110 is displayed in place of the initial window 100 of the general staff. The leader screen 110 displays a "department sheet" 111 and a "staff sheet" 112 in addition to the screens such as the "personnel management" 101, the "project management" 102, the "sales management" 103, the "general skill" 104, and the "specialized skill" 105. According to the function, a department can be selected by the "department sheet" 111 or a staff can be selected by the "staff sheet" 112 to be displayed. The chairman or the president is allowed to display the screens of all the departments and all the staff. The general staff or the leader can be identified by inputting his/her name, a password or the like. However, it is apparent that a biometric authentication technology or the like may be used.

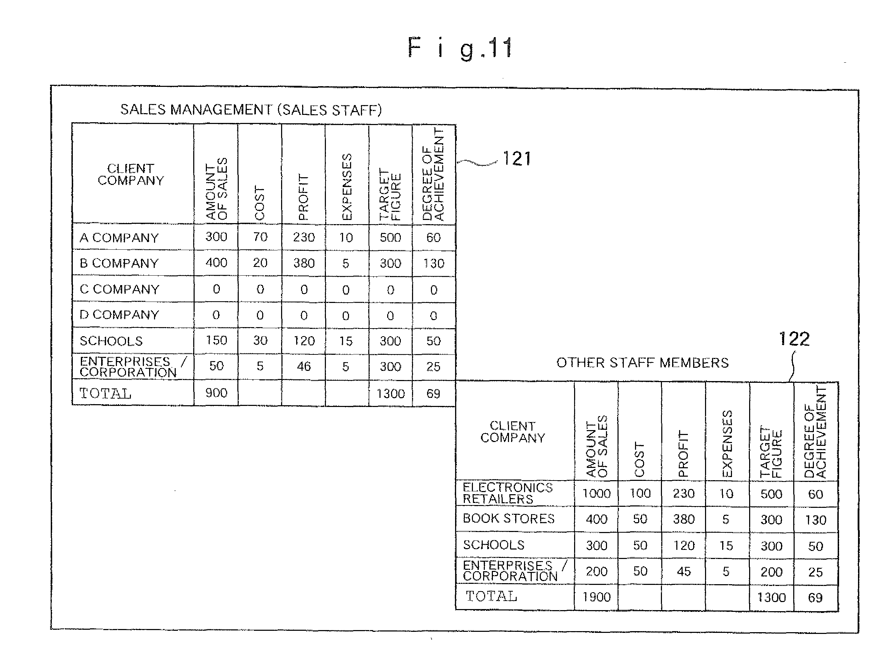

On the leader screen 110, when, for example, the screen of the "sales management" 103 is selected, a sales management report 121 of a desired sales staff or a sales management report 122 of another sales staff can be read from the database of the server 3 to be displayed, as illustrated in Fig. 11.

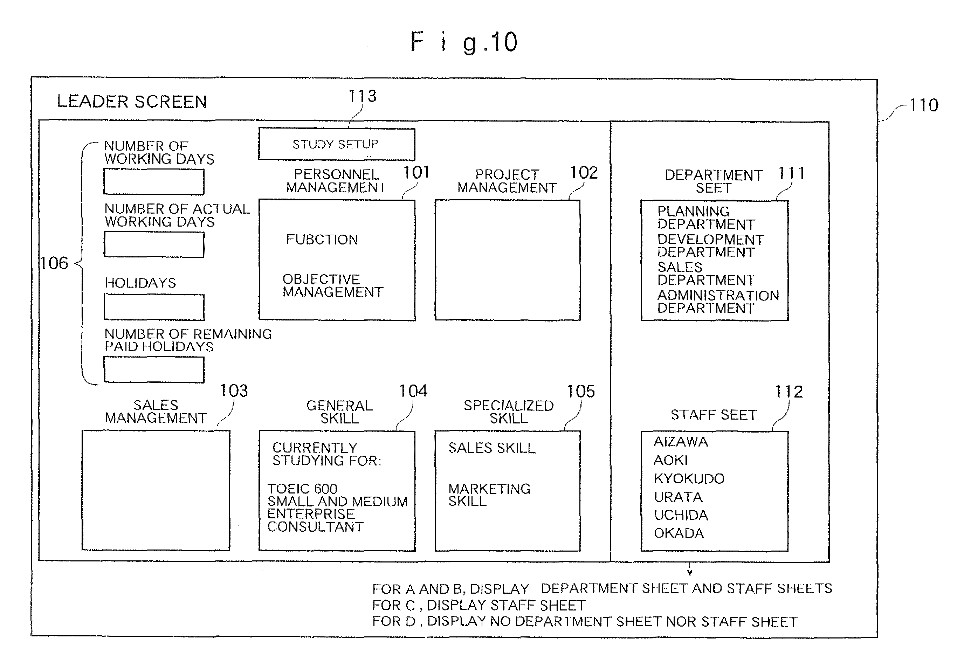

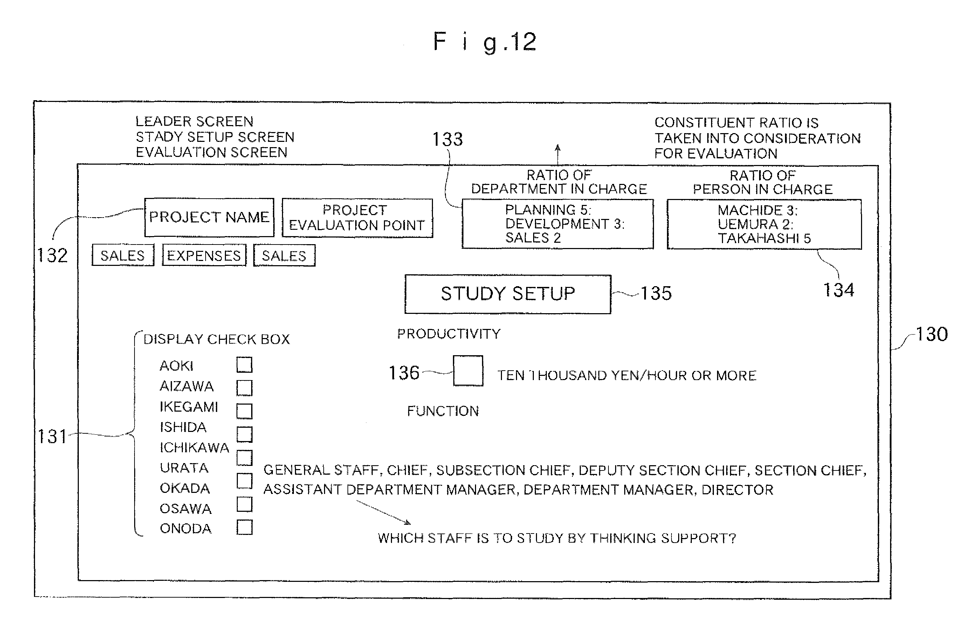

If an "evaluation screen" 130 of a "study setup screen" 113 is selected on the leader screen 110 illustrated Fig. 10, a "project name" 132, a "ratio of departments in charge" 133 and a "ratio of persons in charge" in the project, and further the content of a "study setup" 135 recommended for a staff member or a productivity 136 of a staff member can be freely set with the display of a staff's name and a check box 131, as illustrated in Fig. 12.

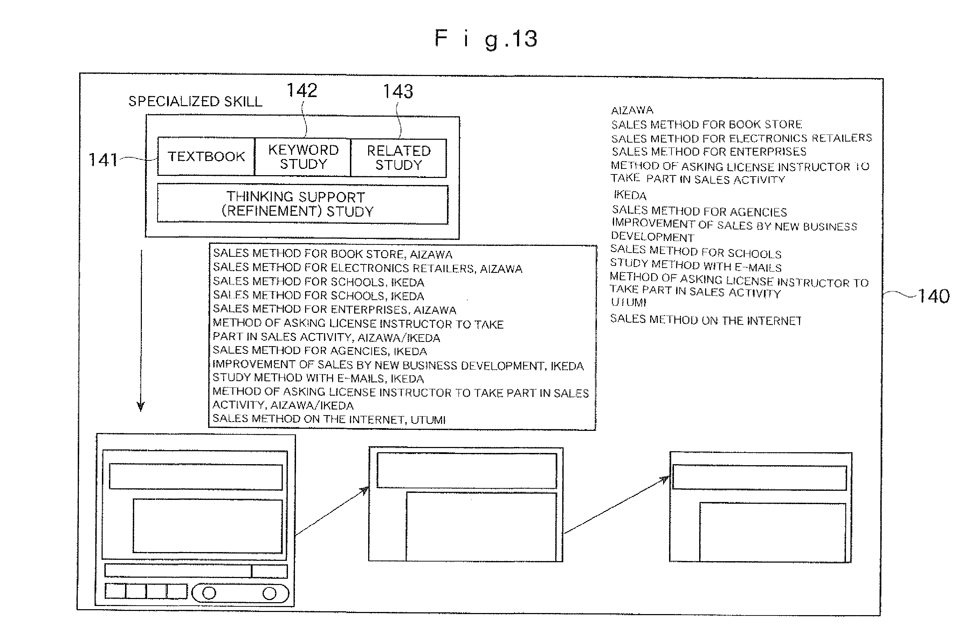

Furthermore, the display of a specialized skill management screen 140 allows data such as the content of a specialized skill being studied by each staff member, the content of a textbook or the content of study, and answers given in the process of study to be displayed as illustrated in Fig. 13.

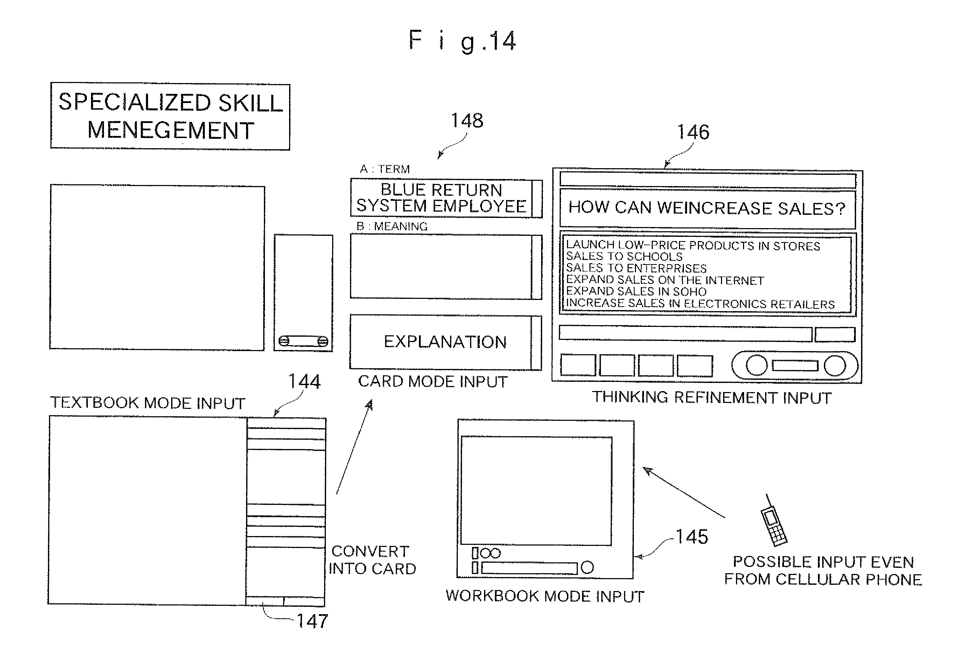

On the specialized skill management screen 140, a textbook icon 141, a keyword study icon 142, or a thinking support (refinement) study icon 143 is clicked as illustrated in Fig. 13. Then, as illustrated in Fig. 14, a screen of a textbook mode 144, a workbook mode 145 or a thinking refinement mode 146 is displayed based on the database. In the textbook mode 144, if an icon 147 for conversion into a card is clicked, a wordbook 148 in the card mode is displayed as illustrated in Fig. 14.

The personal computer 2 or the server 3, on which the knowledge management program described above is installed, is externally accessible even from a cellular phone 149 through the Internet or the like. The wordbook 148 in the textbook mode 144 or the card mode can be freely used even when the user is away from home or the office.

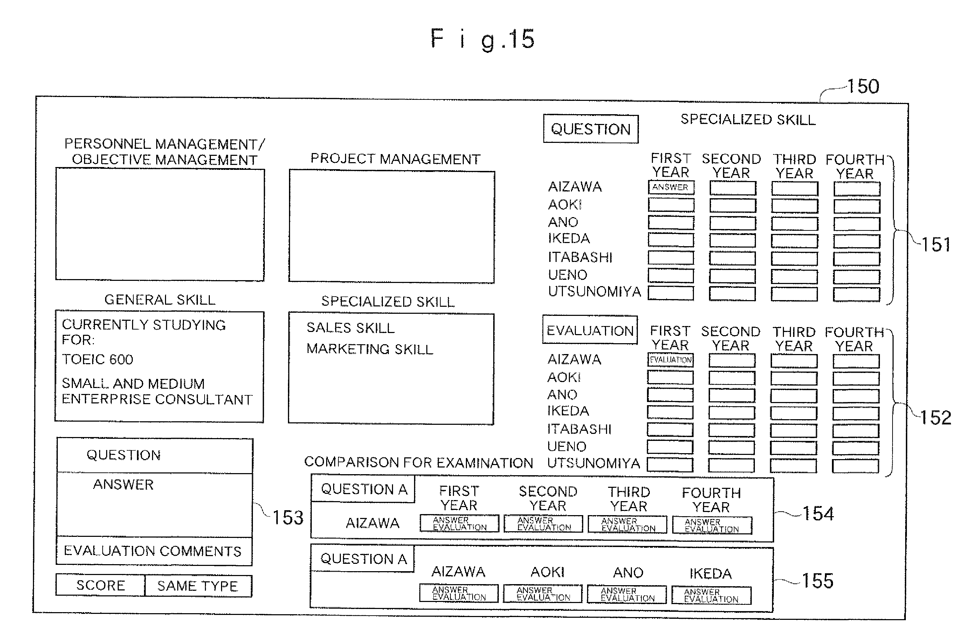

The knowledge management information processing system 1 described above can display sub-windows 151 and 152, each displaying how each staff member is studying the specialized skill with answers to questions and the evaluation for each year as a display screen 150, as illustrated in Fig. 15. In addition, a sub-window 153 for a question and its answer, evaluation comments, a score, and a type, and further, for comparison, a sub-window 154 for the evaluation of the answer of each staff member for each year, and a sub-window 155 for the evaluation of the answer of each staff to a question and the like can be displayed. Furthermore, a desired item can be input. If the type of the sub-window 153 is clicked, a question containing the same sentences at 50% or more is regarded as the same type to be displayed.

With respect to the answer evaluation sub-window 154 of each staff member for each year or the answer evaluation sub-window 155 of each staff member for each question, an absolute evaluation is entered in the case of the general skill which requires an objective answer such as e-learning, whereas a relative evaluation is entered in the case of the specialized skill or the project management. As a result, as a comprehensive personnel evaluation, the evaluation can be determined in view of all of the general skill such as the e-learning, the specialized skill, the project management, and the like. For the evaluation, a rate of the evaluation of the general skill, the specialized skill or the project management may be fixed or variable. For some users or departments, the rate can be arbitrary set to give more importance to the general skill or the specialized skill or to more highly evaluate the project management.

As a result, the leader evaluates the staff, for example, Aizawa as "9", Aoki as "5", Ano as "7", and Ikeda as "8". The evaluations are stored as new data in the server 3 to be used for the evaluation for a salary increase in next year or a bonus.

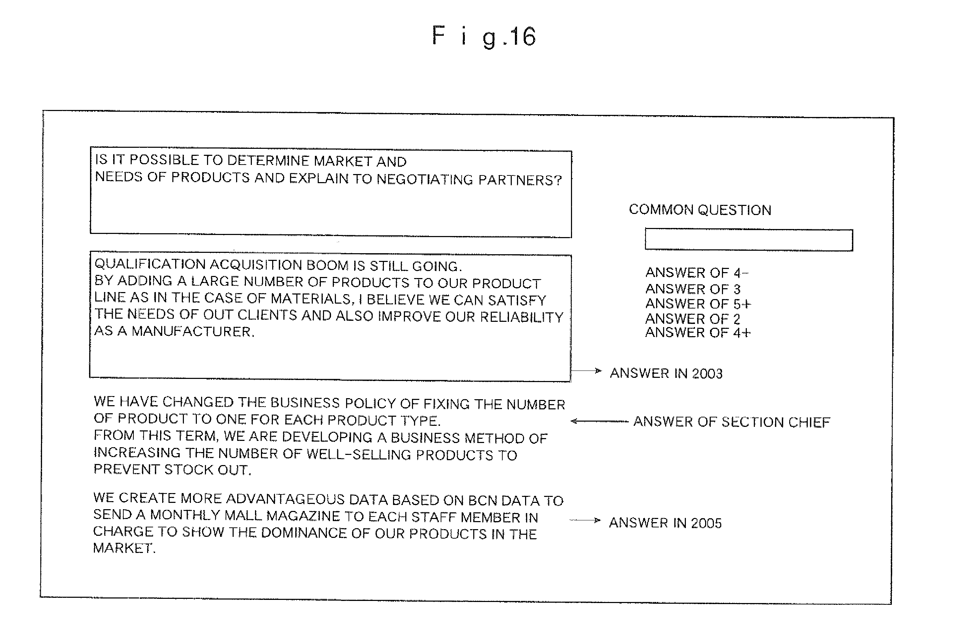

For example, the case where a question "Take into account the market and the needs of our products and explain to our negotiating partners" is given as illustrated in Fig. 16 is taken as an example. An answer of the selected staff member given in 2003, "A qualification acquisition boom is still going. By adding a large number of products to our product line as in the case of materials, I believe we can satisfy the needs of our clients and also improve our reliability as a manufacturer." is read out from the server 3 to be displayed.

Then, the leader can evaluate the answer while seeing the screen as illustrated in Fig. 16. For the evaluation, an answer of the section chief can also be displayed as a reference. The answer of the section chief is: "We have changed the business policy of fixing the number of products to one for each product type. From this term, we are promoting a business method of increasing the number of well-selling products to prevent stock out". An answer of the same staff member in the current year (2005) : "We create more advantageous data based on BCN data to send a monthly mail magazine to each staff member in charge to show the dominance of our products in the market." is also displayed to allow the evaluation from various points of view, for example, to show a change from the previous answers or how the experiences reflect on the answer.

As a result, the leader can multi-laterally use the data to evaluate the approach to work or the process of development of each staff member or to give new work. Therefore, the leader can use the data of each staff member not only for merely improving the specialized skill or for the mere personnel evaluation but in a multi-lateral and multi-dimensional manner. Moreover, the answer of the section chief is effectively used to enable not the evaluation based only on the formulaic answer but the evaluation in direct connection with the practical use. As a result, it is possible to raise the motivation of each staff member to enable the effective use of cumulative data.

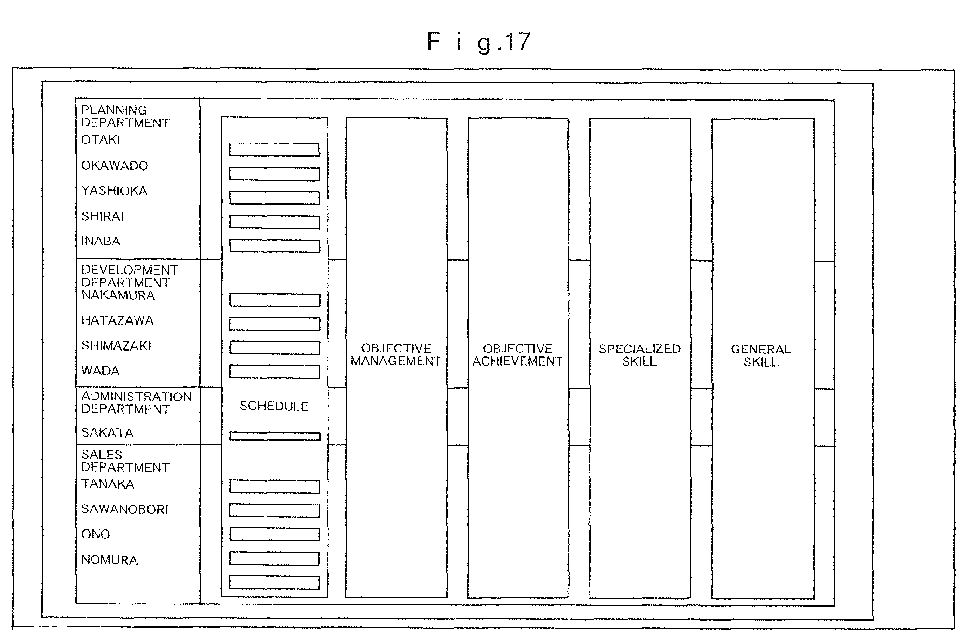

Moreover, in the project management as illustrated in Fig. 8, the schedule of each staff member for a "year", a "month" or "several weeks" can be multi-laterally and one-dimensionally managed for each of the items such as "objective management", "objective achievement", "specialized skill" or "general skill" as illustrated in Fig. 17.

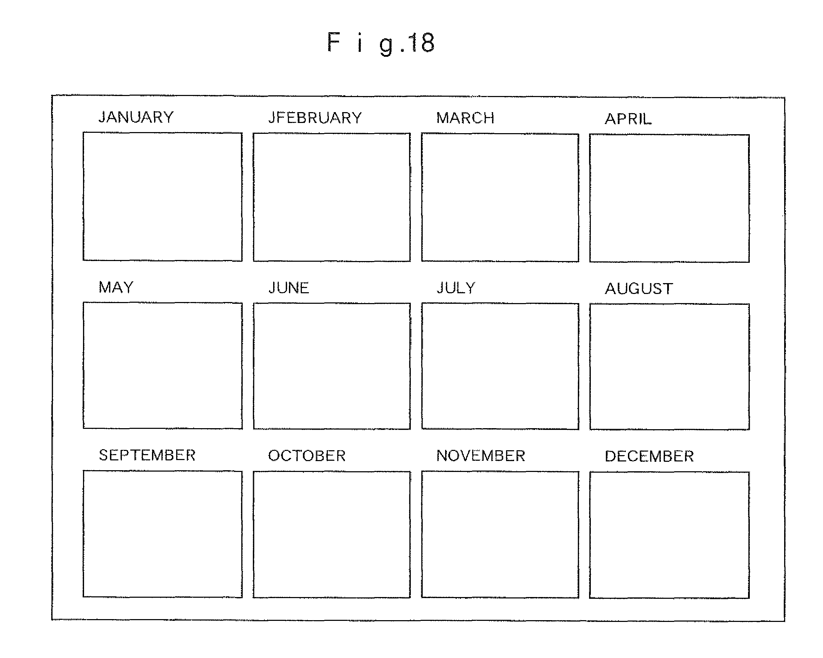

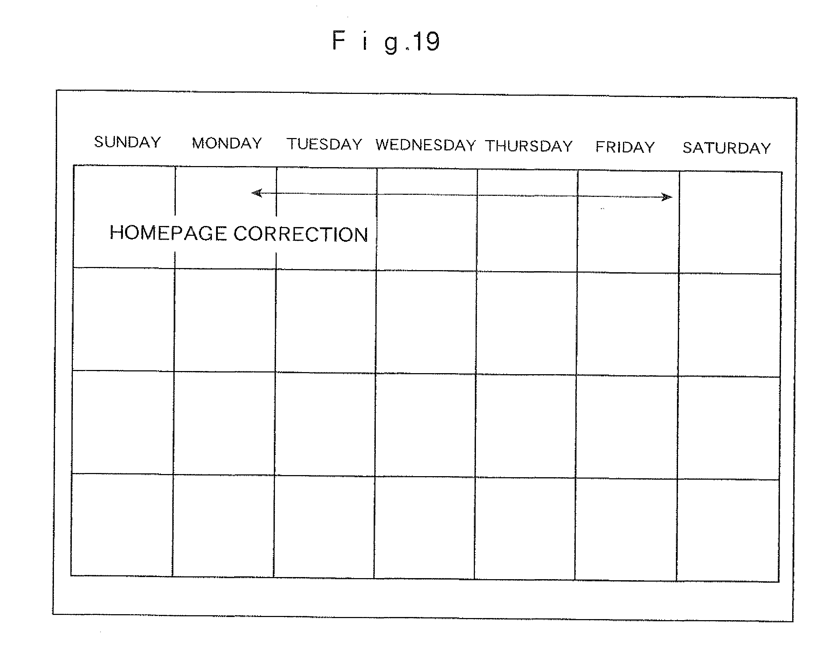

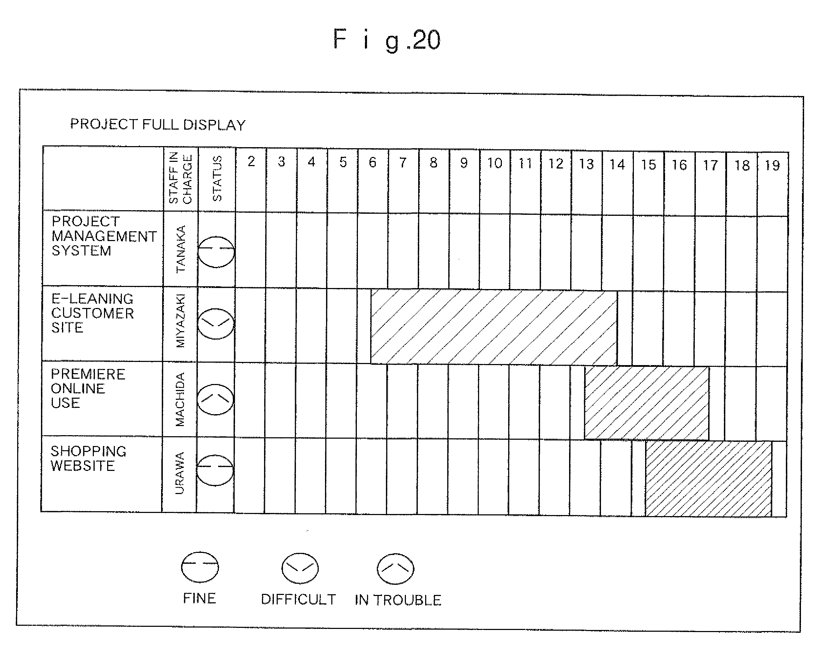

As the schedule of each staff member, for example, an annual schedule as illustrated in Fig. 18, a monthly schedule as illustrated in Fig. 19, and a weekly schedule as illustrated in Fig. 20 are displayed. In this manner, the schedule of each staff member can be grasped together with the status of progress.

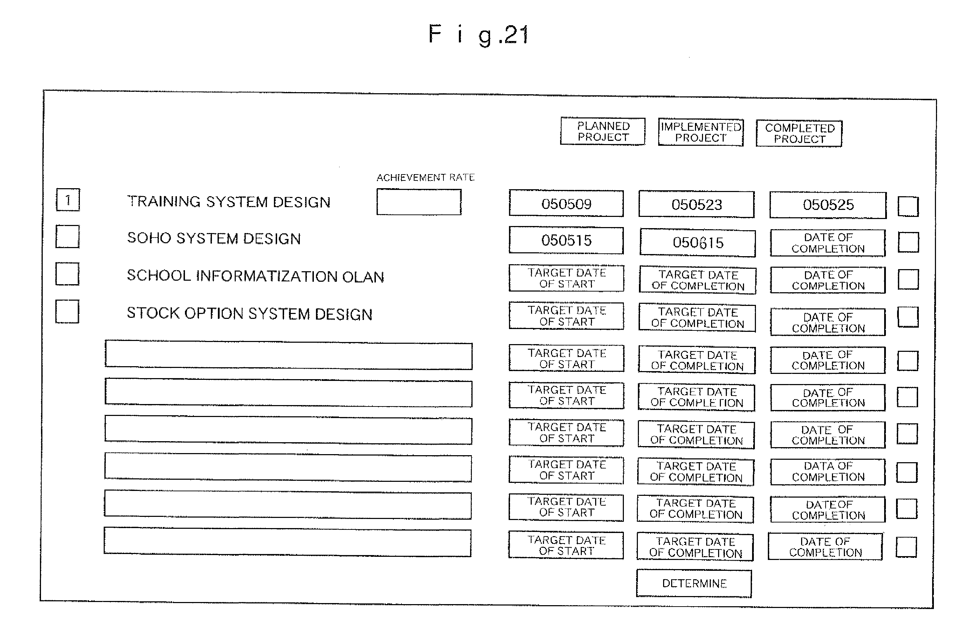

As the project management, as illustrated in Fig. 21, a date of planning or execution and, for the completed project, a date of completion and an achievement rate can be stored as data in the server 3 to be displayed for each objective of the project.

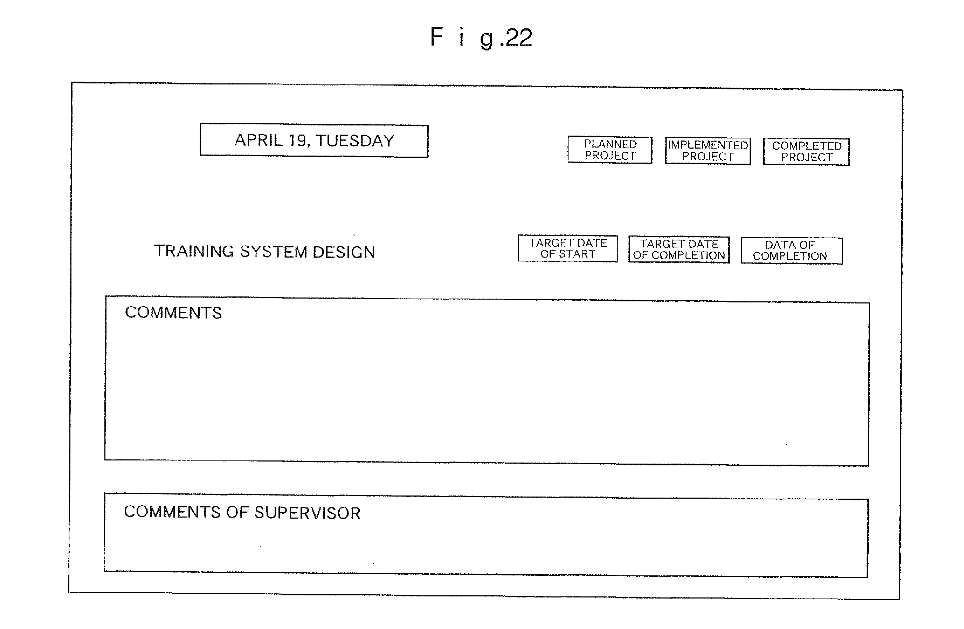

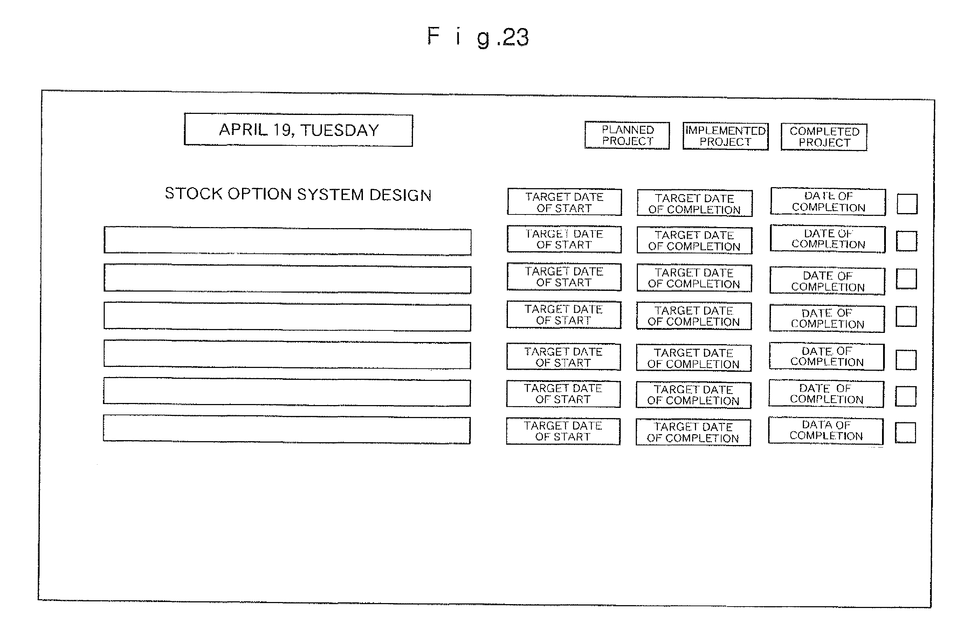

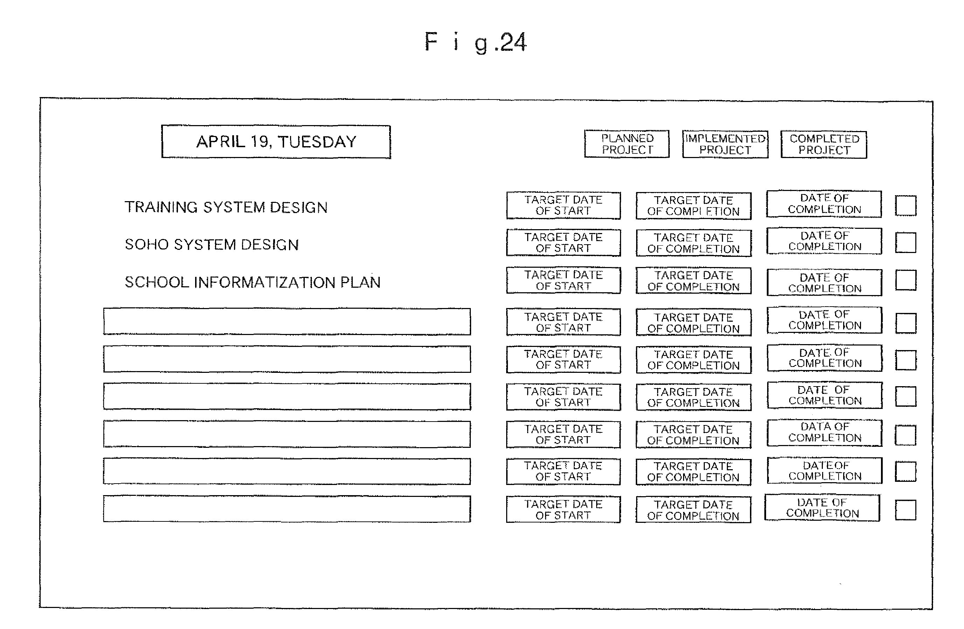

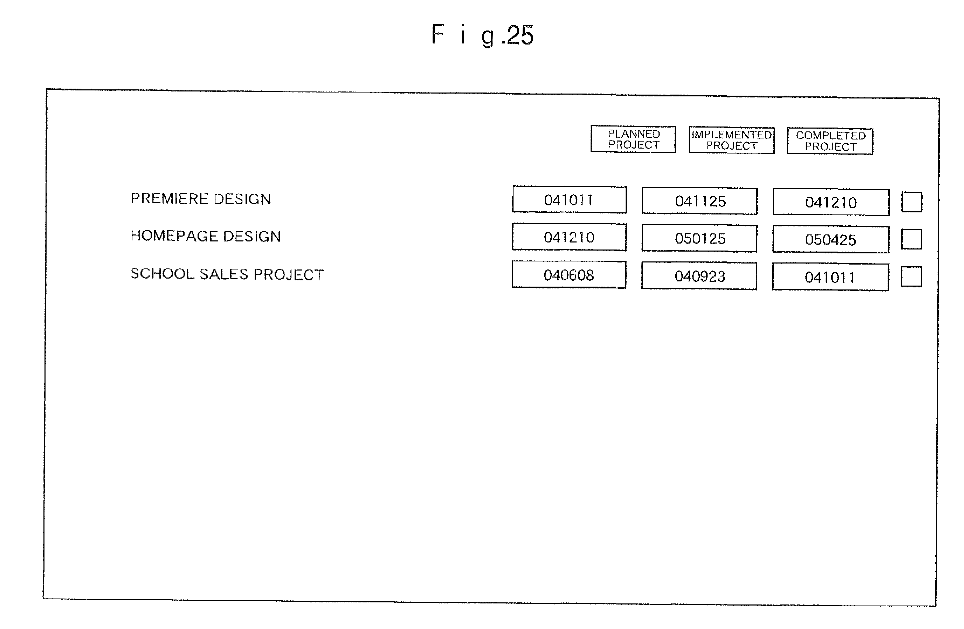

Furthermore, for the completed project, a comment from a staff member in charge and that from a superior can also be input as illustrated in Fig. 22. Moreover, as illustrated in Figs. 23 and 24, as of April 19, Tuesday, the project that each staff member is implementing and the status of progress of the project can be grasped at a glance. Moreover, as illustrated in Fig. 25, only the completed project is displayed to evaluate the specialized skill of each staff member in charge or the like in view of the number of days required for completing each project.

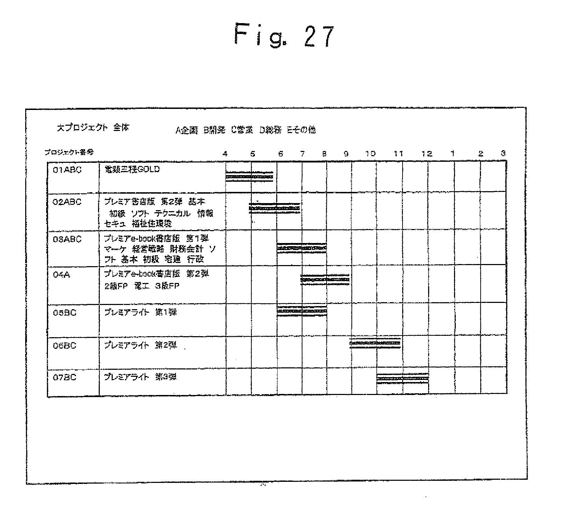

In this embodiment, besides the project schedule management described above, the management based on the project is also possible as the project schedule management function. The management based on the project is executed by the project schedule management 102, as illustrated in Fig. 5. The project is classified into a large-scale project showing the progress schedule of the project as a whole company, a middle-scale project showing the progress schedule of the project of each department in the large-scale project, and a small-scale project showing the project of each employee in the project of each department. The large-scale project is a project on which the whole company is due to work in a year, as illustrated in Fig. 27. For example, as illustrated in Fig. 27, the project entitled "Licensed Electrician Class 3, GOLD" is provided with a project number "01" and is due to be started in April and completed by the end of May. Characters "ABC" following "01" mean that this project is implemented by the planning department, the development department, and the sales department.

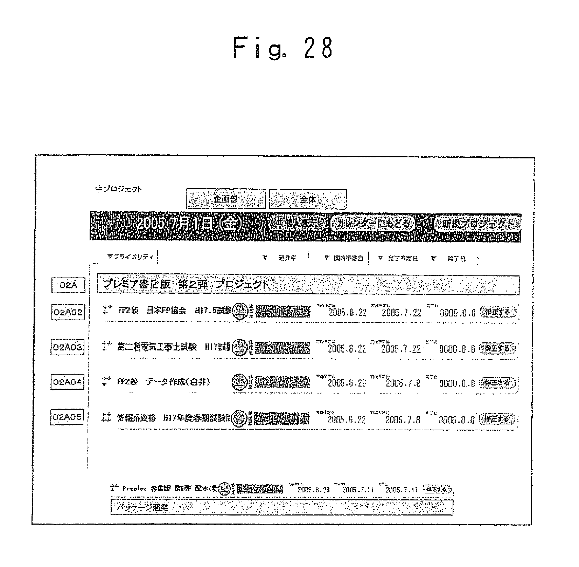

The middle-scale project is for managing the schedule of each department in charge of the large-scale project. For the middle-scale project, for example, a schedule for implementing the large-scale project in the planning department is entered, as illustrated in Fig. 28.

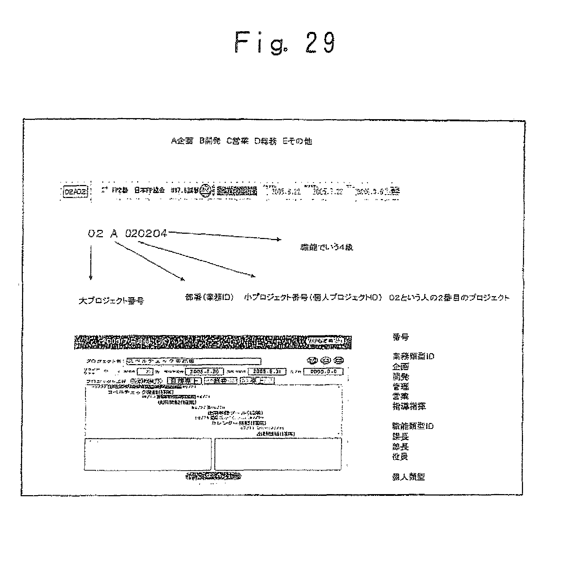

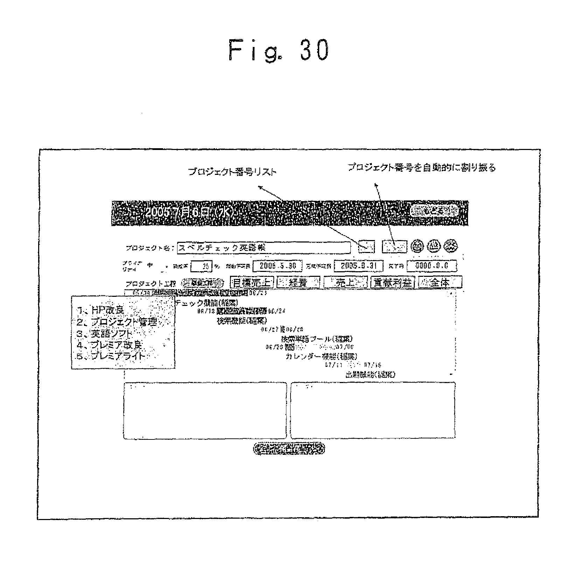

Furthermore, the small-scale project is for managing a personal schedule in each department . As the small-scale project, a project, of which an individual in each department is in charge, is selected from a plurality of projects, as illustrated in Fig. 29. Fig. 30 illustrates the small-scale project, indicating that the project is the "02"th project for an employee having a personal project ID "02" in the planning department indicated by "A" in the large-scale project "02". The last "04" indicates that the employee having the personal project ID "02" has a functional grade 4.

On the screen showing the small-scale project, as illustrated in Fig. 30, by clicking icons indicating "target sales", "expenses", actual "sales", "contribution margin", "total" and the like in addition to those indicating a target date of start and a target date of completion, the content of each item can be displayed.

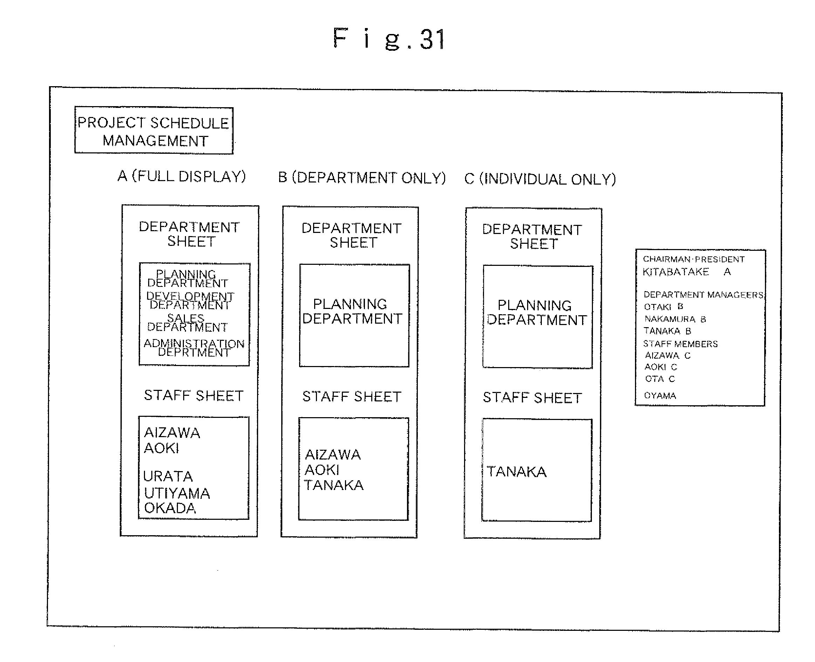

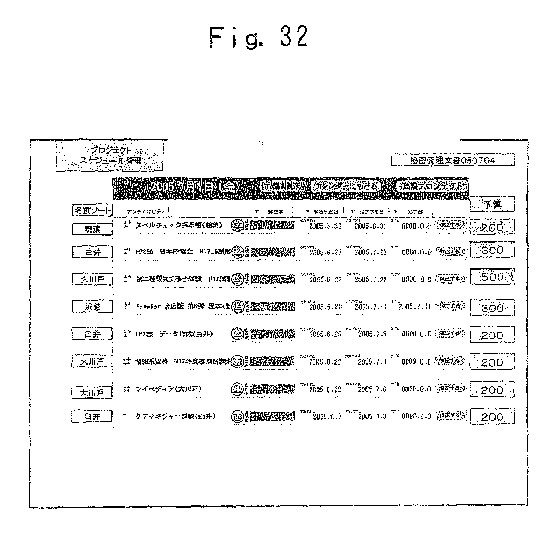

The project schedule management also includes a department sheet and a staff sheet as illustrated in Fig. 31. For example, if the staff sheet is clicked, the data can be sorted by an employee's name, as illustrated in Fig. 32.

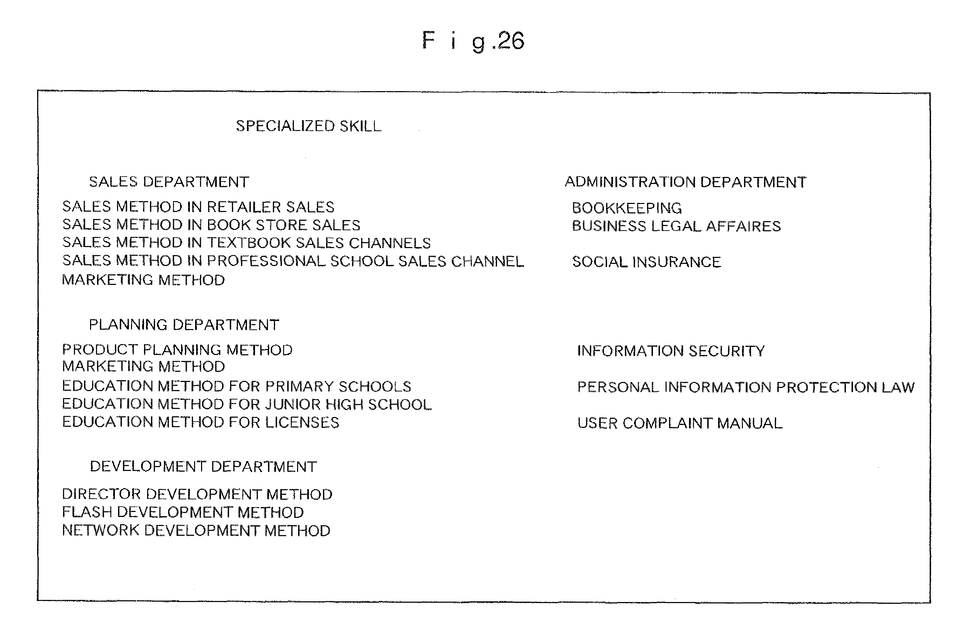

As a result, if a staff member who has been in charge of the completed project is to be assigned to a next project in view of the status of progress of the completed project, a specialized skill that the staff is required to study is selected on the specialized skill screen as shown in Fig. 14 or 26. Therefore, it is possible to appropriately direct the staff member to study the selected specialized skill as needed on the leader screen 110 described above.

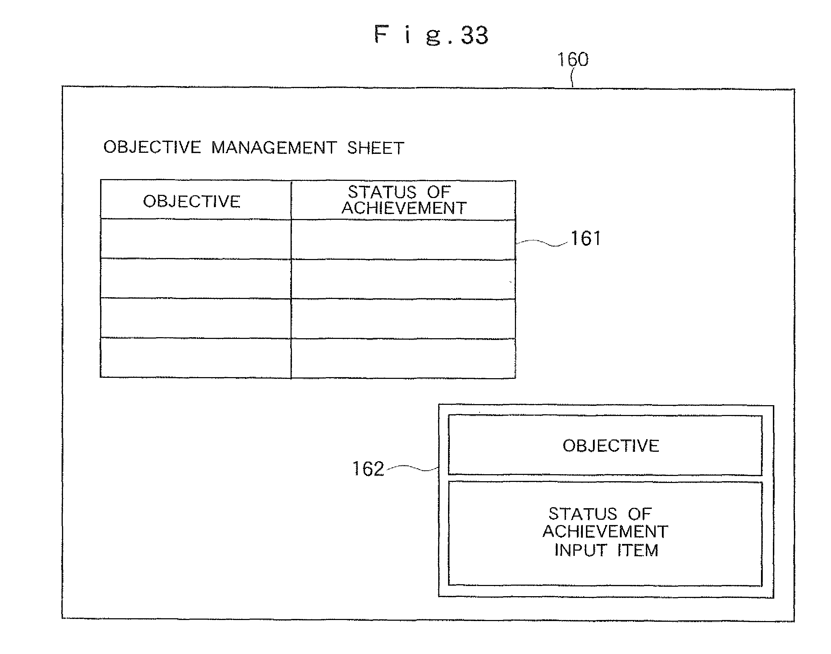

When the objective management icon 108 on the personnel management sub-window 101 is clicked on the initial window 100 of the general staff or the leader screen 110, an objective management screen 160 is displayed as illustrated in Fig. 33. On the objective management screen 160, an objective and a status of achievement stored in the server 3 are displayed as an objective management sheet 161. At the same time, a sub-window 162 for inputting a new objective and status of achievement is also displayed.

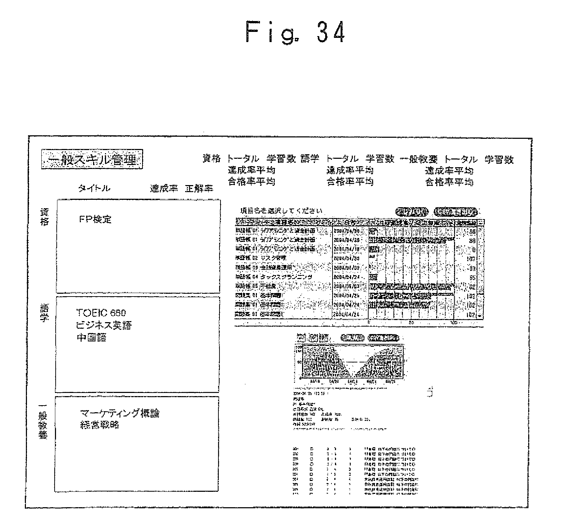

On the general skill management screen, as illustrated in Fig. 34, the content of the wordbook or the workbook is displayed to enable the display of the percentage of questions answered correctly and the like.

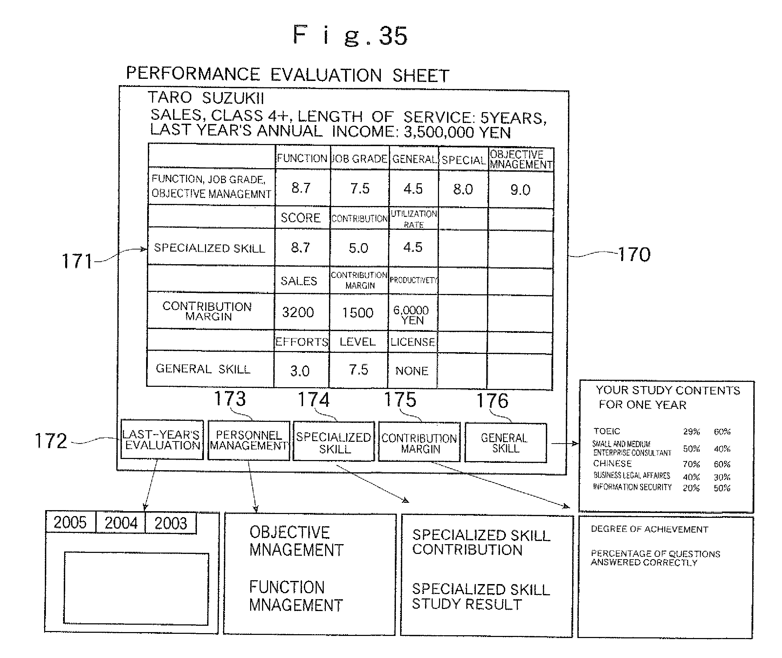

Furthermore, by clicking a performance evaluation icon (not shown) on the personnel management sub-window 101 on the leader screen 110, a performance evaluation sheet screen 170 can be displayed as illustrated in Fig. 35. On the performance evaluation sheet screen 170, a performance evaluation 171 of a staff member "Taro Suzuki" is comprehensively displayed. Moreover, by selecting a last-year's evaluation icon 172, a personnel management icon 173, a specialized skill icon 174, a contribution margin icon 175, and a general skill icon 176 in the lower column, a detailed content of each icon can be displayed.

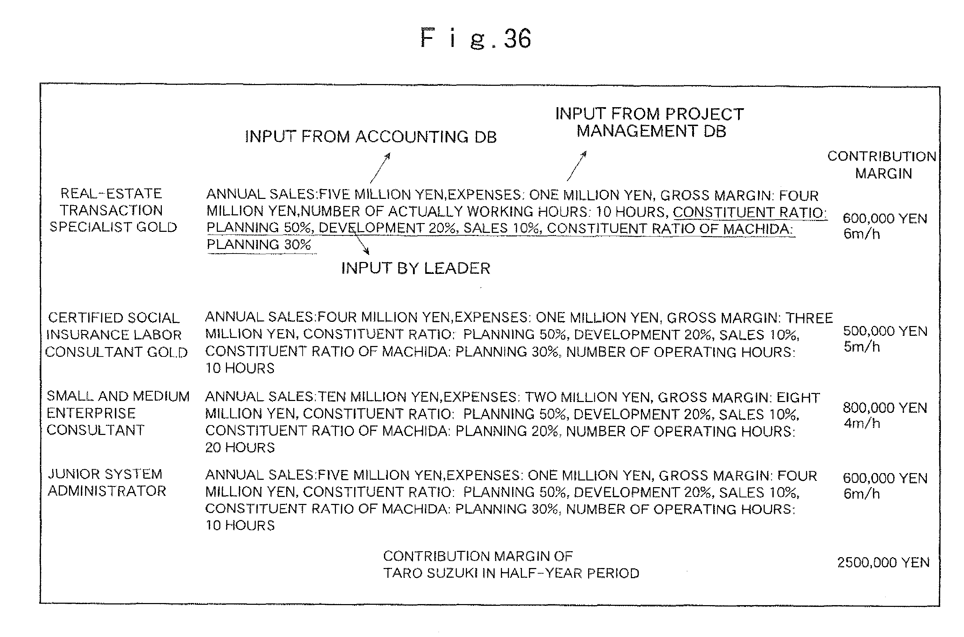

In the case of the contribution margin 175, as illustrated in Fig. 36, as a contribution margin screen 180, "Real-Estate Transaction Specialist GOLD, Annual sales: five million yen, Expenses: one million yen, Gross margin: four million yen, Constituent ratio: planning 50%, development 20%, sales 10%, Constituent ratio of Machida: planning 30%, Number of working hours: 10, Contribution margin: 600,000 yen, 6m/h Certified Social Insurance and Labor Consultant GOLD, Annual sales: five million yen, Expenses: one million yen, Gross margin: four million yen, Constituent ratio: planning 50%, development 20%, Sales 10%, Constituent ratio of Machida: planning 30%, Number of working hours: 10, Contribution margin: 600,000 yen, 6m/h Small and Medium Enterprise Consultant, Annual sales: five million yen, Expenses: one million yen, Gross margin: four million yen, Constituent ratio: planning 50%, development 20%, Sales 10%, Constituent ratio of Machida: planning 30%, Number of working hours: 10, Contribution margin: 600,000 yen, 6m/h Junior System Administrator, Annual sales: five million yen, Expenses: one million yen, Gross margin: four million yen, Constituent ratio: planning 50%, development 20%, Sales 10%, Constituent ratio of Machida: planning 30%, Number of working hours: 10, Contribution margin: 600,000 yen, 6m/h" is displayed.

In the above content, the "Real-Estate Transaction Specialist GOLD", the "Small and Medium Enterprise Consultant GOLD", and the like each represent a project name. Pieces of data of the project such as the annual sales, the expenses, the gross margin and the constituent ratio of the project are input from the evaluation screen 130 of the leader as illustrated in Fig. 9. As a result, the productivity of the staff per unit hour is calculated to be displayed.

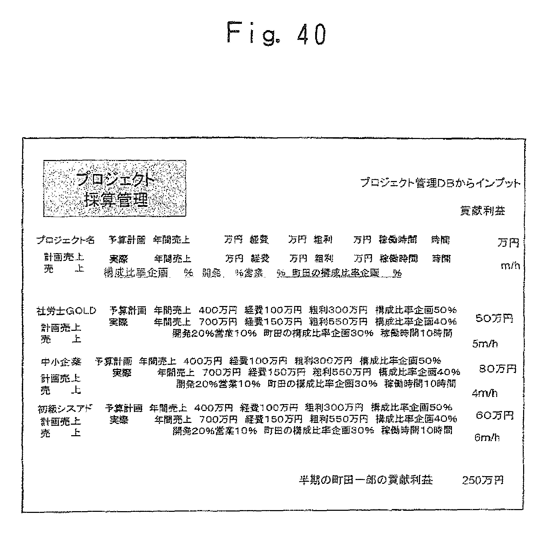

The knowledge management program can manage a profit of the whole project by a project profit management screen as illustrated in Fig. 40.

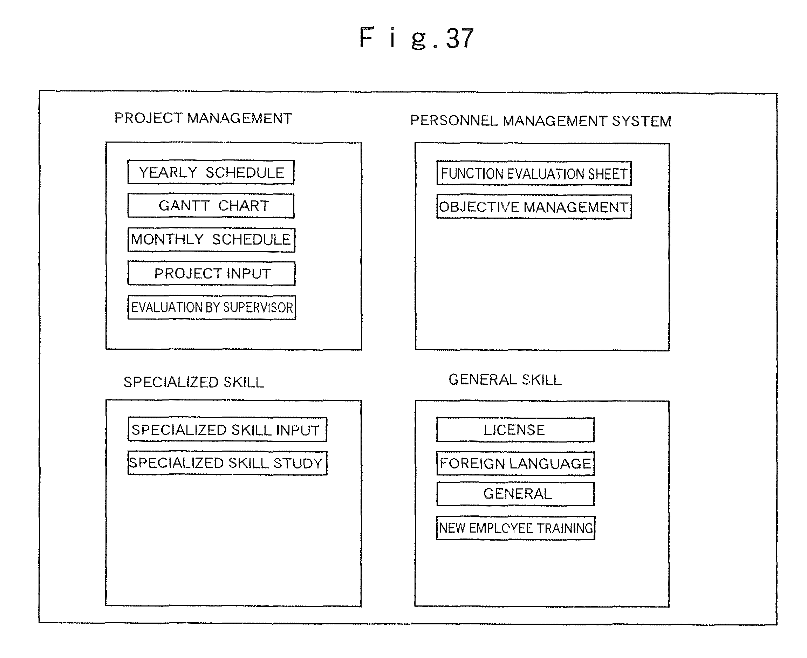

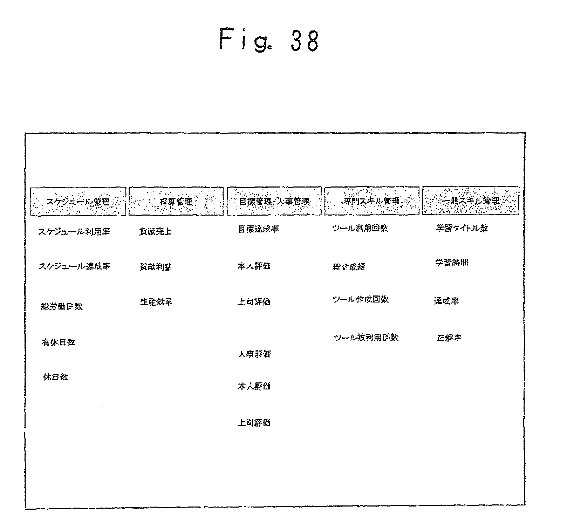

In the knowledge management program, a desired item can be appropriately input from the keyboard to be newly set in the project management or the personnel management system as illustrated in Figs. 37 and 38. The newly input item is added to the database of the server 3.

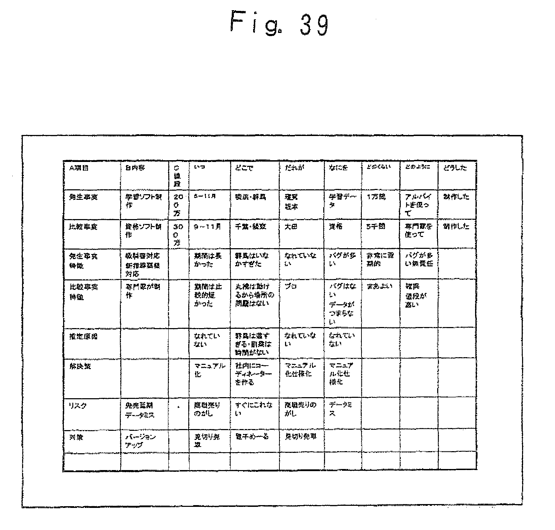

Although the knowledge management program mainly used in enterprises has been described above as the knowledge management program, the knowledge management program is not limited thereto. As illustrated in Fig. 39, it is apparent that data may be processed based on information such as an "occurring matter" or a "comparison matter" as relation information of the data or information such as "when", "where", "who", "what", "how" and "result" as relation information of the data.

As described above, according to the knowledge management program, the number of projects, the degree of achievement, the expenses used for the project or the like is daily entered by using the project schedule management sub-window. As a result, the employee can do has/her own job while checking the number of his/her own projects and the productivity everyday.

By the specialized skill sub-window, the employee can develop a specialized skill referring to the skills of his/her seniors. At the same time, job quality and his/her own skills can be checked. The quality is evaluated based on creative efforts made for the job. Product productivity is evaluated as an absolute value. Therefore, it is possible not only to evaluate how much know-how each employee provides for the company but also to check how much the employee contributes to the organization.

By leaving the specialized skills, which are conventionally likely to depend on each individual, to the system, the company can evaluate the contribution of the employee to the organization. Therefore, the employee can do his/her job and refine his/her skills while checking the personal objective management. Moreover, the contribution to the organization can be evaluated as an absolute value or a relative evaluation by a superior's check. Moreover, whether or not the employee leaves the skill to the skill system can be evaluated. Therefore, the objective management of the project is enabled, whereas the system can be databased.

By converting a profession ability database into the form of a textbook, the database can be utilized as the specialized skill. At the same time, the profession ability database can be used for setting questions or employee's study. Therefore, the profession ability database can be cumulatively used to play a role of thinking support.

Moreover, the optimal evaluation can be given. As a result, the optimization in determination of the position of employee, the accumulation of know-how, a simulation, project planning are made possible to remarkably improve the company performance.

Furthermore, according to the knowledge management program, by using the specialized skill management sub-window or the like as illustrated in Fig. 14, a specialized skill study history or the result of study of each employee can be stored in the server 3 as history information. Besides, by the project schedule management sub-window 32 for each employee or the like, the status of progress of each employee in the project, which includes performance such as a budget, expenses or sales, can be grasped. In this knowledge management program, not only the results such as the study history, the result of study, or the status of progress of each employee in the project but also a thinking pattern of the employee, which leads to the result, can be stored as a history. Therefore, as one of the characteristics, the knowledge management program can simulate and display the history or provide the history for the evaluation by a third party. Specifically, according to the knowledge management program, the answer of each employee to a question and the data of the productivity of the employee are stored in association with each other by an ID of the employee. As a result, based on the answer of another employee to the same question, the productivity of the employee can be estimated.

For example, when a learner does workbook-type exercises on the specialized skill management sub-window as illustrated in Fig. 14, an answer of the learner basically is marked as the evaluation of the learner. At the same time, the content of the answer and the process to obtain the answer are stored, as illustrated in Fig. 15. Now, it is assumed that there are answers A, B, and C to be listed. The last-year' s evaluation of an employee Kou is A as illustrated in Fig. 15, and the productivity of the employee per hour is 200,000 yen. Moreover, the last-year's evaluation of an employee Otsu is C, and the productivity per hour is 100,000 yen. Furthermore, the last-year's evaluation of an employee Hei is B and the productivity per hour is 50,000 yen.

Then, when a new employee Tei does workbook-type exercises on the specialized skill management sub-window to give answers to five questions as illustrated in Fig. 14, the employee Tei selects the answers as Kou-Otsu-Kou-Kou-Kou where an answer of the employee Kou is denoted as Kou and an answer of the employee Otsu is denoted as Otsu. Specifically, the employee Tei selects the same answers as those of the employee Kou for the first, third, fourth and fifth questions, while selecting the same answer as that of the employee Otsu for the second question.

In this case, the productivity of the new employee Tei is simulated based on the results of the workbook-type exercises as follows. A score of the employee Tei is calculated by: 200, 000 yen × 5 (each evaluation A is scored as 5) × 4 (the number of A) + 100,000 yen × 2 (each evaluation C is scored as 2) × 1 (the number of C) = 420. Therefore, the employee Tei has an average of 84 marks per question. Then, the score is converted into the productivity. Assuming that the productivity of the employee Kou having the highest productivity of 200,000 yen per hour has 100 as a score, the employee Tei marks 84% of a perfect score. Therefore, the productivity of the employee Tei can be simulated as 168,000 yen.

Next, it is assumed that an employee Bo selects Hei-Otsu-Hei-Otsu-Hei as answers to the five questions where an answer of the employee Hei is denoted as Hei and an answer of the employee Tei is denoted as Tei. Specifically, the employee Bo selects the same answers as those of the employee Hei for the first, third, and fifth questions, while selecting the same answers as those of the employee Otsu for the second and fourth questions.

Then, the productivity of the new employee Bo is simulated based on the results of the workbook-type exercises as follows. A score of the employee Bo is calculated by: 50,000 yen × 3 (each evaluation B is scored as 3 marks) × 3 (the number of Hei) + 100,000 yen × 3 (each evaluation C is scored as 2) × 2 (the number of Otsu) = 105. Therefore, the employee Bo has an average of 21 marks per question. Then, the score is converted into the productivity. Assuming that the productivity of the employee Kou having the highest productivity of 200,000 yen per hour is 100 as a score, the employee Bo marks 21% of a perfect score. Therefore, the productivity of the employee Bo can be simulated as 42, 000 yen.

As described above, even for the employee Tei or Bo whose productivity has not been evaluated yet, the results of the workbook-type exercises are used on the specialized skill management sub-window to simulate the productivity of the employee Tei or Bo.

Moreover, by adding an IQ or EQ score as a general skill to the results of answers for the specialized skill described above, the productivity of an employee can be more precisely simulated.

The simulation as described above can also be used as a reference for the promotion of an employee, a sales prospect in the next term, an employment examination, the financing of a partner by a bank or the investment of a venture capital. Moreover, the simulation allows a more accurate calculation of a sales prospect.

Specifically, according to the knowledge management program, an employee can study the thinking pattern of another excellent employee. Besides, the thinking pattern can be used for a simulation in human resource development or human resource use in every field.

Moreover, according to the knowledge management program, the user can go through the experiences or the decision of another person in the range allowed by the person such as in an enterprise, a game, shopping, recruiting or the like as described below. The person allowing the use can charge a usage fee in terms of a new teaching method in a study flow.

### Second Embodiment

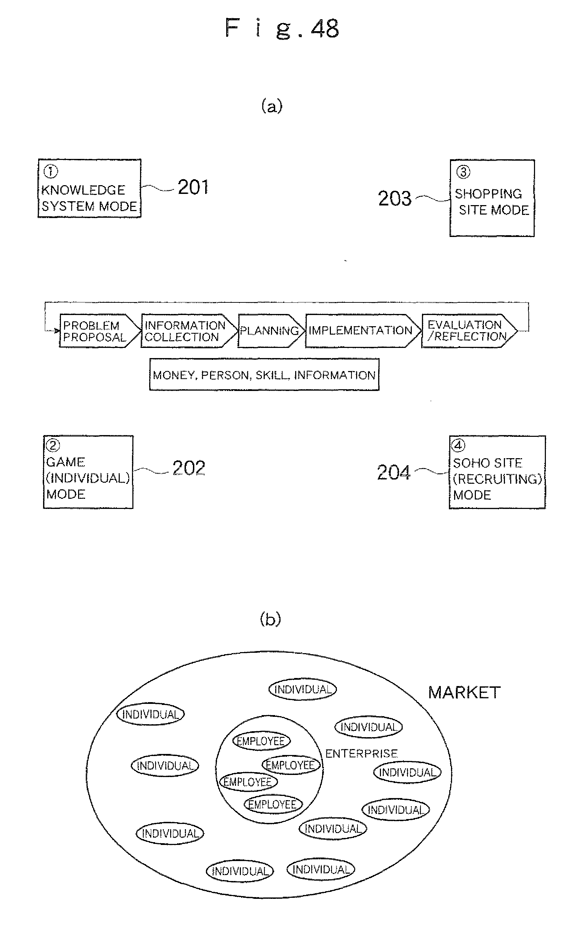

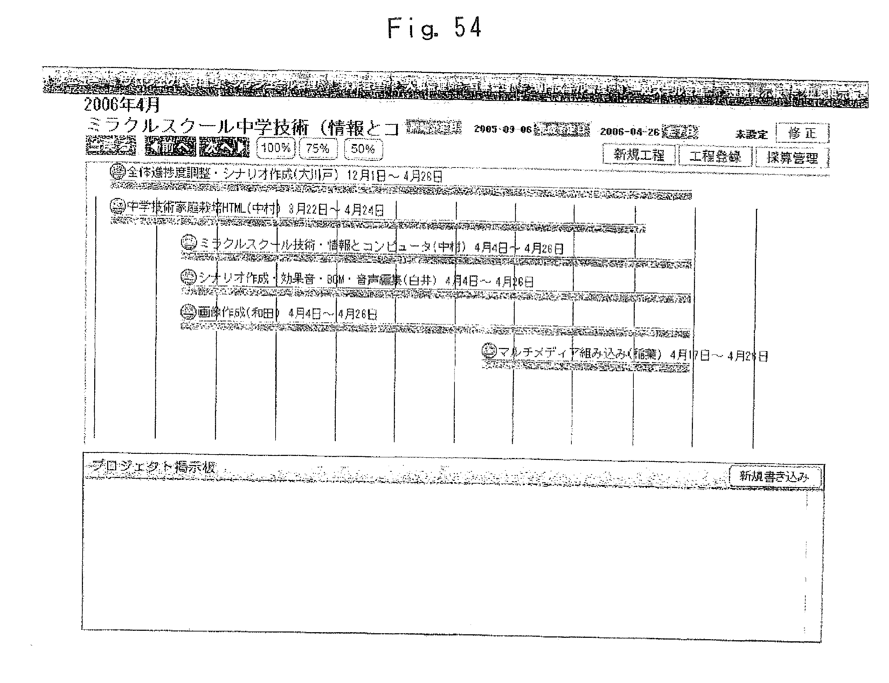

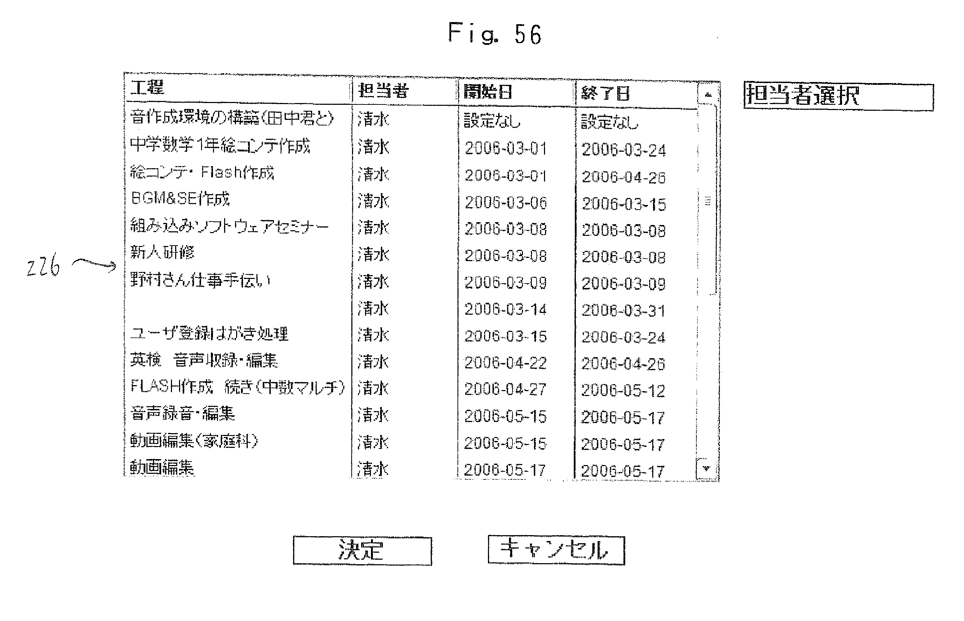

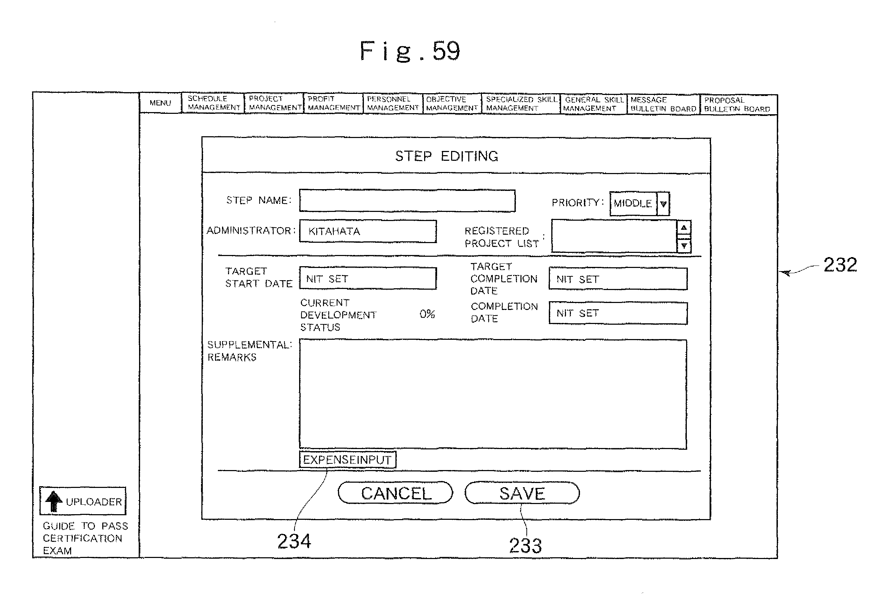

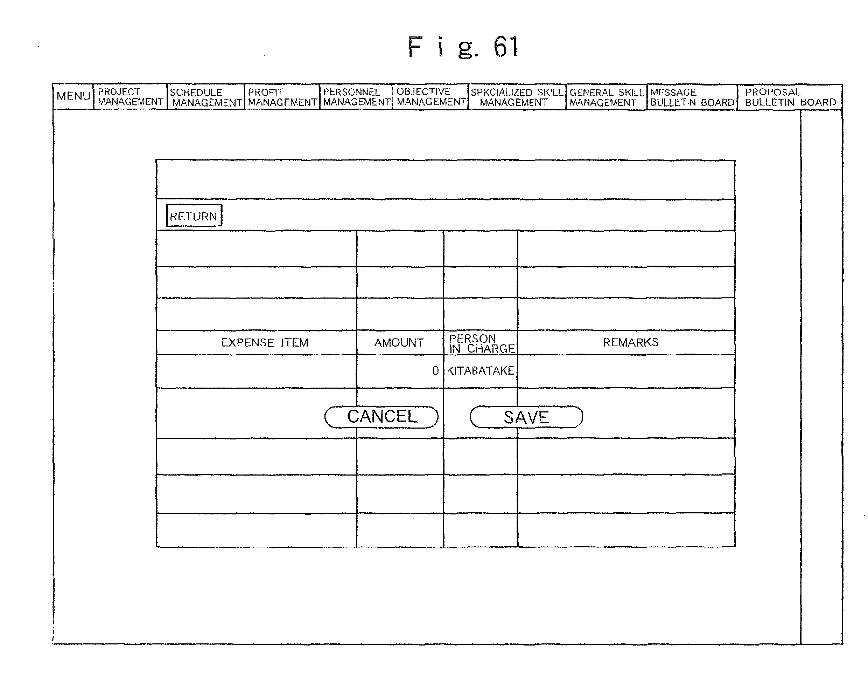

Figs. 48 to 61 illustrate a second embodiment of the present invention. In Figs. 48 to 61, the same components are denoted by the same reference numerals as those in the first embodiment for description. In this second embodiment, each of all the actions of an employee for accomplishing a task is identified as any one of five steps of: problem proposal of proposing a problem associated with the task to be accomplished; information collection for collecting information for the proposed problem; planning for setting a plan of the task to be accomplished based on the collected information; implementation for implementing the set plan; and evaluation/review for evaluating and reviewing the implemented plan. Data for at least one of the five steps of the problem proposal, the information collection, the planning, the implementation, and the evaluation/review is converted into a numeric data. Then, a degree of contribution to the sales of the task performed by the employee is calculated based on the obtained numeric data.

As means of calculating the degree of contribution, four parameters, i.e., information, money, person, and skill can be given. Then, the four parameters, that is, information, money, person, and skill, are converted into numeric data for each employee. Then, a ratio of each employee to all the employees is calculated. The calculated ratio of the employee is multiplied by a profit to evaluate the degree of contribution of the employee at that point of time as a tangible profit.

As described above, for evaluating the degree of contribution of an employee, the degree of contribution is represented as a numerical value using the four parameters of information, money, person, and skill to determine how a real-time value, that is, a profit of the enterprise is shared and produced by the employees.

A knowledge management program as an information processing program according to the second embodiment has mainly a knowledge system mode 201 serving as a base mode, a game mode 202, a shopping site mode 203, and a SOHO (Small Office Home Office) site mode 204 as illustrated in Fig. 48 (a). Herein, the term SOHO not only means a working style in which an individual does his/her work at home but also has a broader sense including a job search on companies from home. The knowledge management program is not necessarily required to include all of the knowledge system mode 201, the game mode 202, the shopping site mode 203, and the SOHO site mode 204. The knowledge management program may include at least any one of the modes, such as the knowledge system mode 201.

The four modes, that is, the knowledge system mode 201, the game mode 202, the shopping site mode 203, and the SOHO site mode 204 are connected to each other through the five steps of the problem (question) proposal, the information collection, the planning, the implementation, and the evaluation/review and four parameters of money, person, skill and information for converting the five steps into numeric data as media, as illustrated in Fig. 48(a). As illustrated in Fig. 48(b), besides an enterprise organization composed of a plurality of employees, an online game or online shopping by an individual through the Internet or a general market or a labor market where an individual seeks for employment through the Internet are organically associated with each other to create a new value-added market.

For a further description, in the shopping site mode 203, a demand of a user who uses the shopping site mode 203 can be created. In addition, a shopping action is grasped by the five steps of the question proposal, the information collection, the planning, the implementation, and the evaluation/review to enable the creation of a new demand through the question proposal or the evaluation/review.

In the SOHO site mode 204, through the five steps of the question proposal, the information collection, the planning, the implementation, and the evaluation/review and the four parameters of money, person, skill and information, the exact person needed can be found. Furthermore, the cooperation is established between the game mode 202 and the SOHO site mode 204. As a result, the content executed in the game mode 202 can be used as a database of the previous cases. By using the database for recruiting or the like, the database can be evolutionarily used.

Moreover, an edit mode provided commonly for the four modes described above allows a personal character, a question, or a period or a zone of a game to be set on a game site. Furthermore, the specialized skill used in the knowledge system mode 201 can also be used as a question given in the game mode or the like.

The use of a study flow composed of the five steps of the problem proposal, the information collection, the planning, the implementation, and the evaluation/review allows the user to be always aware of improvement. Furthermore, if the enterprise establishes the cooperation between the market and the labor market, it is possible to fix or organize clients. Furthermore, the connection with the SOHO or the other enterprises is facilitated. As a result, the effects of remarkably facilitating the management can be produced.

In the knowledge management program according to the second embodiment, as illustrated in Fig. 48(a), all the actions of an employee accomplishing a task in the enterprise in the knowledge system mode 201 are identified as a study flow in a broad sense, which consists of five steps of: problem proposal of proposing a problem associated with the task to be accomplished; information collection for collecting information for the proposed problem; planning for setting a plan of the task to be accomplished based on the collected information; implementation for implementing the set plan; and evaluation/review for evaluating and reviewing the implemented plan.

For converting data for at least one of the five steps of the problem proposal, the information collection, the planning, the implementation, and the evaluation/review into numeric data, for example, four parameters of money, person, skill, and information are used. For example, the implementation step is converted into numeric data as the amount (money) such as the expenses required for the employee to accomplish the task or the obtained amount of sales. The problem proposal, the information collection or the evaluation/review step can be converted into numeric data by the number of messages or proposals written by the employees on the bulletin board for the task or the evaluation thereof (information) . The planning step is converted into numeric data by the number of specialized skills or general skills developed by the employee for the task or the level thereof (skill). Furthermore, the planning or implementation by the employee is also converted into numeric data by the evaluation of the content of the planning or implementation by his/her superior as a numerical value (person).

As described above, data for at least one of the five steps of the problem proposal, the information collection, the planning, the implementation, and the evaluation/review is converted into numeric data by the four parameters of money, person, skill, and information. By automatically calculating a percentage of the employee in a total for each item, the degree of contribution of the employee is calculated to determine how the employees share a real-time value, that is, a profit of the enterprise.

By sharing the data of the four parameters of money, person, skill, and information, as illustrated in Fig. 48(a), the five steps of the problem proposal, the information collection, the planning, the implementation, and the evaluation/review are used not only for the action of the employee for accomplishing a task in the enterprise but also in all of the game mode 202 in which an individual plays a game through the Internet, the shopping site mode 203 in which the individual buys or sells an article or a service through the Internet, and the SOHO site mode 204 in which the individual seeks for employment through the Internet.

The knowledge management program networks not only the market for the enterprise but also the SOHO or the labor market through the Internet as illustrated in Fig. 48(b). As a result, it is possible to propose a problem for the individual through an online game or to stimulate a new demand for an article or a service, leading to a purchase. Conventionally, the process in which an individual who visits an online shopping website purchases an article or a service or gives up purchasing in the online shopping cannot be known. According to the knowledge management program, however, the enterprise can know the process in which the user purchases or gives up purchasing an article or a service. Moreover, a conventional main promotional activity was an advertisement under a simple article name or catch phrase. Owing to this program, however, promotion activities can be conducted through a game story. At the same time, article or service advertisement or marketing can also be conducted.

Moreover, according to the knowledge management program, an applicant for the SOHO work or the enterprises can be identified through the Internet. Moreover, the skills or experiences of the individual can be grasped through the Internet, or the preference of the individual can be grasped through the online game.

Furthermore, conventionally, for an individual as a consumer or a corporation client, his/her own personal matters or job cannot be improved unless various problems occur in his/her life or in business. According to the knowledge management program, however, by playing a history game through the Internet, the individual can place himself/herself in the fall and rise of various organizations or lives to find a new problem or improvement plan. As a result, the individual can improve himself/herself as well as the job. In addition, even for purchasing an article or a service, the individual can purchase what he/she exactly wants.

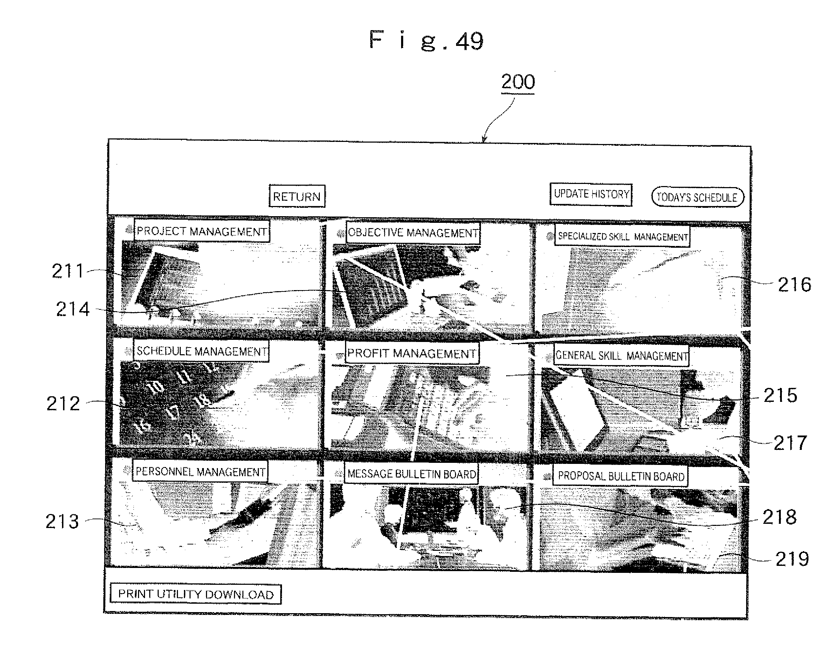

Fig. 49 illustrates an initial screen of an information processing device using the knowledge management program according to the second embodiment of the present invention. The CPU of the server 3 functions as identification means for identifying the data as any one of five steps described below, processing means for converting data for at least one of the five steps of problem proposal, information collection, planning, implementation, and evaluation/review into numeric data, or calculation means for calculating the degree of contribution of an employee to the sales of the task accomplished by the employee based on the obtained numeric data, or the like.

The knowledge management program according to the second embodiment of the present invention is obtained by further developing the information processing device and the information processing program according to the first embodiment. Five subjects required for tasks in the enterprise, that is, object, person, money, information and skill, can be managed by nine sub-systems of object (project management and schedule management), person (personnel management and objective management), money (profit management), information (message bulletin board and proposal bulletin board) and skill(specialized skill and general skill). In this program, the sales, the profit, the degree of contribution to the company of each employee are converted in real time into numeric data such as the amount of money. As a result, the enterprise can also effectively use the objective, the action, the skill and the information in an explicit manner.

In the recent enterprises and the like, with the diversification of a working style such as the effective use of dispatched employees or part-time workers, an employee lease system or the adoption of a working style called SOHO, the objective evaluation of the performance of an employee, or the effective use or the ability development of an employee has been strongly requested.

For the performance evaluation of the employee, there are various evaluations such as a pay-per-performance system totally based on results such as sales and a personal performance evaluation of an employee by his/her superior. The pay-per-performance system totally based on results is disadvantageous in that the employees might scramble for results or the motivation of the employee or the like, which is unlikely to be directly reflected in the results, cannot be evaluated. When the superior personally evaluates the performance of the employee, the motivation of the employee can be advantageously taken into consideration. However, since this evaluation is inevitably based on the ability or the experiences of the superior, an objective evaluation is difficult.

Therefore, in the knowledge management program according to the second embodiment, various pieces of data processed in association with the task in the enterprise or the like are effectively used to enable the fair and objective performance evaluation of the employee, which takes the performance of the employee contributing to the performance of the enterprise into consideration as much as possible. Specifically, the improvement of all the actions of the employee in association with the task in the enterprise or the like by using the five parameters of person, object, money, information and skill and the study flow composed of the five steps of the problem proposal, the information collection, the planning, the implementation, and the evaluation/review is represented as a numerical value. Then, a ratio of each employee to all the members corresponding to a plurality of employees in charge of the task by percentage is obtained on a scale on which a sum total of all the members is 100%. In this manner, the distribution of the profit to each individual is made clear.

As the knowledge management program according to the second embodiment, besides an in-house program as a standard system as illustrated in Fig. 49, a program with the classification by task, a program with the classification by business type, a program with the classification by license, and a program for general-use/SOHO are prepared.

The knowledge management program is pre-installed on the server 3 as illustrated in Fig. 1. The program may be executed by an access of each personal computer 2 to the server 3 through the Internet or the like or by individually being installed on each personal computer 2 in the enterprise.

The knowledge management program is applicable to various types of business such as trading companies, the manufacturing industry, care services, medical care, the real estate business, the construction industry, hotels/Japanese-style hotels, system manufacturers/IT, banks/stock companies, service businesses, shops, and the insurance business or various tasks such as sales, marketing, planning/development, administration, recruiting, and management. It is apparent that these types of business and tasks are merely exemplary and the types of business and tasks are not limited thereto.

The knowledge management program is applicable to various qualifications and skills such as the specialized skill or the general skill in association with those businesses or the tasks. As the qualifications or skills in association with the trading companies, Retailer Sales and Management Specialist, Small and Medium Enterprise Consultant, TOEIC, English, marketing, and management strategy can be given. As the qualifications or skills in association with the manufacturing industry, Licensed Electrician Class 3 and Hazardous Materials Officer can be cited. As the qualifications or skills in association with the care, Care Manager, Social Worker, and Residential Environment Welfare Coordinator are cited. As the qualifications or skills in association with the medical care, Nursing License, Care Manager, Residential Environment Welfare Coordinator are cited. As the qualifications or skills in association with the real estate, Real-Estate Transaction Specialist and Notary Public are cited. As the qualifications or skills in association with the construction industry, First/Second-Class Architect, Residential Environment Welfare Coordinator, apartment business and administrative tasks are cited. As the qualifications or skills in association with the hotels and Japanese-style hotels, Real Estate Appraiser, First/Second-Class Architect, and Residential Environment Welfare Coordinator are cited. As the qualifications or skills in association with the system and IT, software skills, technical skills, Junior System Administrator, and basic information are cited. As the qualifications or skills in association with the banks and stock companies, FP (Financial Planner), Securities Broker Representative, Real-Estate Transaction Specialist, Certified Social Insurance and Labor Consultant, and Small and Medium Enterprise Consultant are cited. As the qualifications or skills in association with the service business, Retailer Sales and Management Specialist, and Small and Medium Enterprise Consultant are cited. As the qualifications or skills in association with the stores, Certified Travel Service Supervisor is cited. As the qualifications or skills in association with the insurance, FP (Financial Planner), Securities Broker Representative, and Real-Estate Transaction Specialist are cited.

As the qualifications or skills in association with the sales, a Retailer Sales and Management Specialist, and sales skills are cited. As the qualifications or skills in association with the marketing, foreign languages such as English and Chinese are cited. As the qualifications or skills in association with the planning/development, marketing and management strategy are cited. As the qualifications or skills in association with the administration, Certified Social Insurance and Labor Consultant, Notary Public, Small and Medium Enterprise Consultant, management accounting, bookkeeping, financial accounting, business legal affairs, management strategy, and information security are cited. As the qualifications or skills in association with the recruiting, training for new employees is cited. As the qualifications or skills in association with the tasks of the manager, Small and Medium Enterprise Consultant, management accounting, bookkeeping, financial accounting, and management strategy are cited. The information processing program is applicable to the other qualifications or skills.

By executing the above-described knowledge management program for the enterprise, an initial screen 200 displayed on the display 22 of the personal computer 2 includes, as illustrated in Fig. 49, nine sub-windows, specifically, a "project management" sub-window 211, a "schedule management" sub-window 212, a "personnel management" sub-window 213, an "objective management" sub-window 214, a "profit management" sub-window 215, a "specialized skill management" sub-window 216, a "general skill management" sub-window 217, a "message bulletin board" sub-window 218, and a "proposal bulletin board" sub-window 219. The initial screen 200 as the knowledge management program for the enterprise is based on the initial screens 100 illustrated in Figs. 5 and 8. The initial screen 200 is obtained by dividing and arranging the initial screens 100 according to the functions to be upgraded.

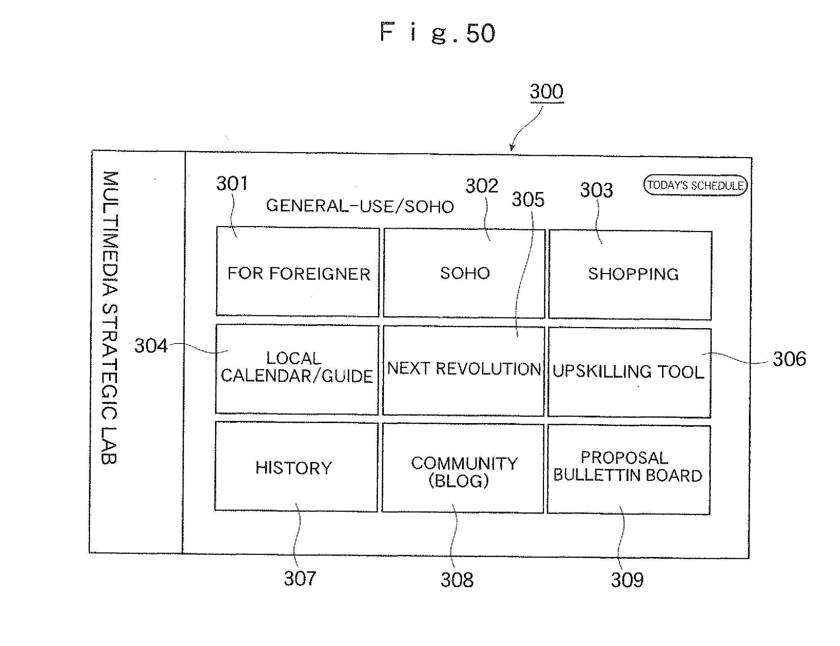

The initial screen 300 for general-use/SOHO includes, as illustrated in Fig. 50, a "For foreigner" sub-window 301, a "SOHO" sub-window 302, a "SHOPPING" sub-window 303, a "local calendar /guide" sub-window 304, an interactive game "NEXT REVOLUTION" sub-window 305, a "upskilling tool" sub-window 306, a "HISTORY" sub-window 307, and a "community (blog)" sub-window 308, and a "proposal bulletin board" sub-window 309.

The initial screen 200 or 300, on which the knowledge management program is executed, includes the sub-windows, each being for each item for the data or information generally required by the user according to a purpose, for example, for the enterprise, for use with the classification by business type, or for general-use/SOHO. Therefore, the user selects a desired sub-window on the initial screen. As a result, by a single click operation, the user can move to an operation screen which is daily needed. Therefore, the initial screen is extremely user-friendly.

The "message bulletin board" sub-window 218 and the "proposal bulletin board" sub-window 219 on the initial screen 200 for the enterprise carry a proposal from an employee or a message from an employee to another employee as in the case of the "proposal bulletin board" sub-window 109a and the "message bulletin board" sub-window 109b shown in Fig. 6. Similarly, the "community (blog)" sub-window 308 and the "proposal bulletin board" sub-window 309 on the initial screen 300 for general-use/SOHO are used by a general user to post a message or his/her own opinion or proposal in a community.

The "specialized skill management" sub-window 216 on the initial screen 200 for the enterprise is configured in the same manner as that shown in Figs. 13 and 14, whereas the "general skill management" sub-window 217 is configured in the same manner as that in the first embodiment described above as illustrated in Fig. 34. Although the "schedule management" sub-window 212 and the "project management" sub-window 211 may be configured as those in the first embodiment as respectively illustrated in Figs. 18 to 25 and Figs. 27 to 32, the sub-windows are configured as follows in this second embodiment.

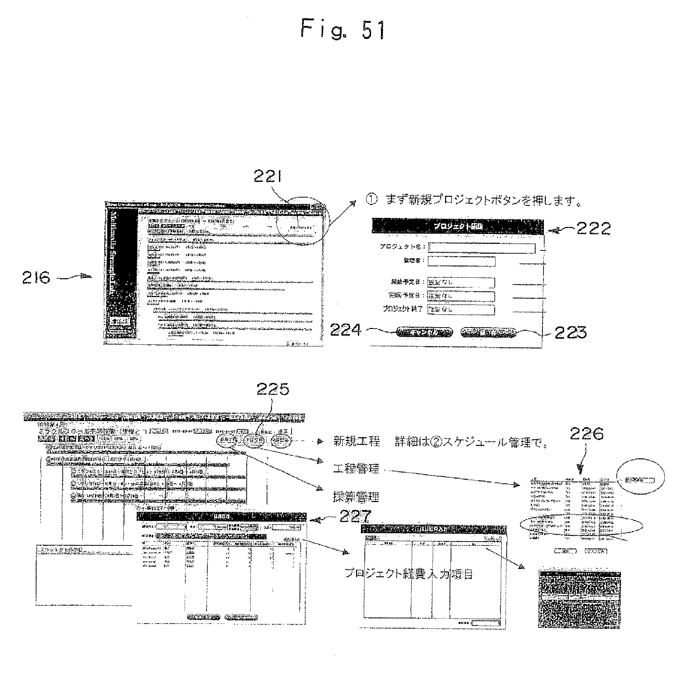

The project management sub-window 216 is used for managing a project as a task performed in a group for the purpose of sales (profit) as illustrated in Figs. 51 to 56. On the sub-window, the project leader is determined and staff corresponding to employees working for the project are selected to daily manage the status of progress.

On the project management sub-window 216, as illustrated in Figs. 51 to 56, a new project button 221 provided on the upper right is clicked to display a project edit screen 222. Then, a project name as well as a project leader name as an administrator are entered. Furthermore, a target project start date and a target project completion date are entered. For storing the entered items, a save button 223 is clicked. For canceling the entered items, a cancel button 224 is clicked. On the sub-window 216, as illustrated in Fig. 51, a step management button 225 is clicked to select a member to be involved in the project on a step management registration screen 226. Then, the expenses for the project are entered on a profit management screen 227.

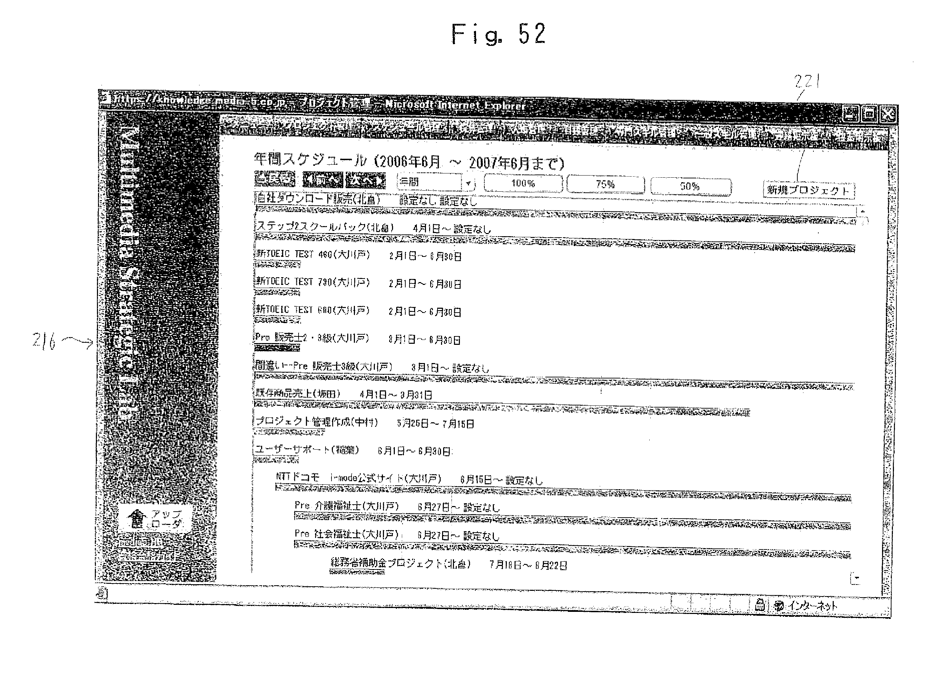

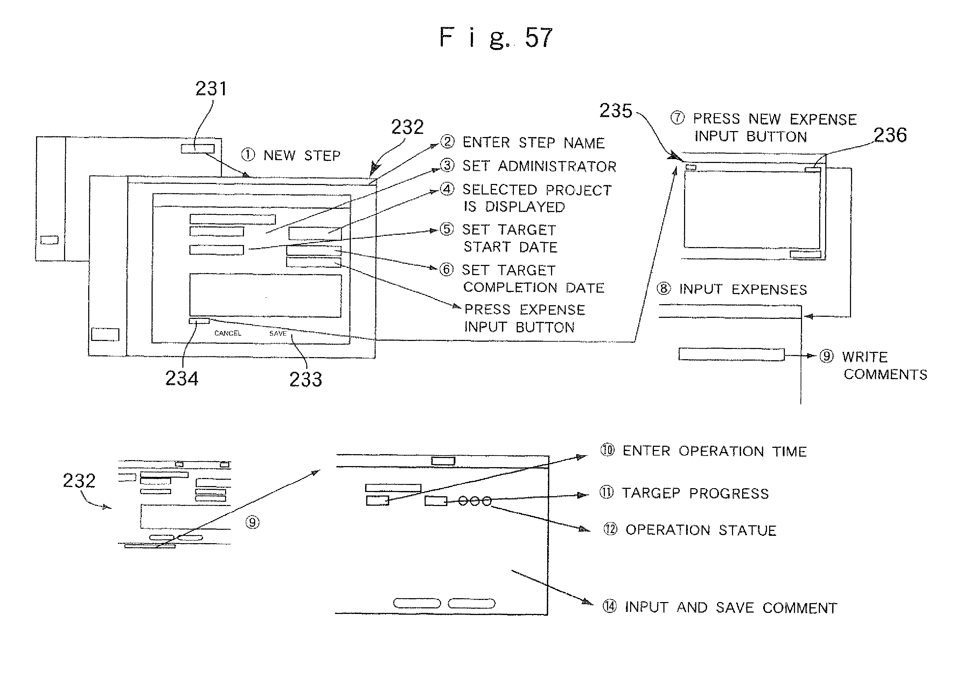

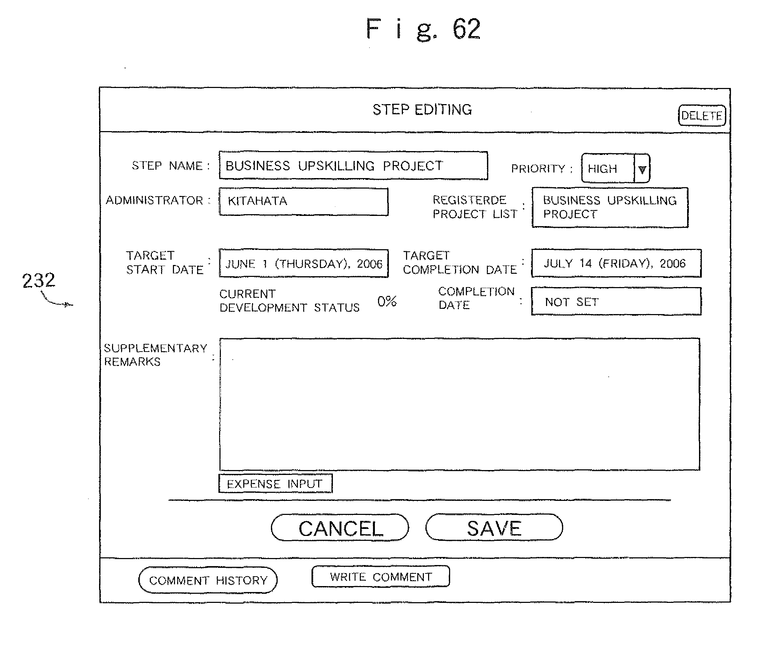

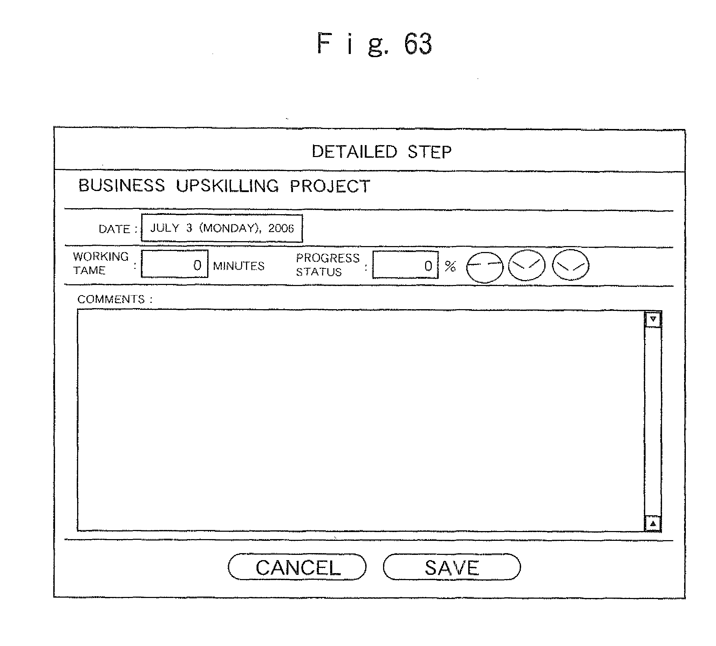

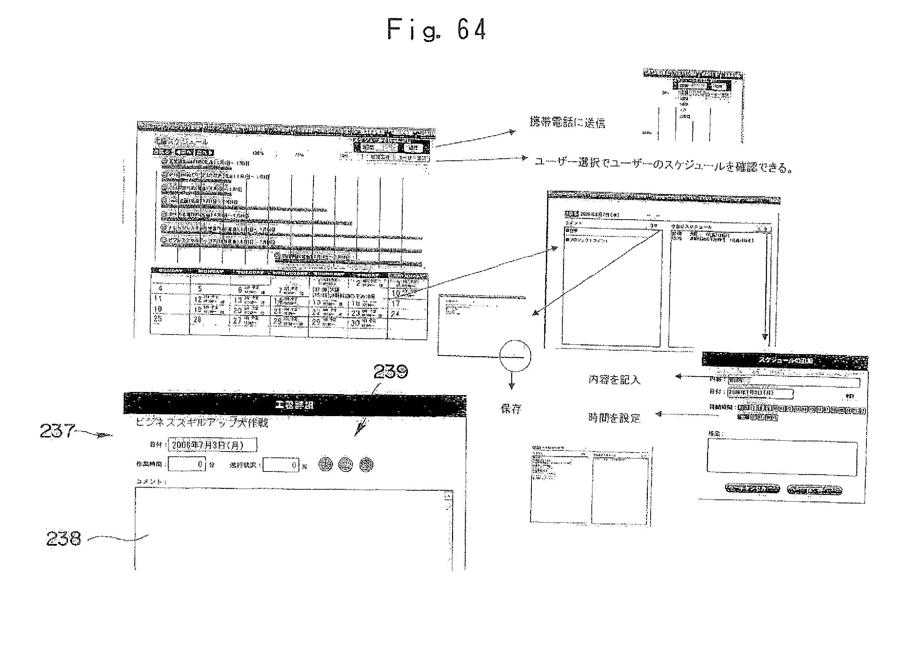

The schedule management sub-window 212 is for managing a personal schedule as illustrated in Figs. 57 to 63. If the user is registered for the project on the project management sub-window 216, the schedule management sub-window 212 is set to operate in cooperation with the project management screen 216. On the schedule management sub-window 212, a new step button 231 provided on the upper right is clicked to display a step edit screen 232 as illustrated in Fig. 52. A step name is input, whereas an administrator is set. Then, a target start date and a target completion date are set. When all the steps are completed, the date of completion is entered and a save button 233 is clicked. Then, one schedule of the corresponding employee is regarded as being completed and then is counted. Moreover, if an expense input button 234 is clicked on the step edit screen, a personal expense input screen 235 appears. Therefore, a new expense input button 236 on the upper right is pressed to input expenses. Furthermore, on a detailed step screen 237, as illustrated in Fig. 64, a comment is written, an operation time is entered, a target progress and an operation status are entered, and a comment is entered and saved.

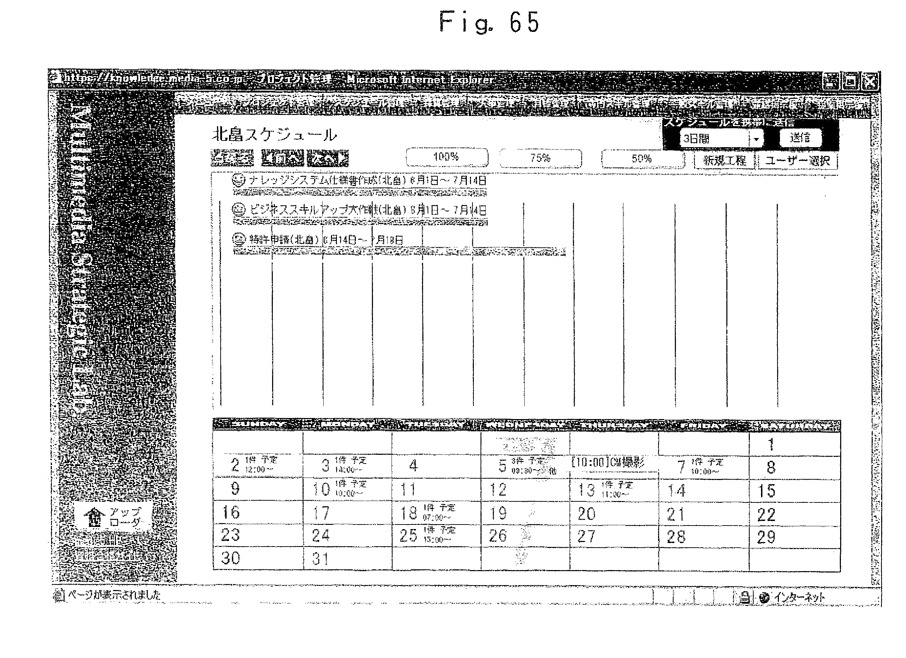

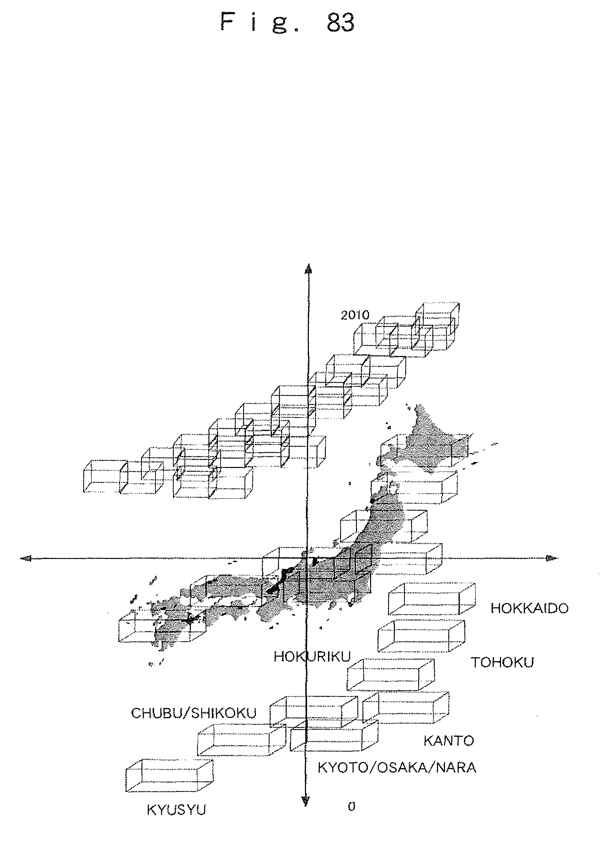

Furthermore, on the detailed step screen 237, as illustrated in Figs. 64 and 65, the step in the study flow including the five steps of the problem proposal, the information collection, the planning, the implementation, and the evaluation/review, to which a comment written in a comment field 238 belongs, is written or any of marks 239 of the problem proposal, the information collection, the planning, the implementation, and the evaluation/review is clicked to select the step to which the comment belongs. If any of the marks 239 of the problem proposal, the information collection, the planning, the implementation, and the evaluation/review is clicked, the step to which the written comment belongs to, that is, any of the problem proposal, the information collection, the planning, the implementation, and the evaluation/review, is identified to be stored in the database for each step and the number of comments is counted by the CPU of the server 3. On this database, for example, comments on the problem proposal, the information collection, the implementation or the evaluation/review are stored as a list for each employee, as illustrated in Fig. 83. The employee can refer to the list of comments later to know the details of the schedule up to then.

In the knowledge management program, for entering a report, a message or a proposal, for example, as illustrated in Figs. 64 and 65, the user is made to identify to which step of the study flow of a series of the problem proposal, the information collection, the planning, the implementation, and the evaluation/review, the report, the message or the proposal belongs. As a result, each of all the jobs can be understood as a part of the study flow.

Therefore, it is desirable to provide a function of linking related projects or related messages based on the five step buttons (problem proposal, information collection, planning, implementation, and evaluation/review) 239 to provide a pallet 239 for displaying the study flow on the project management bulletin board, the schedule bulletin board, the proposal bulletin board, the message bulletin board, and the specialized skill. Then, if any of the five step buttons on the pallet 239 is pressed, a date (year/month/day), an ID, a mode, an address, a project name, a step, and a content are stored as data in the database of the server 3. The data can be read at any time to allow a workflow to be grasped as the study flow in the form of a table.

In this second embodiment, as illustrated in Fig. 49, the "profit management" sub-window 215 at the center of the initial screen 200 is the most important when the information processing program for the enterprise is executed.

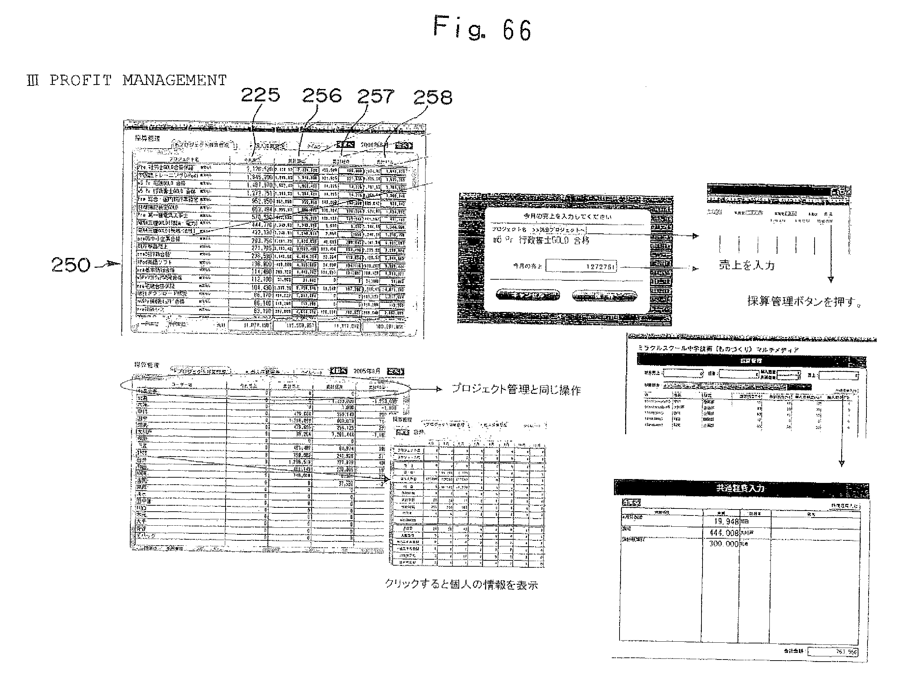

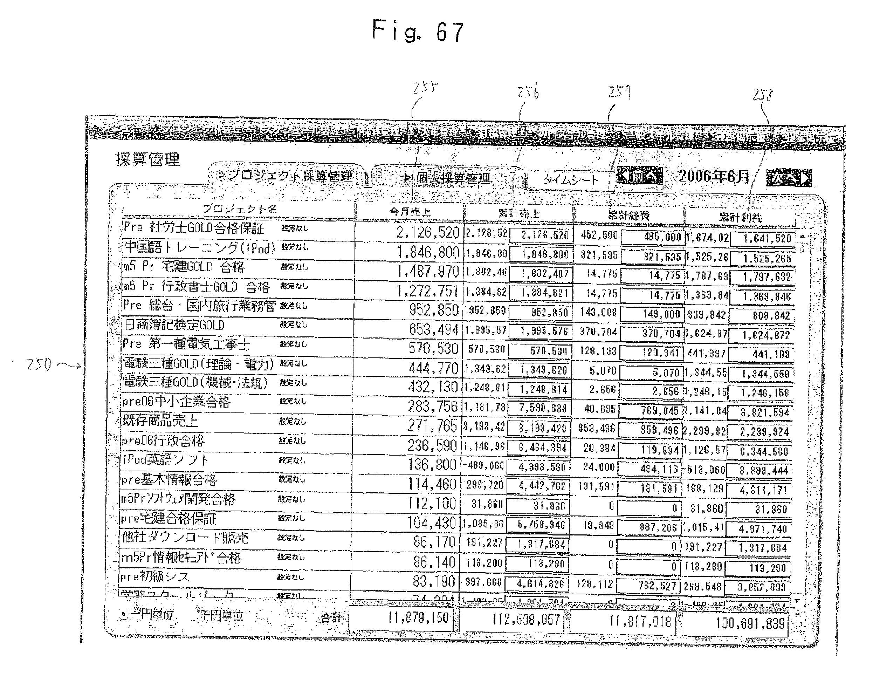

When a cursor is moved over the "profit management" sub-window 215 by the mouse 26 of the personal computer 2 and the sub-window is clicked as illustrated in Fig. 3, the "profit management" screen 250 is displayed on the display 22 of the personal computer 2 as illustrated in Figs. 66 to 68. The "profit management" screen 250 includes three items, specifically, "project profit management" 251, "personal profit management" 252, and a "time sheet" 253.

Among the above-described screens, on the "project profit management" screen 251, each of "this month's sales" 255, "cumulative sales" 256, "cumulative expenses" 257, and a "cumulative profit" 258 for each project is displayed in the form of table to correspond to the "project name" 254. All the "project name" 254, the "this month's sales" 255, the "cumulative sales" 256, the "cumulative expenses" 257, and the "cumulative profit" 258 for each project are input in advance to the database of the server 3 at predetermined timing.

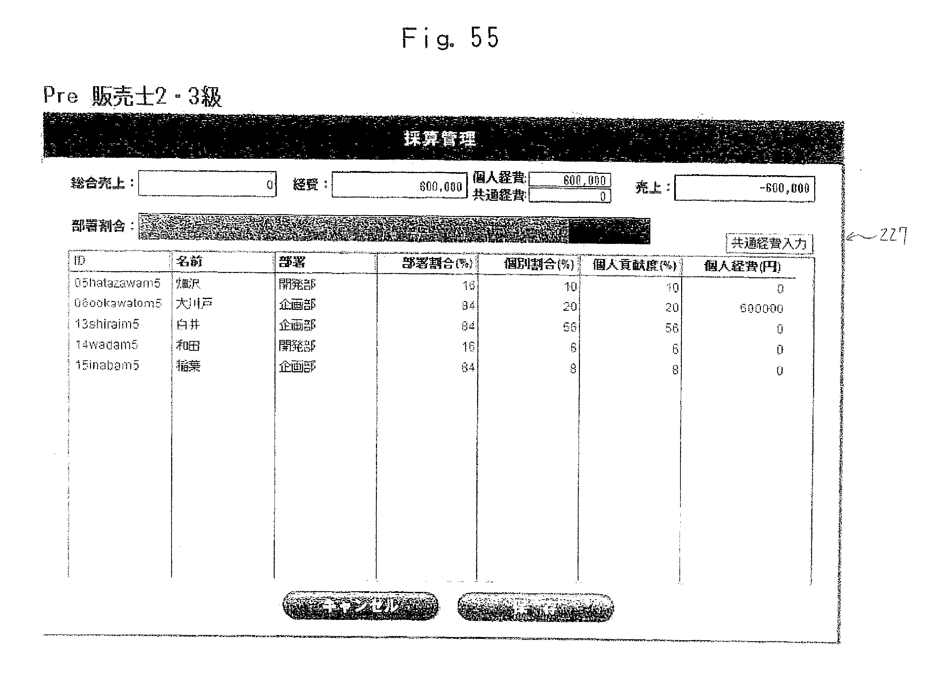

On the "personal profit management" screen 252, as illustrated in Figs. 66 to 68, the "this month's sales", the "cumulative sales", the "cumulative expenses", and the "cumulative profit" for each project are displayed in the form of table to correspond to the name of each employee as a user name. Then, if the name of each employee as the user name is clicked, the number of projects, the number of schedules, sales, expenses, a personal labor cost, a profit, the number of working days, the number of actual working days, the number of working hours, the number of compensatory holidays, the number of paid holidays, the degree of achievement, personnel management, specialized skill registration, general skill registration, a message bulletin board, and a proposal bulletin board are displayed for each month in association with the selected employee's name as illustrated in Fig. 55. For each of the items on the "personal profit management" screen 252, it is basically the employee that enters his/her own data. If the project name is clicked on the "profit management" screen, a screen for inputting sales of this month is displayed to input the sales of this month.

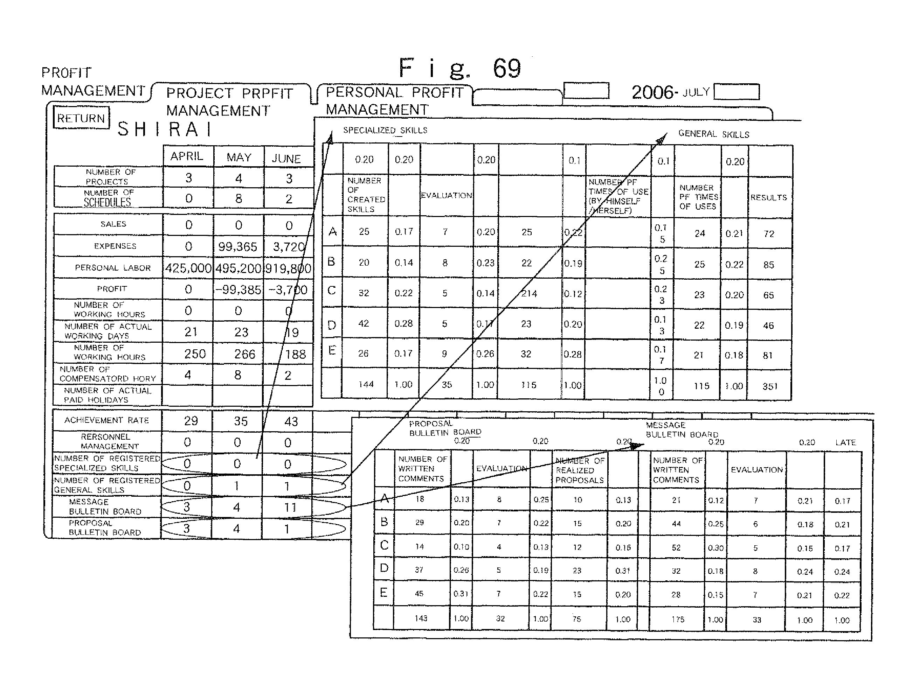

If a personal rate button not shown is pressed on the "personal profit management" screen 252, a personal rate on a scale on which the entirety is 1 is displayed for each of all the items as described below in details, as illustrated in Fig. 69.

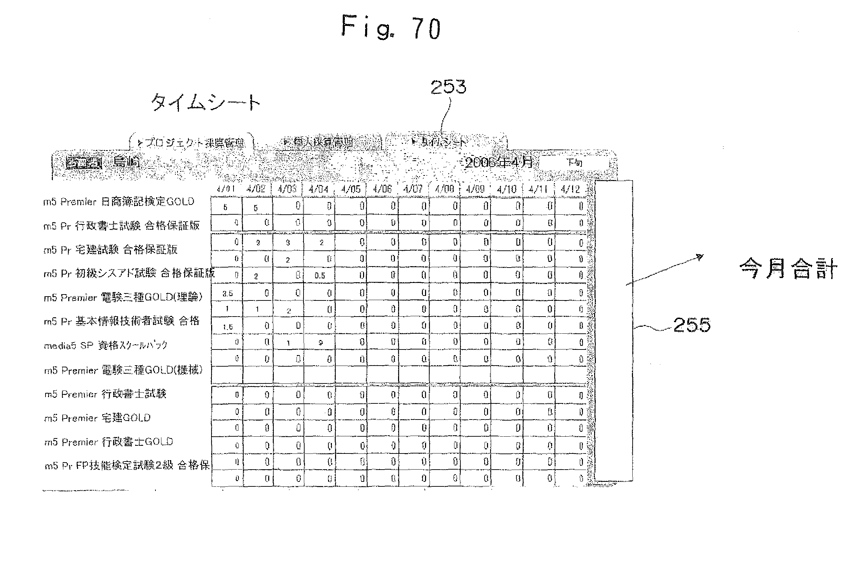

Furthermore, on the "time sheet" 253, as illustrated in Fig. 70, for the "project name", the number of working hours required for each project is displayed in association with the employee's name. In a rightmost field 255, a total number of hours for this month is displayed.

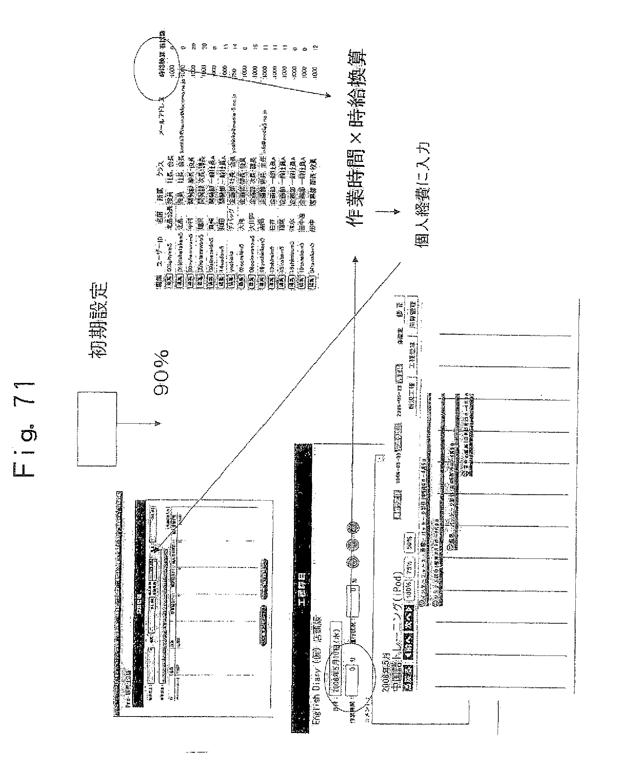

In the "cumulative expenses" 257 on the "profit management" screen 205, the personal expenses can be obtained by multiplying the number of working hours by an hourly rate as illustrated in Fig. 71. Data in the time sheet 214 illustrated in Fig. 70 is used for the number of working hours, whereas a predetermined value for each employee is used as the hourly rate as illustrated in Fig. 71.

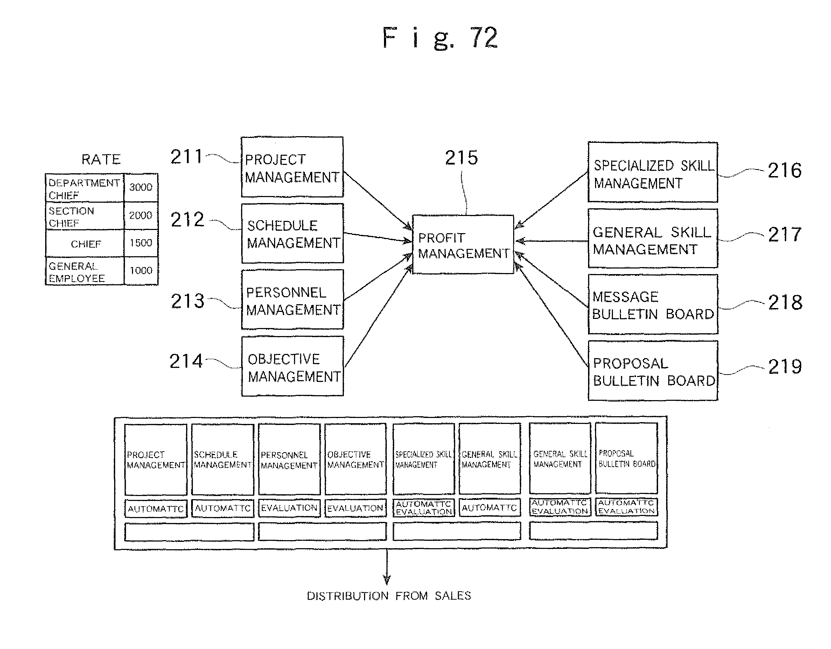

In this second embodiment, as illustrated in Fig. 72, for distributing a bonus to each employee from the sales, a performance rate of each employee is determined by using the function of the "profit management" 215 based on each piece of the data of the "project management 211", the "schedule management" 212, the "personnel management" 213, the "objective management" 214, the "specialized skill management" 216, the "general skill management" 217, the "message bulletin board" 218, and the "proposal bulletin board "219.

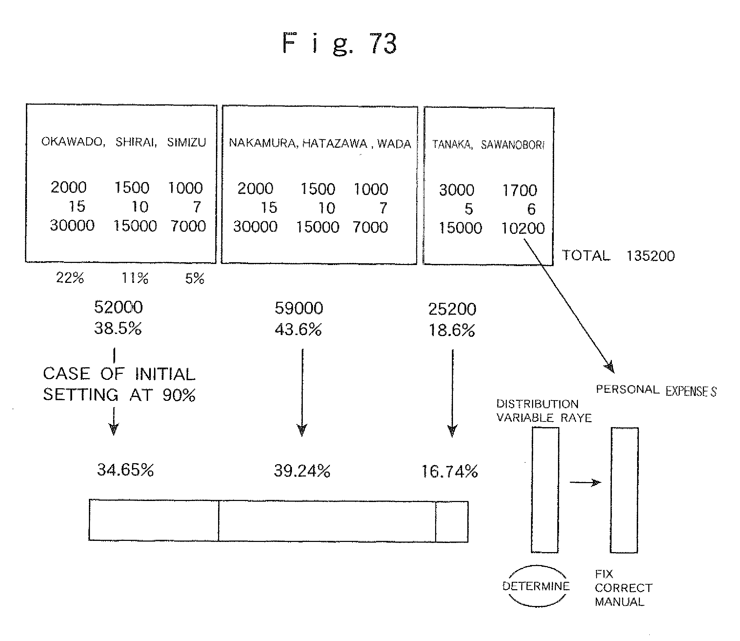

Specifically, for the "project management", as illustrated in Fig. 73, the hourly rate of each employee is multiplied by the number of working hours required for the project to obtain the personnel expenses. Similarly, for the schedule management, the number of schedules, of which the employee is in charge, is multiplied by the number of working hours required for keeping the schedules.

On the other hand, the "personnel management" and the "objective management" are set to be determined by the superior. The evaluation is made, for example, in ten grades and is determined by a rate of evaluation of an individual employee to a total evaluation of all the employees. In this embodiment, the evaluation is basically represented by quantitative data as in the case of the personal expenses. However, qualitative data obtained by the evaluation by the superior as in the case of the "personnel management" or the "objective management" can also be converted into numeric data to be added to the quantitative data. As a result, the evaluation by the superior can also be reflected therein.

Moreover, as illustrated in Fig. 14, the "specialized skill management" is obtained by adding the number of created specialized skills, the number of projects using the specialized skill, which indicates the number of created specialized skills used in the project, the number of times of use indicating the number of times of practically using the specialized skills in the project, and the evaluation by the superior, which is represented by a numerical value, for example, in ten grades

For the specialized skill, for example, as illustrated in Fig. 69, the number of created specialized skills is input as 25 for an employee A, 20 for an employee B, 32 for an employee C, 42 for an employee D, and 25 for an employee E. The evaluation is input as 7 for the employee A, 8 for the employee B, 5 for the employee C, 6 for the employee D, and 9 for the employee E. The number of times of using the specialized skills by others is input as 25 for the employee A, 22 for the employee B, 14 for the employee C, 23 for the employee D, and 32 for the employee E. The number of times of using the specialized skills by himself/herself is input in the same manner.

In the information processing program for the enterprise, for the "number of created specialized skills", the "evaluation", the "number of times of using the specialized skills (by others)", and the "number of times of using the specialized skills (by himself/herself)", a rate of each of the employees A to E is obtained on a scale on which 1.00 (100%) is a sum total.

The rates of the employees A to E in the specialized skill are obtained as follows, as shown in Fig. 69. For the number of created specialized skills, 0.17 for the employee A, 0.14 for the employee B, 0.22 for the employee C, 0.29 for the employee D, and 0.17 for the employee E. For the evaluation, 0.20 for the employee A, 0.23 for the employee B, 0.14 for the employee C, 0.17 for the employee D, and 0.26 for the employee E. For the number of times of using the specialized skills by others, 0.22 for the employee A, 0.19 for the employee B, 0.12 for the employee C, 0.20 for the employee D, and 0.28 for the employee E. For the number of times of using the specialized skills by himself/herself, 0.16 for the employee A, 0.26 for the employee B, 0.23 for the employee C, 0.18 for the employee D, and 0.17 for the employee E.

Furthermore, the "general skill management" is obtained by, for example, adding the number of times of using the general skills and a general skill score.

As in the case of the specialized skills, for the general skills, for example, as illustrated in Fig. 69, as the number of times of using the general skills, 24 for the employee A, 25 for the employee B, 23 for the employee C, 22 for the employee D, and 21 for the employee E are input. For the evaluation (qualitative data) by the superior for the quality of the content of the general skills, 72 for the employee A, 85 for the employee B, 65 for the employee C, 48 for the employee D, and 81 for the employee E are input as a numerical value on a scale on which 100 is full marks.

Then, in the information processing program for the enterprise, for the "number of times of use" and the "results", a rate of each of the employees A to E is obtained on a scale on which the sum of values of the employees A to E is 1.00 (100%).

As the rate of each of the employees A to E in the general skill, as illustrated in Fig. 69, 0.21 for the employee A, 0.22 for the employee B, 0.20 for the employee C, 0.19 for the employee D, and 0.18 for the employee E are obtained for the number of times of use. For the results, 0.21 for the employee A, 0.24 for the employee B, 0.19 for the employee C, 0.14 for the employee D, and 0.23 for the employee E are obtained.

Moreover, the information processing program for the enterprise has the specialized skill and the general skill as skill data. If each of the specialized skill and the general skill has a plurality of items such as the "number of created skills", the "evaluation", and the "number of times of use (by others)", predetermined weighting is set for each of the items of the specialized skill and the general skill for one-dimensionally managing the data as the skill data. In this manner, data is obtained on a scale on which a sum total of each item is 1.00 (100%). The degree of contribution is calculated by operating a contribution button (not shown) on the management screen, which can be operated exclusively by the management-level employees.

It is also conceivable that the sum of each item may not result in 1.00 (100%) because of a fractional part after the decimal point or the like. In such a case, the sum of each item may be corrected to 1.00 (100%) at the time of a final manual check. Alternatively, the sum of each item may be processed to be 1.00 (100%) by an automatic calculation.

In the embodiment illustrated in Fig. 55, a weight of 0.20 for the "number of created specialized skills", a weight of 0.20 for the "evaluation", a weight of 0.1 for the "number of times of using the specialized skills (by others)", a weight of 0.1 for the "number of times of using the specialized skills (by himself/herself)" are set in the specialized skill. At the same time, a weight of 0.2 for the "number of times of use" and a weight of 0.2 for the "results" are set in the general skill. Each of the weights is determined to give 1.00 (100%) as a sum total of each item. A weighting coefficient in each item of the specialized skill and the general skill can be appropriately changed.

Specifically, when the "number of created specialized skills" is regarded as being important in the specialized skill, for example, the weighting coefficient is increased from 0.20 to 0.40, while decreasing the weighting coefficients for the other items accordingly.

In this manner, the rate of the skill data of each of the employees A to E obtained by weighting is 0.19 for the employee A, 0.21 for the employee B, 0.19 for the employee C, 0.20 for the employee D, and 0.21 for the employee E, as illustrated in Fig. 69.

For the "message bulletin board" 218, data is obtained by, as illustrated in Fig. 6, the number of messages written on the "message bulletin board" 218. For the "proposal bulletin board" 219, data is obtained by, as illustrated in Fig. 6, the sum of the number of proposals written on the "proposal bulletin board" and the number of adopted proposals.

For the proposal bulletin board, for example, as illustrated in Fig. 69, the number of written proposals is input as 18 for the employee A, 29 for the employee B, 14 for the employee C, 37 for the employee D, and 45 for the employee E. The evaluation is input as 8 for the employee A, 7 for the employee B, 4 for the employee C, 6 for the employee D, and 7 for the employee E. The number of realized proposals is input as 10 for the employee A, 15 for the employee B, 12 for the employee C, 23 for the employee D, and 15 for the employee E.

Similarly, for the message bulletin board, for example, as illustrated in Fig. 69, the number of written messages is input as 21 for the employee A, 44 for the employee B, 52 for the employee C, 32 for the employee D, and 26 for the employee E. The evaluation is input as 7 for the employee A, 6 for the employee B, 5 for the employee C, 8 for the employee D, and 7 for the employee E.

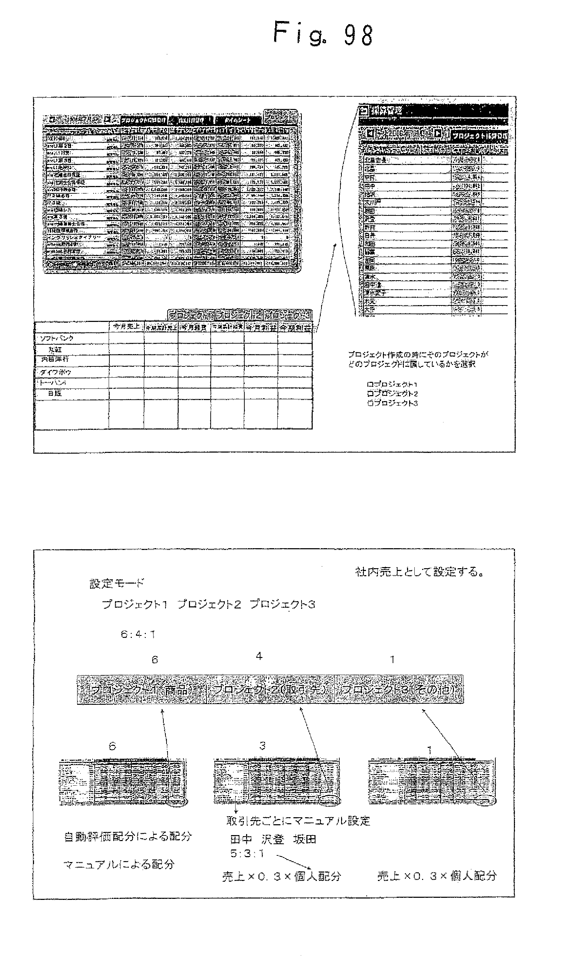

As illustrated in Fig. 98, data for a project may be classified by product or business partner to be assigned to each employee in charge. Then, a priority percentage may be determined. For example, data of the project classified by product can be mainly used by the staff in the planning department or the development department, and data classified by business partner can be mainly used by the staff in the sales department. The other data are mainly used by the staff in the administration department and the accounting department. Therefore, by giving a priority percentage of 60% to the data classified by product, 30% to the data classified by business partner, and 10% to the other data, the profit can be assigned to the personal profit management.

In the embodiment illustrated in Fig. 69, the number of messages or proposals written on the message bulletin board or the proposal bulletin board by each employee is obtained as data of the contribution degree of each employee to the company as follows. A rate of each of the employees A to E is obtained ultimately by weighting as, as illustrated in Fig. 69, 0.17 for the employee A, 0.21 for the employee B, 0.17 for the employee C, 0.24 for the employee D, and 0.22 for the employee E.

Furthermore, in this second embodiment, as illustrated in Fig. 72, as the contents of the "personnel management" and the "objective management", the evaluation by the superior is manually input from a superior' s personal computer, whereas the input number of created skills is automatically displayed.

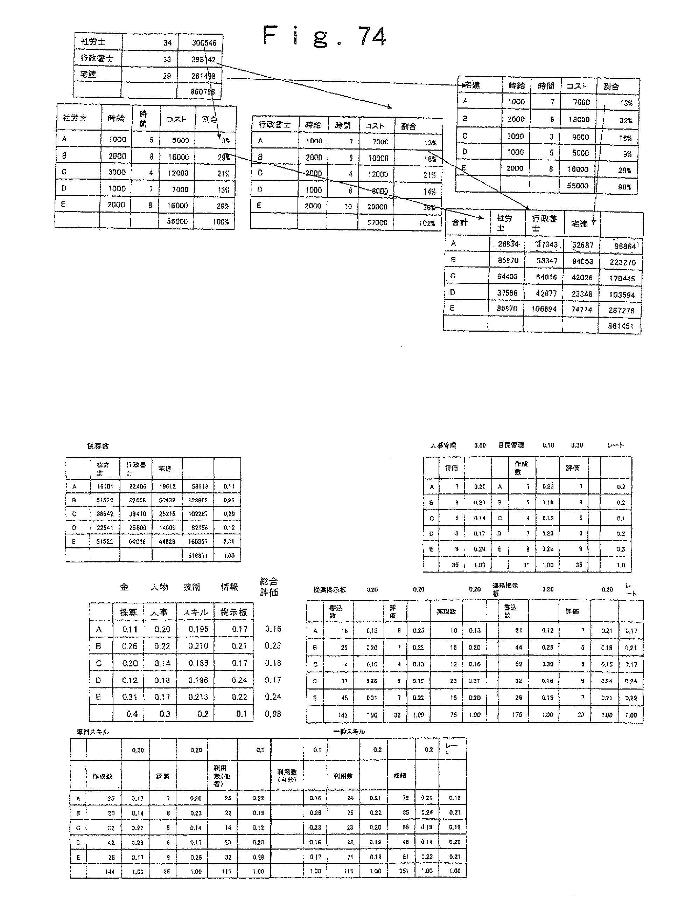

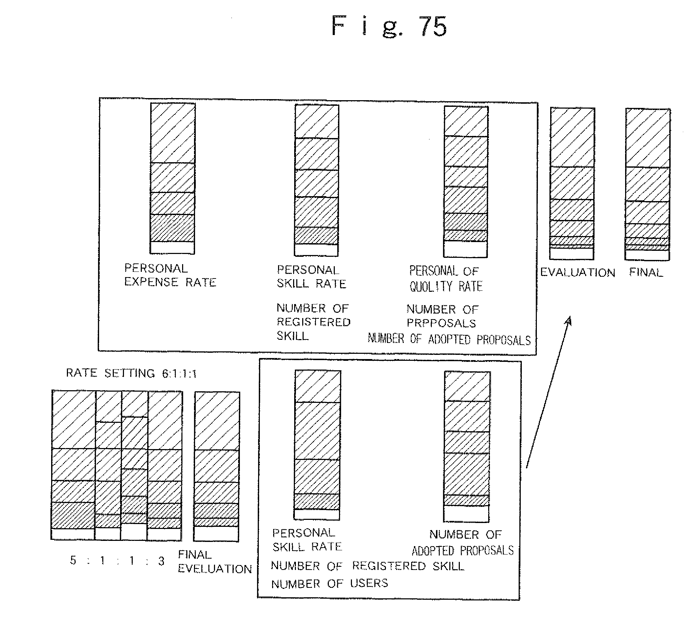

For the personnel management, for example, as illustrated in Figs. 74 and 75, the evaluation is input as 7 for the employee A, 8 for the employee B, 5 for the employee C, 6 for the employee D, and 9 for the employee E. For the objective management, the number of created objectives is input as 7 for the employee A, 5 for the employee B, 4 for the employee C, 7 for the employee D, and 8 for the employee E. The evaluation is input as 7 for the employee A, 8 for the employee B, 5 for the employee C, 6 for the employee D, and 9 for the employee E.

In the embodiment illustrated in Figs. 74 and 75, the evaluation of each employee for the personnel management and the objective management is obtained as evaluation data of each employee for the company as follows. A rate of each of the employees A to E is ultimately obtained by weighting as 0.2 for the employee A, 0.2 for the employee B, 0.1 for the employee C, 0.2 for the employee D, and 0.3 for the employee E.

In this manner, as illustrated in Figs. 74 and 75, each piece of the data of the "project management", the "schedule management", the "personnel management", the "objective management", the "specialized skill", the "general skill", the "message bulletin board", and the "proposal bulletin board" is obtained as a numerical value for each employee.

Among the pieces of data, for example, for the "project management", as illustrated in Fig. 73, personal expenses are obtained from the hourly rate and the number of working hours for each employee. In the case of an employee "Ookawado", it is assumed that an hourly rate is 2,000 yen and the number of working hours is 15. Therefore, the personal expenses are obtained as 30,000 yen.

Then, the sum of the personal expenses of all the employees involved in the project is calculated as, for example, 135,200 yen. A rate of contribution to the sum of the personal expenses is represented as a numerical value, for example, 22% for the employee "Ookawado" and 11% for an employee "Shirai". At the same time, a rate of the contribution of each department to one project is obtained as 38.5% for the planning department, 43.6% for the development department, and 18.6% for the sales department.

As the expenses data of each employee, for example, as illustrated in Fig. 74, the expenses of each employee for a Certified Social Insurance and Labor Consultant project are input as 16101 for the employee A, 51522 for the employee B, 38642 for the employee C, 22541 for the employee D, and 51522 for the employee E. The expenses of each employee for a Notary Public project are input as 22406 for the employee A, 32008 for the employee B, 38410 for the employee C, 25606 for the employee D, and 64016 for the employee E. The expenses of each employee for a Real-Estate Transaction Specialist project are input as 19612 for the employee A, 50432 for the employee B, 25210 for the employee C, 14009 for the employee D, and 44828 for the employee E.

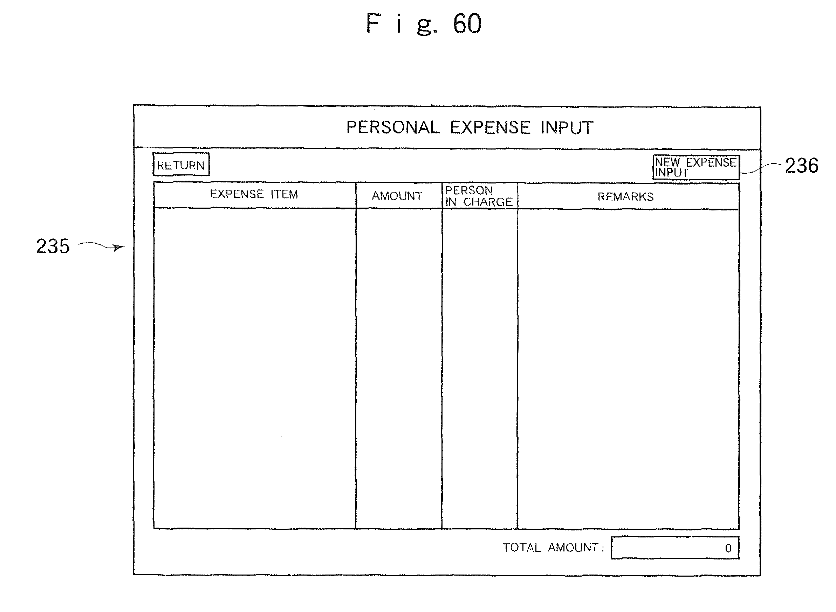

Then, in the embodiment illustrated in Fig. 60, as the expenses data of each employee, a rate of each of the employees A to E is ultimately obtained as 0.11 for the employee A, 0.26 for the employee B, 0.20 for the employee C, 0.12 for the employee D, and 0.31 for the employee E.

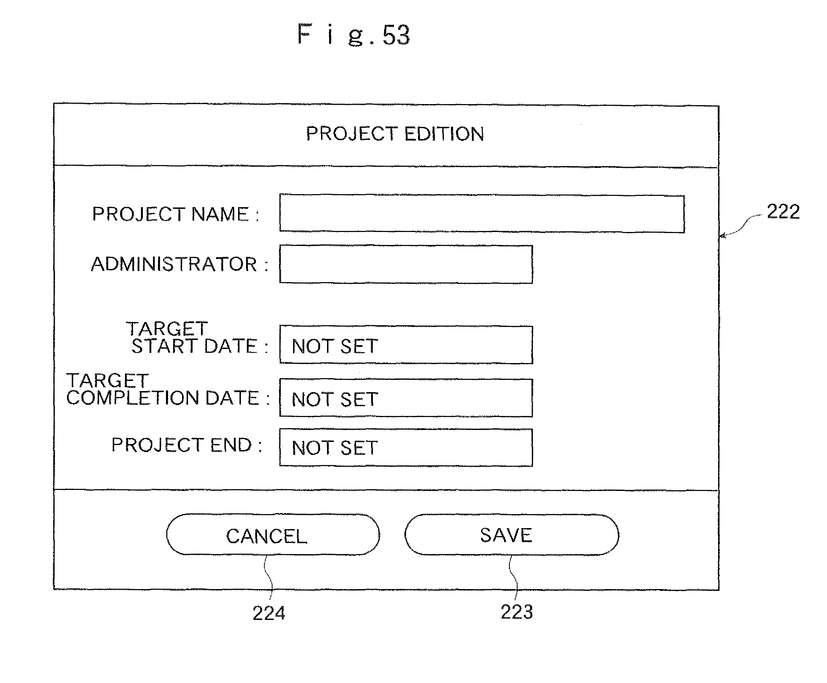

In this manner, as illustrated in Fig. 53, by inputting, for example, a user ID on the "profit management" screen, an employee's name, his/her department, a department rate, a personal rate, a personal contribution degree, and personal expenses are automatically displayed.

Next, in this second embodiment, for example, 90% is set as initial setting. A value corresponding to 90% of the rate of contribution of each department obtained in the above-described manner is calculated. Then, a rate is obtained as 34.65% for the planning department, 39.24% for the development department, and 16.74% for the sales department. Then, the remaining part is distributed according to the degree of contribution of each employee such as the performance of each employee as a variable rate in the distribution. In this manner, the setting may be limited to calculate the rate of contribution for each department.

In such a case, for obtaining the degree of contribution of each employee such as the performance, as illustrated in Fig. 75, personal expenses rate, a personal skill rate, a personal quality rate and the like are taken into consideration. The personal skill rate is determined based only on the number of registered skills as illustrated in Fig. 57. The personal quality rate is determined based on the number of proposals and the number of adopted proposals. The personal skill rate and the personal quality rate are not limited thereto. The setting of the personal skill rate and the personal quality rate can be freely changed; for example, the personal skill rate is determined based on the number of registered skills and the number of users, whereas the personal quality rate is determined based only on the number of adopted proposals.

Then, in this second embodiment, as illustrated in Fig. 75, the degree of contribution of each employee such as the performance is obtained based on the personal expenses rate, the personal skill rate, the personal quality rate and the evaluation while setting a rate of each evaluation item, for example, 6 for the personal expenses rate, 1 for the personal skill rate, 1 for the personal quality rate, and 1 for the evaluation. A rate of evaluation of an individual employee is ultimately determined with weighting according to the rate of the evaluation for each evaluation item.

In the second embodiment, as illustrated in Fig. 75, the expenses data of each employee is obtained as a "profit" item, the evaluation data of each employee is obtained as a "personnel management" item, the skill data of each employee is obtained as a "skill" item, and the contribution degree data of each employee is obtained as a "bulletin board" item.

In the information processing program for the enterprise, as illustrated in Fig. 69, the "profit", "personnel management", "skill" and "bulletin board" items are respectively weighted as 0.4, 0.3, 0.2 and 0.1. As a result, the comprehensive evaluation data of each employee is obtained as 0.16 for the employee A, 0.23 for the employee B, 0.18 for the employee C, 0.17 for the employee D, and 0.24 for the employee E.

The sum of the comprehensive data of the employees is 0.98, and therefore is not 1.00 (100%). The comprehensive data of each of the employees may be corrected at the time of the last check to provide 1.00 (100%). Even when the sum is not 1.00 (100%), the sum may be used without correction.

In this second embodiment, the distribution of a bonus or the like is determined according to the final personal evaluation rate of the employee.

In this second embodiment, a profit for each corresponding project in the company or a monthly, semi-annual, or annual profit is reasonably distributed to a plurality of employees in real time, specifically, by immediately using data input to the information processing program. The profit can be distributed, for example, at a rate of 0.16 for the employee A, at 0.23 for the employee B, at 0.18 for the employee C, at 0.17 for the employee D, and at 0.24 for the employee E.

As described above, in the second embodiment, the distribution of a bonus and the like is determined not merely based on the personal expense rate. Each piece of the data of the "schedule management", the "personnel management", the "objective management, the "specialized skill", the "general skill", the "message bulletin board", and the "proposal bulletin board" in association with the task is effectively used to comprehensively take the degree of contribution, the ability and the ability of proposal of each employee and the evaluation by the superior into consideration to determine a final rate of evaluation of the employee. As a result, the performance of the employee can be fairly and objectively evaluated in consideration of the business performance of the employee contributing to the performance of the enterprise as much as possible.

For determining the final evaluation, at least the expenses data must be taken into consideration. The other data such as the superior's evaluation may be set to be taken into consideration or not to be taken into consideration. The items such as the superior's evaluation, for which a numerical value is not entered, are automatically ignored. In this manner, the degree of contribution is calculated based only on the numeric items.

As described above, in the above-described knowledge system in the enterprise, a proposal is made on the proposal bulletin board or the bulletin board of the project as the problem proposal. For making the proposal, the window as described above always resides and a problem proposal button is clicked. Then, an individual, a location, a project name, a time and the like are automatically recorded in the database.

As the information collection, the result of information collection is entered to the proposal bulletin board, the message bulletin board, or the project bulletin board. For entering the result of information collection, an employee ID is automatically written to the database by pressing an information collection button as in the case of the problem proposal.

Furthermore, as the planning, the project administrator is recorded as an employee who has planned the project.

As the implementation, by registering a project completion, the implementation is automatically counted. Moreover, even when the schedule is finished, the implementation is also automatically counted.

Furthermore, as the evaluation/review, the evaluations and reviews written on the proposal bulletin board, the message bulletin board and the project are also counted. When the sales are increased, the amount of sales is also counted. Furthermore, whether or not next problem proposal, information collection and planning have been made based on the evaluation/review can be tracked for checking.

An empirical value of an excellent employee can be experienced as a simulation with the allowance of the employee. As a result, it is understood how the excellent employee has made an improvement for good results. In the enterprise, know-how of the excellent employees can be accumulated. Externally, the excellent employee can sell his/her own experience data as study within his/her allowable range. As a result, charismatic masters, web game idols, and web stars appear on the online games. A lot of people pay for going through the communications with such people as experiences.

### Third Embodiment

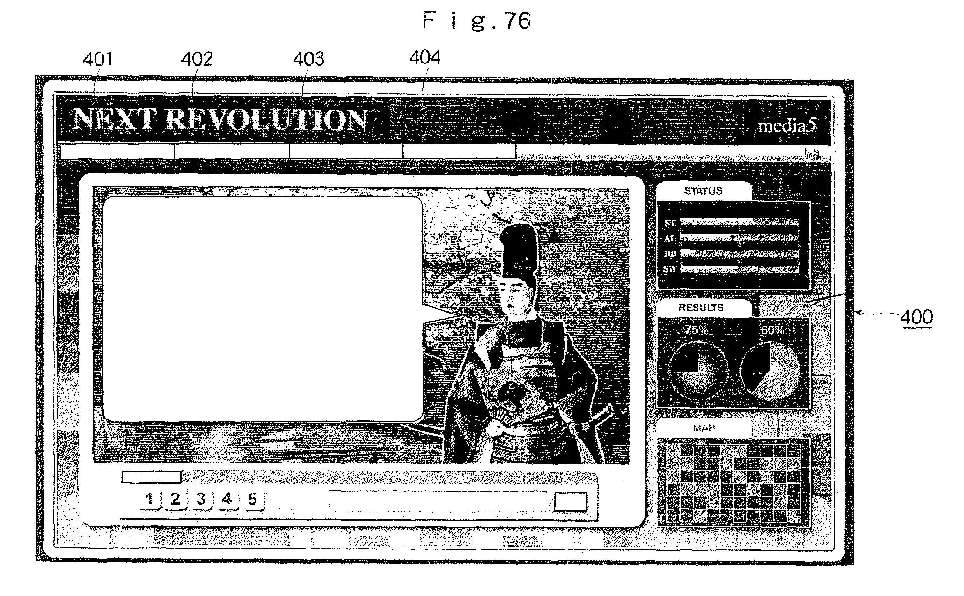

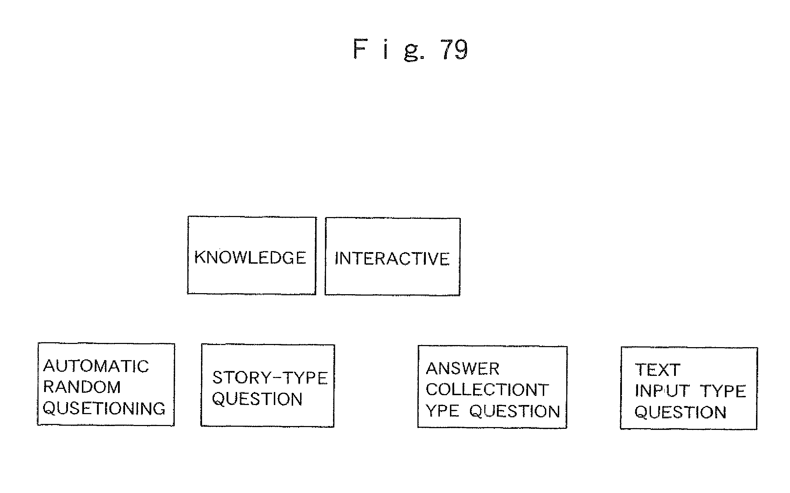

Figs. 76 to 92 illustrate a third embodiment. In Figs. 76 to 92, the same parts are denoted by the same reference numerals as those of the first embodiment for description. The third embodiment includes the steps of: identifying an action of an individual for playing a game having a match mode, in which the individual fights against an opponent or answers a question given by the opponent, as any one of five steps of question proposal of proposing a question associated with a game, information collection for collecting information for the proposed question, planning for planning a strategy to be implemented based on the collected information; implementation for implementing the planned strategy, and evaluation/review for evaluating and reviewing the implemented strategy; converting data for at least one of the five steps of the question proposal, the information collection, the planning, the implementation, and the evaluation/review into numeric data; and evaluating a preference of the individual based on the obtained numeric data.

Specifically, as illustrated in Fig. 50, this third embodiment is applied to an interactive study system which is displayed as the "NEXT REVOLUTION" 305 on the initial screen 300 of the general-use/SOHO information processing program.

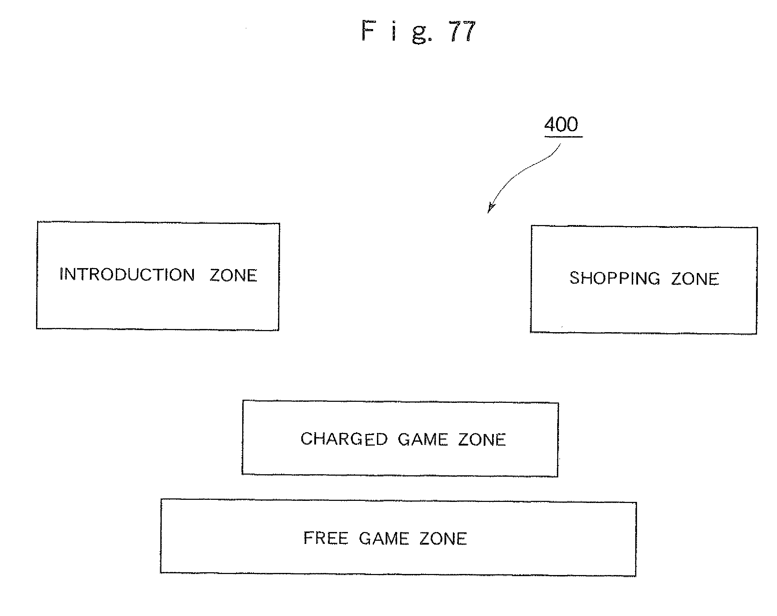

In the interactive study system, for example, on an initial screen 400 as illustrated in Fig. 76, a user clicks any of an "item selection" button 401, a "browsing" button 402, a "question" button 403, and a "search" button 404 to select a desired item. Moreover, in the interactive study system, as illustrated in Fig. 77, a charged game zone, a free game zone, or a shopping zone may also be selected.

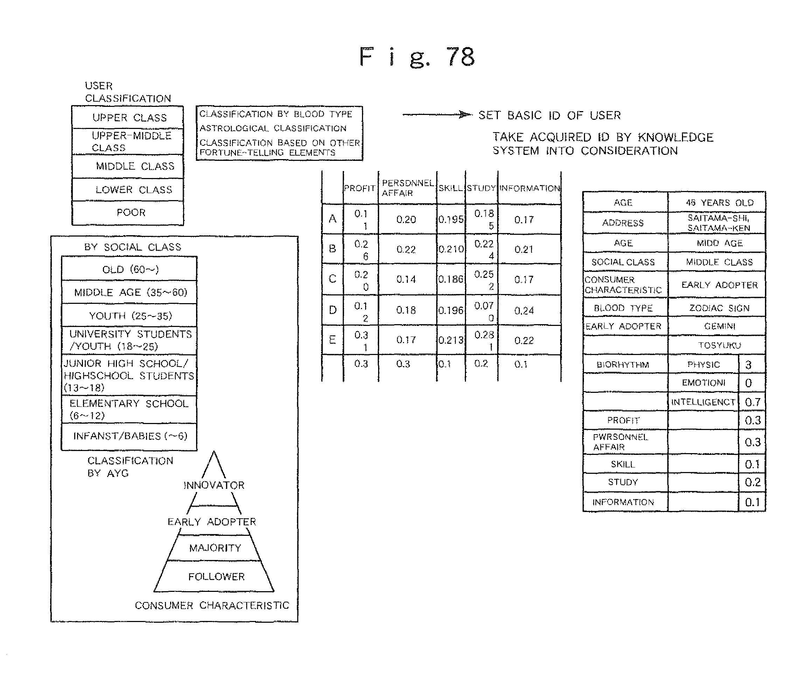

In the history game, as illustrated in Fig. 78, a user who participates in the game is to input a user category by clicking the "item selection" button 401. For the user category, as a classification 411 by social class, there are five social classes, that is, the upper class, the upper-middle class, the middle class, the lower class, and the poor. The user clicks the social class category under which the user is believed to fall. As a classification 412 by age, there are such categories as the old (60 years old and above), the middle age (35 to 59), the youth (25 to 34), university students and the youth (18 to 24), junior high school/high school students (13 to 17), elementary school students (6 to 12), and infants/babies (5 and under). Furthermore, as a classification 413 by consumer characteristic, there are the categories of innovator, early adopter, majority, and follower.

Besides the classifications described above, a classification by blood type, an astrological classification, and other classifications based on fortune-telling elements may be used as the user classification. Alternatively, the user may input the date of birth to be classified by using the biorhythm or the like.

As a personal ID set by using the user classification described above, for example, as illustrated in Fig. 78, an age, an address, a classification by age, a social class, a consumer characteristic, a blood type, a zodiac sign, a biorhythm and the like are cited. As the personal ID, the values of the profit, the personnel affairs, the skills, the study and the information obtained by the knowledge system described above are also input.

Next, as illustrated in Fig, 79, the user can select a knowledge test game or an interactive game. At the same time, the user can select an automatic-random questioning pattern, a story-type question pattern in which the personal ID is obtained through the game, an answer collection type question pattern, or a text input type question pattern.

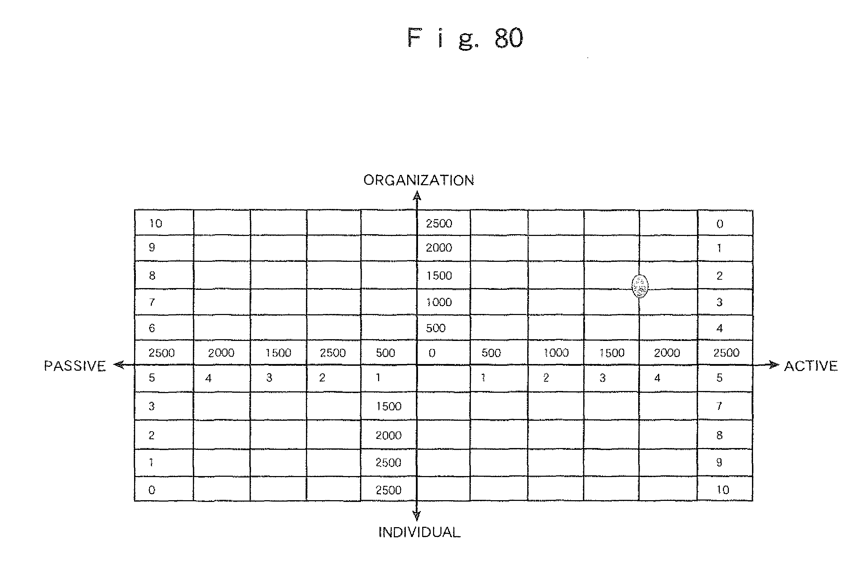

The history game is played on the Internet. The history game takes place in the past as well as in the future and all over the world including Japan. The history is the accumulation of human activities. Without exception of any organization, a nation has its birth and decay. In the process from the birth to the decay, the human actions vary from actively involved in the organization to passively involved in the organization. Furthermore, it is believed that the variation in human actions becomes greater with elapse of time as a result of the increase in the number of people and the development of the arms. The birth and the decay of a regime are represented by the ordinate axis, whereas the period and human activeness are represented by the abscissa axis. As a result, a graph as shown in Fig. 80 is obtained.

By setting the above items in more details as the user' s personal ID, a function for matching the user with a more closely matched person or a potential client that the user wants to meet is provided to allow the range of users to be narrowed.

A success pattern differs depending on a selected period category. In this game, the user takes a historical background into consideration to be promoted or obtain a piece of land or money in a study flow suitable for the selected period. In the enterprise, the game causes the user to consider how he/she manages the money, the skill, the information and the person in a method suitable for the period. In the shopping or SOHO, the history is the result of local products and culture. By purchasing a product associated with the history, a user's purchase intention is enhanced. Furthermore, interests are created or information is collected through the study flow. As a result, a new purchase intention can be created to activate the market.

Furthermore, if the present day or the near future is set as a business scene, the game can be used as a sales role playing game (RPG) or for the training in the enterprise. If the game story is set to take place in the United States, England, France or China of the present day, the game can be used as an overseas work role playing game (RPG).

In the history game, every nation has the birth and the decay as its history. In the process of decay, people naturally tend to act for themselves rather than for the organization. On the other hand, when a new nation or regime is born and the organization starts growing up based on new economy, people tend to more positively rely on the organization.

The online game aims to take period parameters into consideration for determining the result of the game to understand the characteristics of the period and to capture the sense of the period.

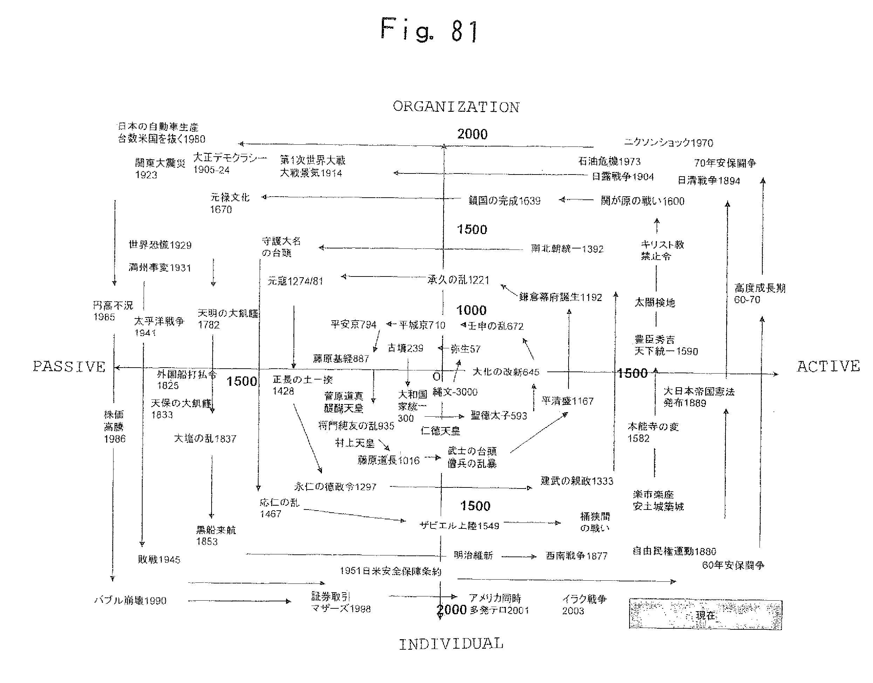

Coordinates illustrated in Fig. 81 are not absolute coordinates. The coordinates are set to indicate the time going on from the center outwardly in a counterclockwise direction. The upper part of the ordinate axis indicates the degree of organization-oriented tendency. The degree of organization-oriented tendency becomes higher as going up along the ordinate axis. The lower part of the ordinate axis indicates the degree of individual-oriented tendency. The degree of individual-oriented tendency becomes higher as going down along the ordinate axis. On the other hand, the right part of the abscissa axis indicates the degree of activeness. The degree of activeness becomes higher as going to the right along the abscissa axis. The left part of the abscissa axis indicates the degree of passiveness. The degree of passiveness becomes higher as going to the left along the abscissa axis.

For some items, a higher degree of organization-oriented tendency gives a higher score. For other items, a higher degree of individual-oriented tendency gives a higher score. For example, money or information demonstrates its power in an organization creation period in which the degree of individual-oriented tendency is high. On the other hand, a skill or a personnel evaluation demonstrates its power in the period of maturity of the organization. As in the case of numerals vertically provided on the right and left sides of the table, a vertical direction, in which the numerical value increases, is inversed for some items.

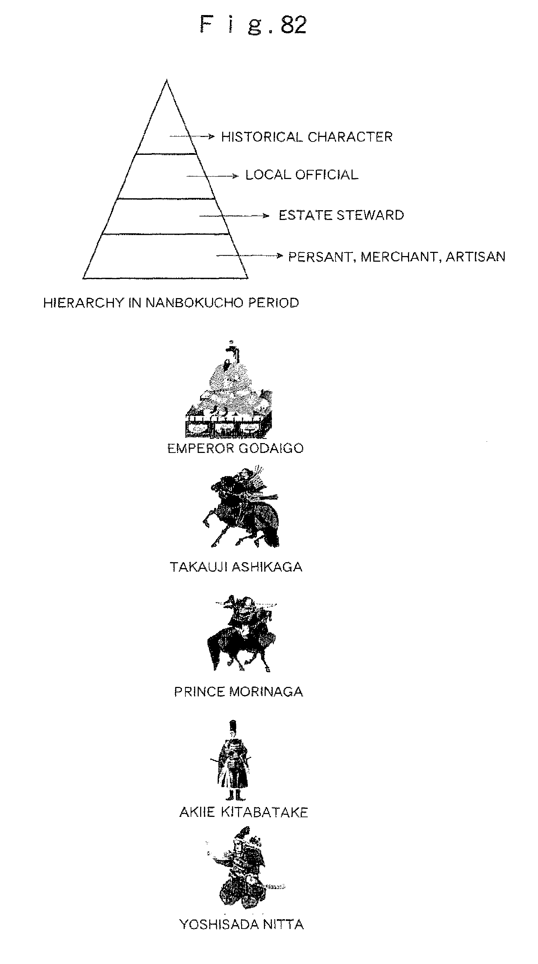

After the user who plays the game designates a period to determine the period as illustrated in Fig. 81, the user determines a master under whom he/she works or an occupation, as illustrated in Fig. 82.

For playing the game, as illustrated in Fig. 83, Japan is divided in several regions. The region, in which an answerer plays the game, can be selected. As a region mode, regions obtained by dividing Japan as Hokkaido, Tohoku, Hokuriku, Kanto, Kyoto/Osaka/Nara, Chubu/Shikoku, and Kyusyu are used. The number of units used for dividing Japan to obtain the regions can be increased or decreased.

For an advertisement displayed on the game screen, products of the region selected by the answerer are mainly displayed according to the selected region.

If world history is selected in place of Japanese history, the answerer can select the corresponding region in the world for playing the game.

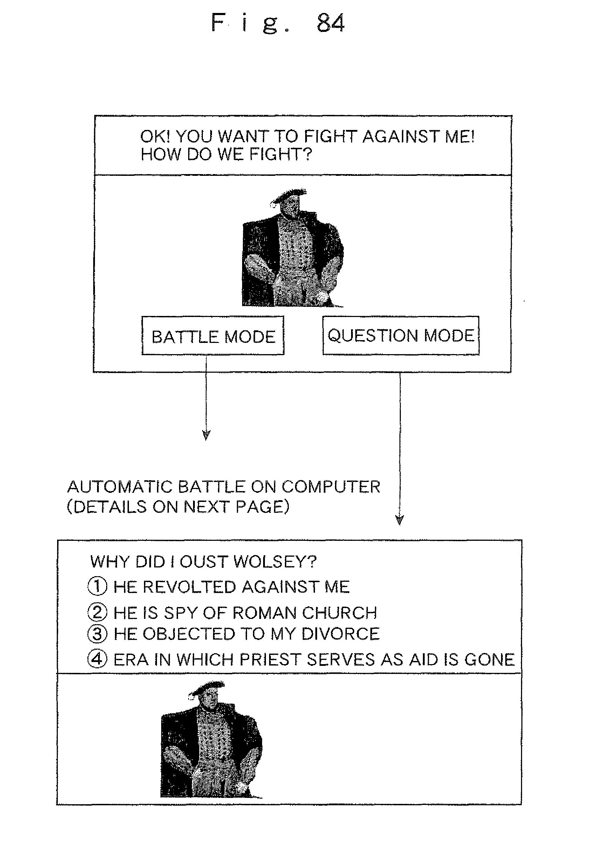

Now, the answerer clicks the item selection 401 to select the match mode on the screen illustrated in Fig. 76. For example, a screen as illustrated in Fig. 84 is displayed to select any of a battle mode and a question mode. If, for example, the question mode is selected, a question is given as illustrated in Fig. 84. If the answerer answers correctly to the question, the answerer gains a point. If the answerer cannot answer correctly, a point is deducted from the answerer's score.

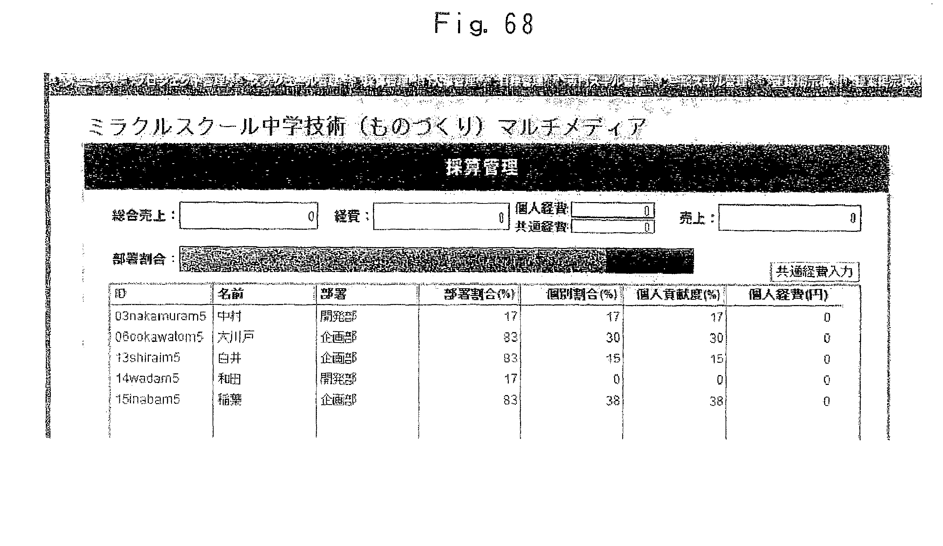

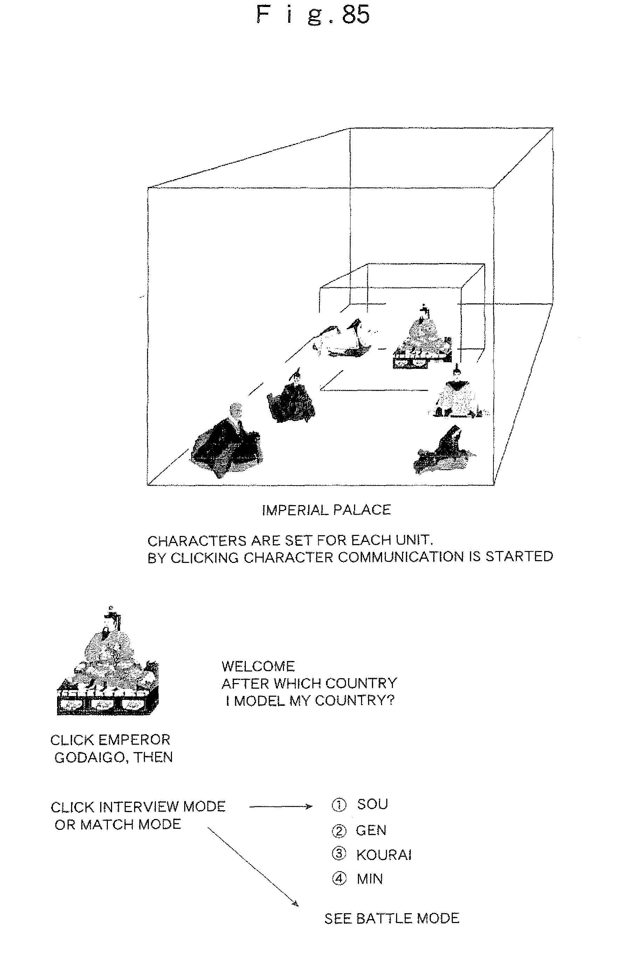

Specifically, for example, as illustrated in Fig. 85, the Nanbokucho period of Japan is selected. Then, first, the answerer meets a historical character such as Emperor Godaigo and takes an examination to be a retainer or the like. If the user has an extremely high parameter value and therefore is remarkably excellent, the user can immediately meet Emperor Godaigo. Then, when Emperor Godaigo gives questions and the user passes the examination, the user can be a local official. If the user does not get a high score for the questions, the user is set to be an estate steward. As illustrated in Fig. 68, according to the user's parameter value, the user meets Takauji Ashikaga or Yoshisada Nitta in some cases. If the user wishes to be a retainer, an interview is set. If the user wants to beat the opponent, the battle mode is selected.

An attacker can freely bet his/her points. If the attacker wins, he/she can earn the number of points bet from the opponent. If the attacker loses the game, the opponent can earn the number of points bet. If the answerer has a predetermined number of points or larger to get a subordinate, the answerer can fight with the subordinate. In such a case, the number of points of the subordinate is also counted as the answerer's points.

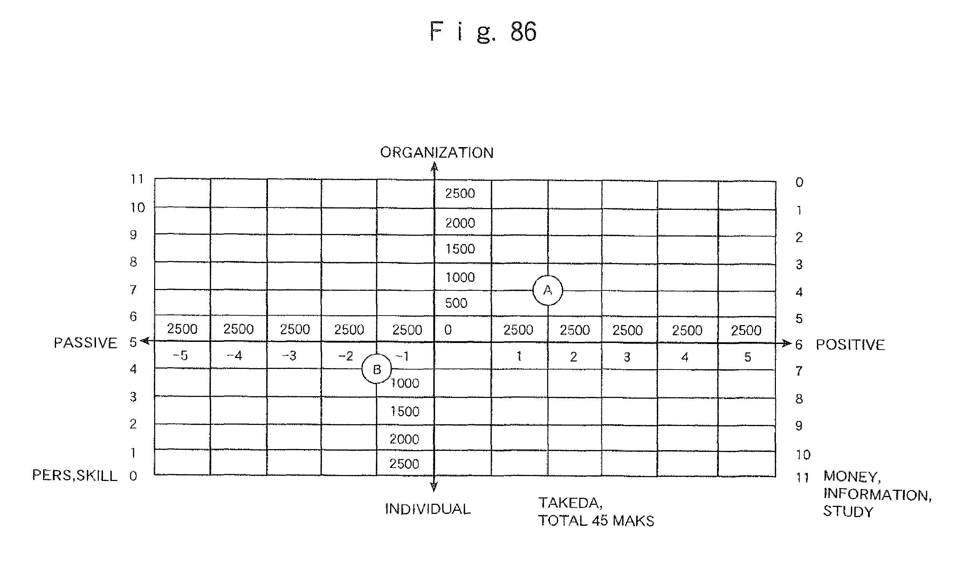

On the other hand, for the case in which the battle mode is selected, the battle between Kenshin Uesugi and Shingen Takeda as illustrated in Fig. 86 is now considered for the result of the battle in the battle mode. In this case, Kenshin Uesugi has a person parameter of "2", a money parameter of "8", an information parameter of "7", a skill parameter of "3", and a study parameter of "4", whereas Shingen Takeda has a person parameter of "7", a money parameter of "2", an information parameter of "3", an skill parameter of "4", and a study parameter of "8".

In each period, the money parameter is represented as the amount of land tax for a territory (territory is basically represented by a rice production therefrom = money). The user playing the game, in an attempt to get to a higher status, sets an interview to be a retainer of Ieyasu Tokugawa or beats the opponent to be a higher class to earn money.

Now, if the user selects a period A as a period in which the battle takes place, the degree of activeness is "2", and the degree of organization-oriented tendency is two stages up from "0". For the degree of organization-oriented tendency at the position two stages up from "0", the money, information, and study parameters are evaluated on a right scale with the upper end indicating "0" and the lower end indicating "11", whereas the person and skill parameters are evaluated on a left scale with the upper end indicating "11" and the lower end indicating "0".

As a result, a score of Kenshin Uesugi is obtained as follows. The person parameter is: 2x2+2x7=18, the money parameter is: 8x2+8x4=48, the information parameter is: 7x2+7x4=42, the skill parameter is: 3x2+3x7=27, and the study parameter is: 3x2+3x4=18. Accordingly, a total score is 153.

On the other hand, a score of Shingen Takeda is obtained as follows. The person parameter is: 7x2+7x7=63, the money parameter is: 2x2+2x2=8, the information parameter is: 3×2+3×2=12, the skill parameter is: 4×2+4×7=36, and the study parameter is: 8×2+8×4=48. Accordingly, a total score is 167.

By a score of 153 to 167, Shingen Takeda having a higher total score wins the battle. The user fights in the position of Kenshin Uesugi or Shingen Takeda.

If the user selects a period B as the period in which the battle takes place, the degree of activeness is "-1", and the degree of organization-oriented tendency is one stage down from "0". For the degree of organization-oriented tendency at the position one stage down from "0", the money, information, and study parameters are evaluated on the right scale with the upper end indicating "0" and the lower end indicating "11", whereas the person and skill parameters are evaluated on the left scale with the upper end indicating "11" and the lower end indicating "0".

Then, by a score of 129 to 117, Kenshin Uesugi having a higher total score wins this battle. The interactive study system has an edit function to allow the user to set a question or to pick up the data from the specialized skill. A character is selected or a new character is set, and a background is selected or a new background is set to be linked with each question.

As a questioning pattern of the interactive study system, a one-to-one automatic question creation pattern as a type 1, a dummy answer pattern as a type 2, and a user answer pattern as a type 3 are cited. However, the questioning pattern is not limited thereto. The questioning pattern may be arbitrary.

In the one-to-one automatic question creation pattern as the type 1, for example, for items A and B, multiple options including a correct answer such as two, three, four or five options are input. The answerer is invited to select any of the options to create a dummy question. The automatic creation of a question is possible.

In the dummy answer pattern as the type 2, for example, a plurality of answers including dummy answers such as "AIUEO", "AAAAAAA", "BBBBBBB" and "CCCCCCC" is prepared as answer items for the "item B" which is one of question items. The answerer is invited to select a correct answer from the plurality of answers.

Furthermore, in the user answer pattern as the type 3, an item which specifies the user such as a user name or a user ID is input. For the "item B" as a question item, "AIUEO" is input as a correct answer. The user inputs his/her own answer in an entry field. Therefore, it is possible to understand the idea of the individual user and the like. The user's answer is stored in a memory serving as storage means in association with the user ID.

As a marking method, a correct answer/incorrect answer determination method as a type 1, a point-addition marking method as a type 2, and a question setting navigation method as a type 3 are cited. In the correct answer/incorrect answer determination method as the type 1, automatic marking by a program is possible. On the other hand, in the point-addition marking method as the type 2, a marker is required for marking. In the case of the question setting navigation method as the type 3, a storyline is set to be varied depending on an answer to a question.

As a question programming pattern, a program order setting pattern as a type 1, a patterned question or a character-limited question for giving questions only to a specific character about his/her ability, attribute and personality as a type 2, a grammatical questioning pattern as a type 3, and a search type questioning pattern as a type 4 are cited. Among them, the grammatical questioning pattern as the type 3 is characteristic in that the logicality of the answerer or the like can be identified. Furthermore, the search type questioning pattern as the type 4 allows the evaluation of the ability of the answerer such as the search ability of the answerer which is not simply limited to memorized knowledge. Special-purpose data for the knowledge system may be used.

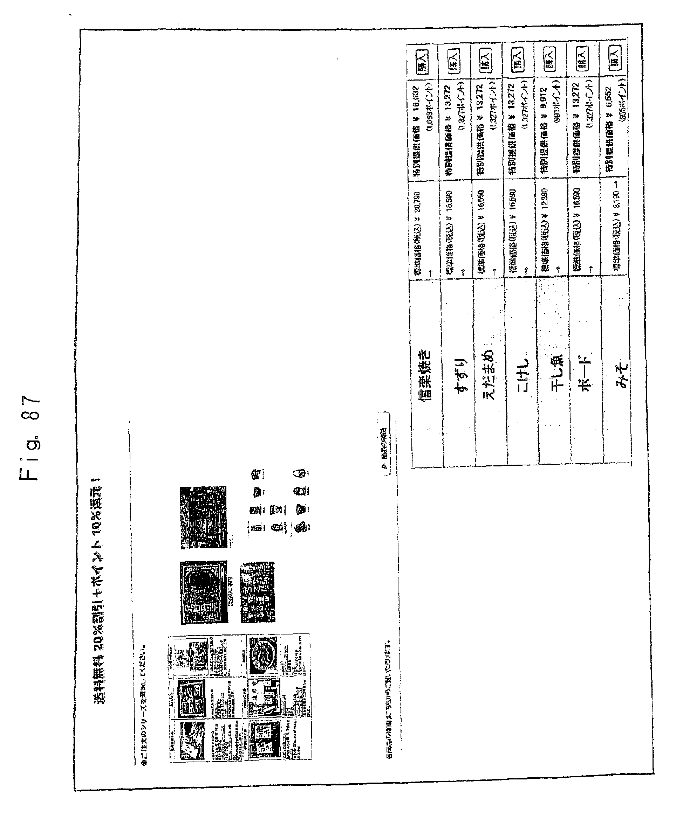

In the interactive study system, during the game, on the SHOPPING screen as illustrated in Fig. 87, for example, special local products such as Shigaraki ware, an inkstone, soybeans, a Kokeshi doll, dried fish, a board and a miso paste can be purchased. The answerer can earn the number of points according to the amount of purchase. As a result, according to a game score, the answerer can enjoy the service such as free shipping fee and a 20% discount. Alternatively, the answerer can earn additional points at a predetermined rate (for example, 10% or the like). The special-purpose data for the knowledge system may be used.

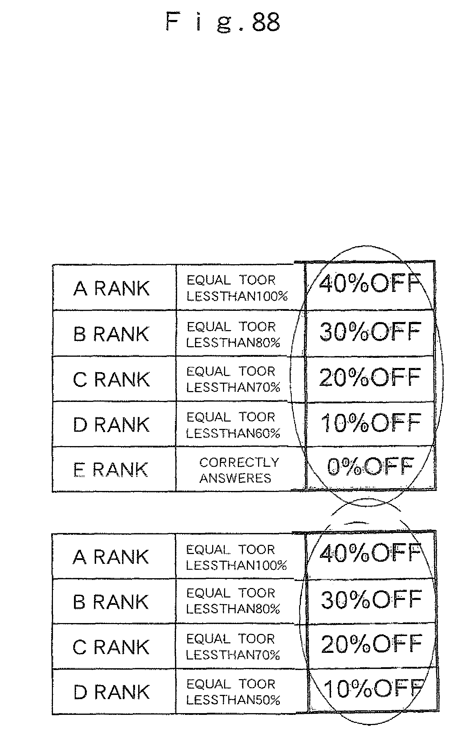

Specifically, as illustrated in Fig. 88, it is possible to set a higher discount rate for the answerer having a high game score. The points earned by a product purchase and the game score may be associated with each other. In the shopping mode, a participant user can freely set what he/she wants to sell by attaching the picture of an article, setting the price, and setting a sales person in the game mode. In addition, a character and a background are set, questions are created and set. Then, the user selects a character and set the selected character at the location where a target user is present.

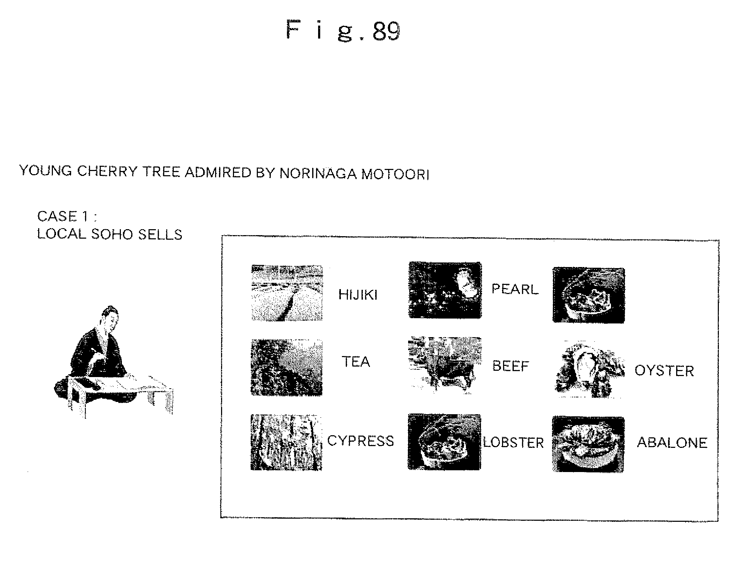

Alternatively, in the interactive study system, as illustrated in Fig. 89, a product may be purchased in the history game. Products to be sold in the history game may be determined according to the region or the period. In the case of the Kyoto/Osaka/Nara area, various products in association with the history game, such as pearl accessory in association with a story of pearl culture by Koukichi Mikimoto, Hij iki rice which is a special local dish in the Ise area from the Edo period, and steamed abalone from Ise from the Heian aristocracy period may be purchased.

In the game mode, Norinaga Motoori appears. After introducing an episode that Norinaga Motoori loved seeing cherry blossoms while drinking tea, "What does Norinaga Motoori recommend reading in his academic guide "Uiyamabumi"?" is given as a question. By selecting an answer to the question from the options: (1) The Tale of Genji, (2) The Tale of the Heike, and (3) The Flowering Spirit/The Pillow Book (correct answer: (1)), the user now wants to drink Norinaga's tea. Then, the user purchases tea from Matsuzaka on the shopping site. Since the user has 70% as a percentage of correctly answered questions, the user has a 20% discount.

There may be business matching between the SOHO businesses or a trading company which intends to sell the products. It can be said that the game is a new type of combination of promotion, business matching, and local-area introducing community.

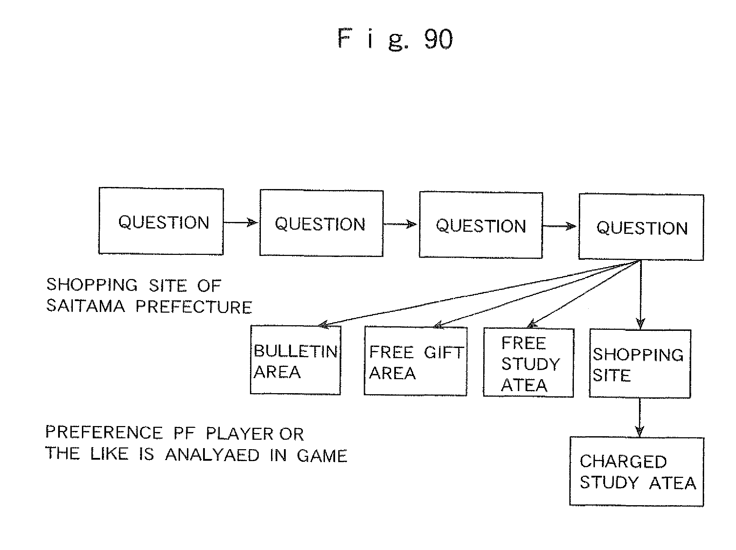

Furthermore, in the interactive study system, on the SHOPPING screen as illustrated in Fig. 90, the user can actually sell the products.

As described above, in the interactive study system, the preference of the answerer is analyzed while the answerer is playing the game. As illustrated in Fig. 90, along with the questions, a bulletin board area may be displayed according to the preference of the answerer. Moreover, a free gift area, a free study area, and a shopping site may be displayed. Furthermore, after the shopping site, a charged study area such as English school may be displayed.

In the interactive study system using the information processing program according to the third embodiment, as illustrated in Fig. 80, depending on the historical background selected by the user, the user's preference such as the organization-oriented or individual-oriented tendency and activeness or passiveness can be identified as personal data. Based on a graph or a chart as illustrated in Fig. 78, the user's preference is identified as data.

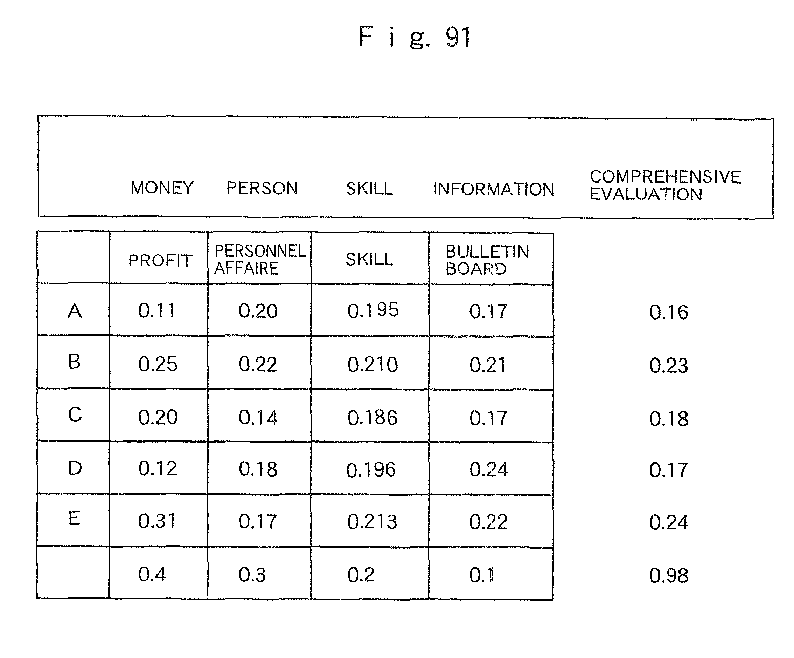

In this third embodiment, as illustrated in Fig. 91, a game score in the interactive study system is identified as the "profit" data, and the data of answers to questions is identified as "skill" or "information" data.

As described above, similarly to the second embodiment, the user's preference is identified as, for example, the "profit" data, the "personnel affairs" data, the "skill" data, and the "information" data in the interactive study system. The evaluation of the individual user in all the participants to the game is obtained as evaluation rate data of the individual to all the participants. According to the obtained evaluation rate data of the individual, the advertisement or information of a product is displayed or the user to display the advertisement or information of a product is selected on the game screen.

For a further description, in the interactive study system, the advertisement of a specific product can be set to be displayed only for a user having a predetermined value or higher (for example, 0.05 or higher on a scale of 1.00 in its entirety) as a value of the "profit" data. Alternatively, a discount rate is varied according to the value of the "profit" data. In this state, the advertisement of the product may be displayed for all the users connecting to the interactive study system.

In the interactive study system, for identifying the preference of the answerer, for example, the answerer is evaluated for items such as expertise, knowledge, executive ability, productivity, efforts, comprehension, insight, judgment, expressiveness, concentration, planning ability, and creativity.

For the evaluation for the items such as expertise, knowledge, executive ability, productivity, efforts, comprehension, insight, judgment, expressiveness, concentration, planning ability, and creativity, data is obtained from the personnel management item of the information processing program according to the second embodiment described above.

Among the items selected by the answerer for playing the game such as a period, a city, a citizen, a leader, a skill, a resource, a territory, a weather, a building, a battle, diplomacy, a civilization and a region, and a race, knowledge about the monarchy for the item concerning the leader, and expert knowledge for skills can be identified.

Furthermore, if the territory is expanded while the answerer is playing the game, the territory expansion leads to the sales performance or the profit. A general skill such as the EQ for recruitment, strategic thinking ability for military buildup, a sales sense for negotiations, knowledge of the art of war by Sun Tzu for implementing a strategy, approach to the sales performance or the profit for going to battle, and legal knowledge or the degree of comprehension for a law, trouble and a suit can be identified.

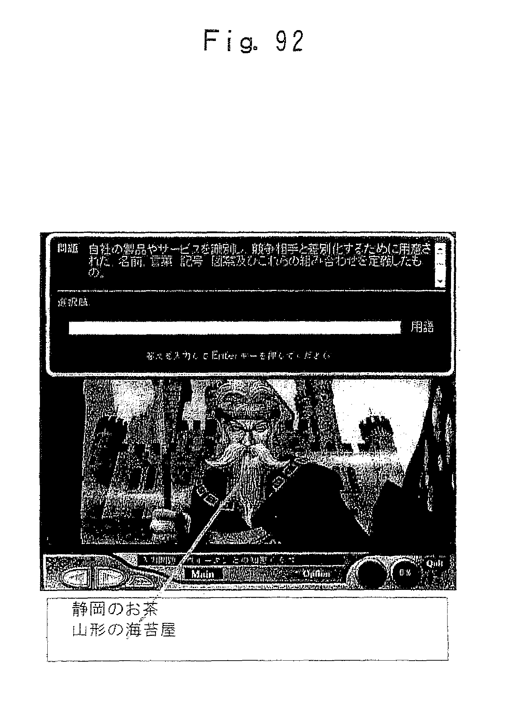

In the lower part of the game screen, as illustrated in Fig. 92, the advertisement of a product can be displayed. For example, in Shizaoka, the advertisement of tea is displayed. In Yamagata, the advertisement of laver is displayed.

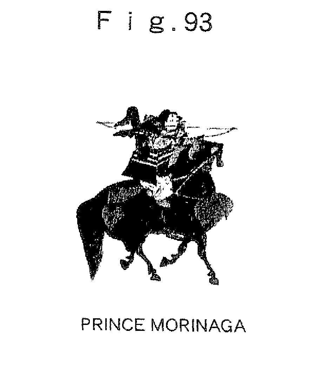

On the game screen, as illustrated in Fig. 93, along with the storyline, for example, a little while after the user becomes a retainer of Prince Moriyoshi, a Buddhist priest of Mount Hiei guides the user to a temple. When the user asks: "What is this incense called?" about a nicely smelling incense, the priest answers "This is eaglewood. We use this incense since the erection of this temple. Our great teacher Denkyo Taishi loves it." and "If you want to get the incense, go to purchase eaglewood at XX Garden in Shiga-gun, which is a favorite of the Hiei priests". As a result, the user may be set to go to the shopping zone as illustrated in Fig. 77. In this case, since the user does not know much about Mount Hiei or the Hokke sutra about which the priest asked, the user has a 5% discount. It is nice because the product would be sold at the regular price if I could not answer correctly at all. I will study more before my next visit to the shopping site to get a 10% discount. For studying more about the incense, the user looks for a priest who is familiar with the incense to repeat questions and answers. For the incense, "the art of incense burning" exists and there is much to know about the incense. The user studies a little about the art of incense burning and purchases some highly reputed incenses.

As described above, the question to the priest makes an opportunity of the question proposal. The priest is set to be the owner of the shopping site of the incenses and to give interesting knowledge. Then, as the information collection, the history of various incenses and the point of the art of the incense burning are introduced in a friendly manner. As the planning, the products to be purchased on the shopping site may be examined or incorporated into the game. Then, the user purchases a product. According to the degree of the knowledge of the user, a discount rate is set. As the evaluation/review, the user who purchases the product evaluates the incense. The user can challenge the priest on Mount Hiei again for a higher discount rate after the user widens the knowledge.

As described above, through the study process as described above, a supplier supplies a product, whereas a consumer purchases a product. Therefore, by taking advantage of the characteristic, the consumer understands how much effort the supplier makes through the study process, which results in a purchase. Specifically, the advertisement, which makes the user know the study process with a more attractive expression, can maximally obtain the interest or the consent of the consumer. An object of the project is to let the consumer know the existence or the content of the product by expressing the study process as a game.

Moreover, whether or not the study process is correct is virtually experienced by the consumer who regards the shopping process as the study process. As a result, the supplier can determine more specific needs of consumers.

This system is advantageous in that both the enterprise and the consumer go through the study process to constantly evolve to have the same orientation.

The consumer can not merely purchase the products but also output a job as the SOHO.

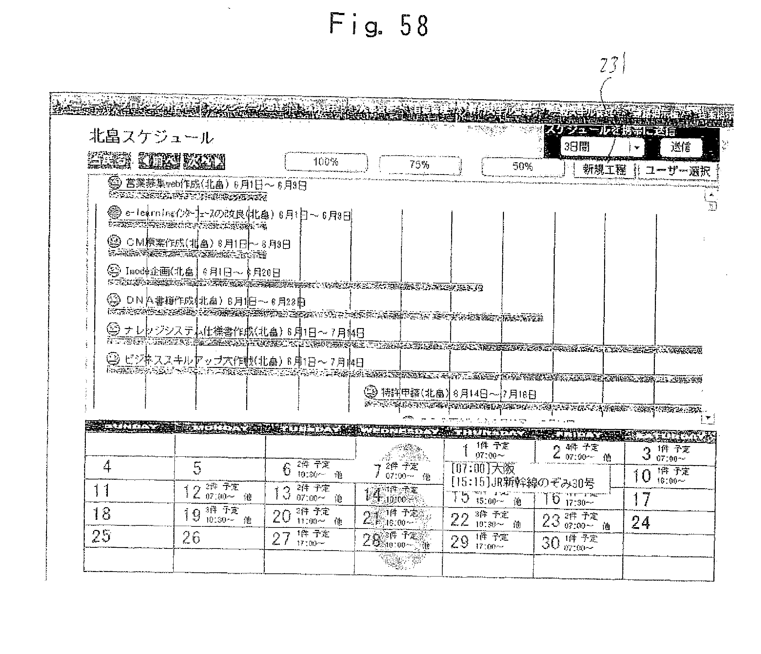

In the interactive study system, the answerer (user) studies various things while having a conversation with a question master (information processing program) through the game. As illustrated in Fig. 58, the answerer (user) first selects a historical background, and then selects a character and a scene to play the game. For example, as illustrated in Fig. 58, the scene is constituted by a two-dimensional screen. However, it is apparent that the scene may also be constituted by a three-dimensional screen as needed.

The historical background is roughly classified into the categories of Japanese history and world history. For example, if the Japanese history category is selected, as illustrated in Fig. 80, a period is indicated by a unit of 1000 years on the axes of coordinates. On the axes of coordinates indicating a period, Japanese history is placed. Furthermore, specifically, Japanese history is understood as the history of a society or a nation evolving in a spiral manner. As a result, as illustrated in Fig. 81, the Jomon period corresponding to the oldest period in about 3000 B.C. is placed at the center as the axis of coordinate of the history. The time spirally goes on from the center of the axes of coordinates in a counterclockwise direction. Historical events in Japan are indicated thereon. The lower right corresponds to the present time.

The historical background may not be classified into small categories as described above. The historical background may be more roughly classified in a simple manner as the ancient time, the medieval period, the modern age, and the present time.

For the historical background selected by the answerer, the degree of tendency is indicated as illustrated in Fig. 81. A higher degree of organization-oriented tendency is indicated as going up in the vertical direction, whereas a higher degree of individualism is indicated as going down in the vertical direction. A higher degree of activeness tendency is indicated as going to the right in the horizontal direction, whereas a higher degree of passiveness tendency is indicated as going to the left in the horizontal direction.

Furthermore, based on the historical background selected from the ancient time, the medieval period, the modern age, the present time and the future, the degree of combativeness, cooperativeness, individualism, pessimism, realism or dreaming tendency of the answerer can be identified. Moreover, a character on the game is allowed to go through the experiences on the game.

The selection of the historical background by the answerer allows the tendency of the answerer to be identified.

For example, as illustrated in Fig. 81, when the answerer selects Japan in the high economic growth period, the active tendency is determined as "5", which is the highest on a scale of 1 to 5, whereas the organization-oriented tendency is determined as "3" on a scale of 1 to 5.

Furthermore, in the interactive study system, as illustrated in Fig. 82, a character for playing the game can be selected. The character is not selected for merely meeting the preference of the answerer. In accordance with the character selected by the answerer, the character-limited question pattern is enabled as described above. At the same time, the ability, attribute, and personality of the character preferred by the answerer can be identified.

### Fourth Embodiment

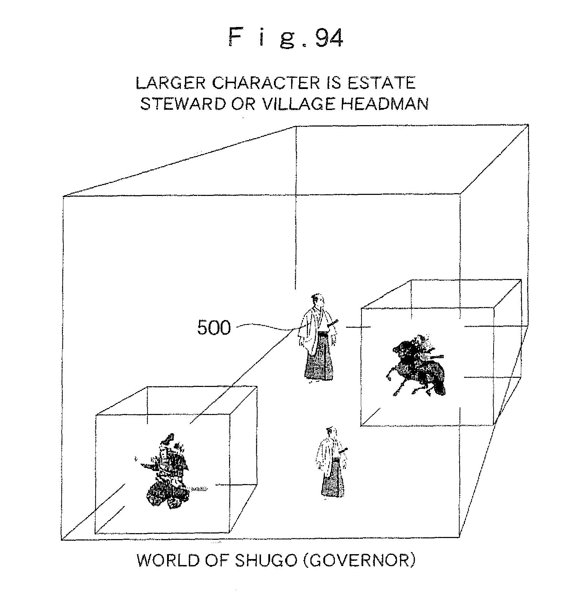

Fig. 94 illustrates a fourth embodiment of the present invention. The same parts are denoted by the same reference numerals as those of the first embodiment for description. The fourth embodiment includes the steps of: identifying an action of an individual for seeking a job through the Internet as any one of five steps of question proposal of proposing a question associated with a job, information collection for collecting information for the proposed question, planning for setting a plan for seeking a job based on the collected information, implementation for implementing the plan to seek a job, and evaluation/review for evaluating and reviewing the found job; converting data for at least one of the five steps of the question proposal, the information collection, the planning, the implementation, and the evaluation/review into numeric data; and evaluating an aptitude of the individual seeking a job based on the obtained numeric data.

Specifically, as illustrated in Fig. 50, this fourth embodiment is applied to a system for seeking a job or for recruitment through the Internet, which is displayed as the "SOHO" 302 on the initial screen 300 of the general-use/SOHO information processing program.

On the screen of the "SOHO" 302, for example, by creating a virtual market on an online game through the Internet, a potential human resource can be discovered. Conventionally, it is when someone decides to change the job that he/she sees a recruiting advertisement or visits a Web site. In the information processing program according to the fourth embodiment, however, it is possible to find a suitable job or discover the ability in the virtual game world.

As illustrated in Fig. 94, the enterprise places a warrior character 500 for recruitment in a game space to be easily noticed by a needed target. When the user playing the game moves to a unit representing a town of ordinary people to find an opponent to fight or a retainer and approaches the recruiting character 500. Then, the recruiting character of the enterprise explains: "We are recruiting a sales staff member.", "The sales staff member is like an attacking worrier in the old age.", and "I will teach you a sales method in the warrior style." Furthermore, the character asks: "Do you know the art of war by Sun Tzu?", "Which of the following?", "Ultimately, it is a spirit. You had better not be particular about the form for anything. Human communication begins with courtesy. Things starts with justice. It is important to have a sense of justice for everything.". The character also asks: "What kind of job do you seek?" and "Channel sales, walk-in sales, producer, sales for corporation, and marketing". Moreover, the character says "Our sales staff perform the following activities", "Marketing, product planning and producing, plan sales for corporation, and store display" to explain the activities of the enterprise to guide the user to an enterprise introduction zone. As a result, the character is set to ask the user a question to know whether or not the user has the ability required for the enterprise and a preference and a personality suitable for the enterprise.

Then, when the user enters an answer on the screen as illustrated in Fig. 76, the input information is automatically stored in the database allocated to the "SOHO" screen 302 of the server 3. Although the content of the question from the character to the user is arbitrary, a question for explaining or appealing the attraction of the enterprise or the like is set. For example, a questionnaire; "What kind of job are you seeking, channel sales, walk-in sales, producer, sales for corporation, or marketing?" may be sent to the user. Alternatively, the character may explain about the marketing, the product planning and producing, plan sales for corporation, shop display as the activities of the sales staff of the enterprise to guide the user to the enterprise introduction zone. Further alternatively, the user may be guided to a more specific zone of the enterprise to make contact with a staff member in charge. Since the enterprise can interview an extremely reduced number of persons in this stage, the number of unsuccessful interviews is reduced. As a result, the cost and the time required for recruitment are remarkably reduced.

In the system, a character check and examinations are prepared at a certain degree to be smoothly used for training for the enterprise until the start of work (for example, in the case of a new recruit, in a period from an informal job offer to the start of work) and for the examinations after the start of work. Since the person having the data of money, person, information and skill in the knowledge system is regarded as having actual personnel data, the ability of the person can be fairly correctly identified.

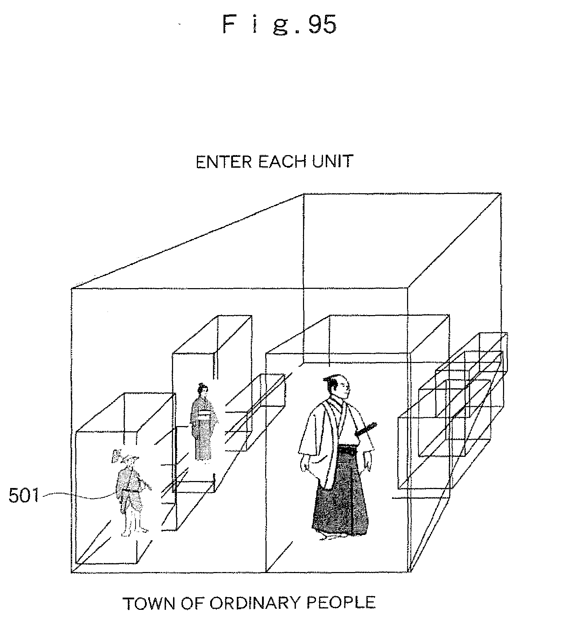

On the other hand, in the case of an individual 501 seeking a job, as illustrated in Fig. 95, the individual can find the recruiting character 500 in the game space. While answering questions or through conversations, the individual can find a job suited for himself/herself. A character of the individual seeking a job introduces himself/herself as: "My hobby is visiting historical places. I am particularly familiar with the games and food of ordinary people in the Edo period. I want to make use of such experiences to enjoy heartful communications with clients as those in the Edo period.". Alternatively, the individual may ask about the kind of work such as "channel sales, walk-in sales, producer, sales for corporation, and marketing". The individual looks for information related with the job or other recruiting characters to find the most suitable job and goes to the enterprise zone to determine the enterprise. Alternatively, an interview with an interviewer character is set to determine on the spot whether or not the individual is suited for the job. The individual may go to a next step or make contact with the recruiting staff based on the result. Further alternatively, it is possible to develop the skills in the e-learning site set in the game, which is set for developing the skills. Conventionally, there are a lot of things to discover after the start of work in the company. In the system, however, the individual can take time to know about the enterprise until the start of work. Therefore, the stability is expected to be improved.

Furthermore, an individual seeking a job as the SOHO places a character in the game to be noticed by the recruitment staff, in particular. The individual can sell himself/herself saying "My hobby is visiting historical places. I am particularly familiar with the games and food of ordinary people in the Edo period. I want to make use of such experiences to create a designed package with a lot of Japanese atmosphere." or ask what kind of work is offered such as "package designing, software development, book designing, contents creation" to clarify the jobs that he/she can do, in particular, the points that distinguish herself/himself from the others. Alternatively, the individual seeks a SOHO job in the game. Moreover, since the evaluation in the knowledge system can be used in the enterprise, the business performance so far can be demonstrated. As a result, the enterprise can rely on the individual as much as on the employees in the enterprise.

If the individual working as the SOHO uses the knowledge system, the recruiting staff can smoothly manage the recruitment. When the adopted SOHO system has the data of the knowledge system, the ability of the individual can be fairly precisely identified. Moreover, since the SOHO does not conventionally belong to the enterprise in a direct manner, he/she does not do work with as much responsibility as that of the employee. However, by using the evaluation by the knowledge system, the SOHO can carry over his/her skill performance. Therefore, even the SOHO is expected to work with responsibility.

### Fifth Embodiment

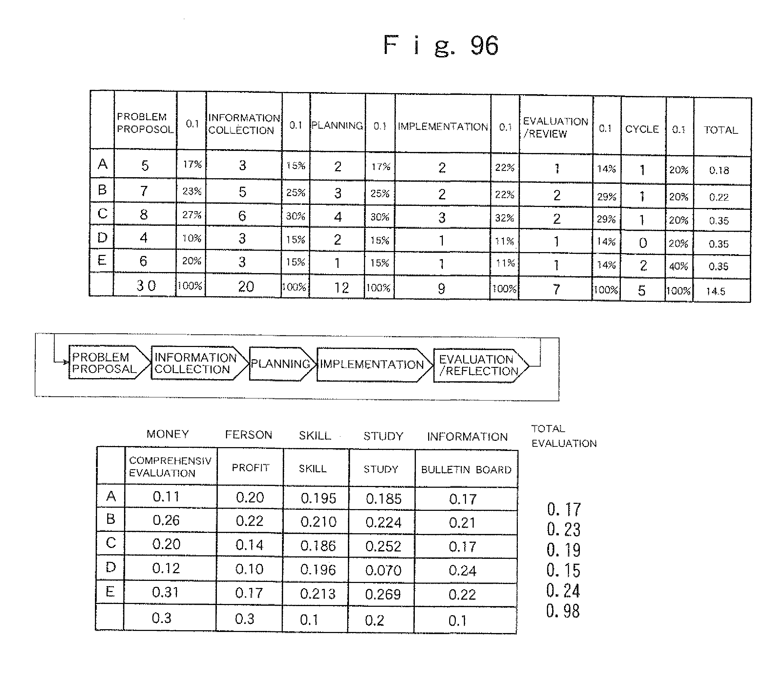

Fig. 96 illustrates a fifth embodiment of the present invention. The same parts are denoted by the same reference numerals as those of the first embodiment for description. In the fifth embodiment, for converting data for at least one of the five steps of the problem proposal, the information collection, the planning, the implementation, and the evaluation/review into numeric data, the problem proposal, the information collection, the planning, the implementation, and the evaluation/review are immediately evaluated as numeric values.

Specifically, in the fifth embodiment, when an employee writes data related to each of the steps of the problem proposal, the information collection, the planning, the implementation, and the evaluation/review on the bulletin board as illustrated in Fig. 96, the employee himself/herself selects any of the steps of the problem proposal, the information collection, the planning, the implementation, and the evaluation/review, to which the data correspond. The data is immediately converted into numeric data as the number of written comments or messages for each item.

Herein, the number of cycles corresponds to the number of execution times of the study cycle consisting of a series of the problem proposal, the information collection, the planning, the implementation, and the evaluation/review.

As described above, the numeric data obtained by converting data for each of the steps of the problem proposal, the information collection, the planning, the implementation, and the evaluation/review may be taken into consideration together with the profit and the personnel affairs as illustrated in Fig. 96 as a study evaluation item in a broad sense to evaluate the contribution of the employee.

As described above, the present invention can improve each of the actions by representing an individual action pattern in the enterprise, the game, the shopping and the SOHO as a study flow. Furthermore, an action can be commonly treated in the four modes. Moreover, as parameters of the ID common to the four modes, there are the money, the person, the information and the skill. The enterprise can evaluate an individual in four points, that is, how much money the individual has earned, i.e., the amount of money, a personnel evaluation, how much information or how many ideas the individual has offered, and the ability of the individual.

As the relation of the four systems, the personal evaluation items, i.e., the money, the information, the skill and the person, are connected through the study flow from the problem (question) proposal to the information collection to the planning to the implementation to the evaluation/review.

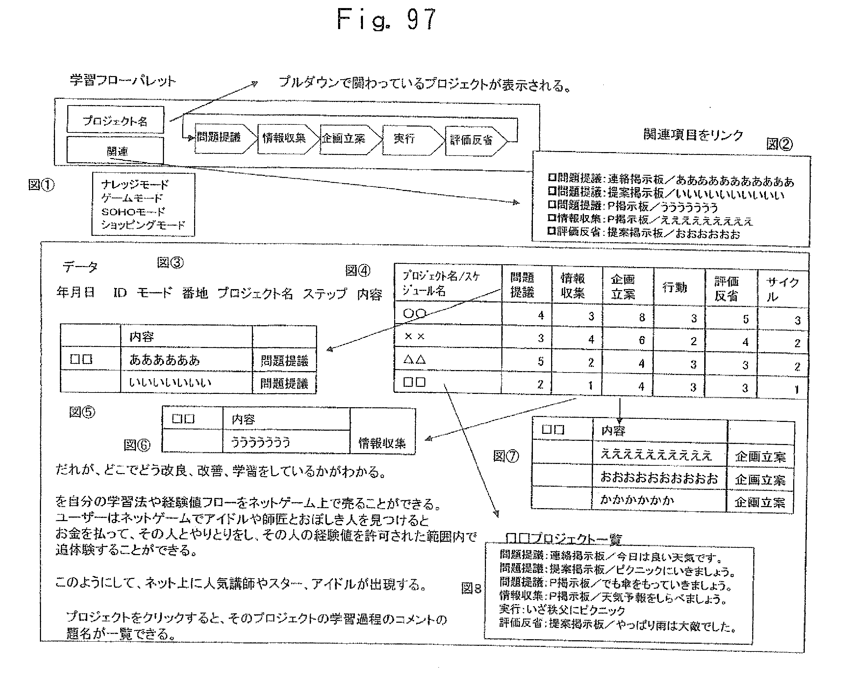

On the study flow pallet, the buttons of the study flow for a series of the problem proposal, the information collection, the planning, the implementation, and the evaluation/review are placed in the center. A project name whose content is to be written is selected to link related data. As a result, the study flow of the written content can be understood. The study flow pallet is provided for any of the knowledge mode, the game mode, the SOHO mode, and the shopping mode. This is because any of the game, the SOHO, the recruitment, and the shopping can be represented by the study flow and therefore a consciousness of the study flow is desirable. Once the study flow button (the problem proposal, the information collection, the planning, the implementation or the evaluation/review) is pressed, a date, an ID, an address, a project name, a step and a content thereof are recorded. Then, as illustrated in Fig. 97, a study flow list can be viewed. For example, by clicking the problem proposal, the information collection, and the planning items, the lists of written contents for the respective items are displayed. By clicking the project name, a list of the written contents of the study flow related to the project is displayed.

## Claims

1. An information processing device for processing information by using a plurality of pieces of prestored data, comprising:
storage means for storing the plurality of pieces of data related to each other together with relation information;
data processing means for processing the plurality of pieces of data based on the relation information; and
storage control means for newly storing the data processed by the data processing means in the storage means with a content of processing of the data as relation information.

2. An information processing device according to Claim 1, wherein the data stored in the storage means is managed by a page of a database storing the data, an attribute of the data, and a parameter of the data.

3. An information processing device according to Claim 1, wherein the data stored in the storage means is managed by a class indicating an order in a data processing procedure, an item of the data, and a parameter of the data.

4. An information processing device according to any one of Claims 1 to 3, wherein the data processing means performs a process of searching for and displaying data having the same relation information as or relation information similar to relation information input by input means based on the relation information input by the input means.

5. An information processing device according to any one of Claims 1 to 3, wherein the data processing means performs a process of searching for and evaluating data having the same relation information as or relation information similar to relation information input by input means based on the relation information input by the input means.

6. An information processing device according to any one of Claims 1 to 5, wherein the storage control means stores the data processed by the data processing means, the data being provided with data processing performed by the data processing means as history information.

7. An information processing program executed by using a computer resource for processing information using a plurality of pieces of prestored data, comprising:
a first step of selecting data from storage means storing the plurality of pieces of data related to each other together with relation information;
a second step of selecting and reading another piece of data related to the data selected by the first step from the storage means based on the data selected by the first step;
a third step of processing the data read by the second step by data processing means; and
a fourth step of newly storing the data processed by the third step in the storage means with a content of processing of the data as relation information.

8. An information processing program comprising the steps of:
identifying all actions of an employee for accomplishing a task as any one of five steps of: problem proposal for proposing a problem related to the task to be accomplished; information collection for collecting information about the proposed problem; planning of setting a plan of the task to be accomplished based on the collected information; implementation for implementing the set plan; and evaluation/review of evaluating and reviewing the implemented plan;
converting data for at least one of the five steps of the problem proposal, the information collection, the planning, the implementation, and the evaluation/review into numeric data; and
calculating a degree of contribution to sales of the task accomplished by the employee based on the obtained numeric data.

9. An information processing program according to Claim 8, wherein the degree of contribution to the sales of the task accomplished by the employee is calculated by converting at least one of the five steps of the problem proposal, the information collection, the planning, the implementation, and the evaluation/review into numeric data as four parameters of person, money, skill and information and by calculating a rate of the four numeric parameters of the person, the money, the skill and the information of the employee to totals.

10. An information processing program according to Claim 8, wherein the number of proposals written by the employee on a bulletin board as problems related to the task to be accomplished is used as data related to the problem proposal.

11. An information processing program according to Claim 8, wherein the number of pieces of information written by the employee on a bulletin board as information related to the proposed problem is used as data related to the information collection.

12. An information processing program according to Claim 8, wherein the number of plans written by the employee on a bulletin board as a plan of the task to be accomplished is used as data related to the planning.

13. An information processing program according to Claim 8, wherein a value calculated by multiplying time data required for the employee to accomplish the task and hourly salary data of the employee is used as data related to the implementation.

14. An information processing program according to Claim 8, wherein the number of pieces of information written by the employee on a bulletin board as an evaluation and a review of the implemented plan is used as data related to the evaluation/review.

15. An information processing program according to Claim 8, wherein a numerical value of an evaluation by a third party or himself/herself for the task accomplished by the employee is used as data related to the evaluation/review.

16. An information processing program comprising the steps of:
identifying an action of an individual for playing a game having a match mode in which the individual fights against an opponent or answers a question given by the opponent as any one of five steps of: question proposal for proposing a question related to the game; information collection for collecting information about the proposed question; planning of planning a strategy to be implemented based on the collected information; implementation for implementing the planned strategy; and evaluation/review of evaluating and reviewing the implemented strategy;
converting data for at least one of the five steps of the question proposal, the information collection, the planning, the implementation, and the evaluation/review into numeric data; and
evaluating a preference of the individual based on the obtained numeric data.

17. An information processing program comprising the steps of :
identifying an action of an individual for purchasing a product or a service through the Internet as any one of five steps of: question proposal for proposing a question related to a purchase; information collection for collecting information about the proposed question; planning of setting a plan to be implemented based on the collected information; implementation for implementing the set plan to purchase the product or the service; and evaluation/review of evaluating and reviewing the purchased product or service;
converting data for at least one of the five steps of the question proposal, the information collection, the planning, the implementation, and the evaluation/review into numeric data; and
evaluating a preference of the individual who purchased or unpurchased the product or the service based on the obtained numeric data.

18. An information processing program comprising the steps of:
identifying an action of an individual for seeking a job through the Internet as any one of five steps of: question proposal for proposing a question related to the job; information collection for collecting information about the proposed question; planning of setting a plan for seeking the job based on the collected information; implementation for implementing the set plan to seek the job; and evaluation/review of evaluating and reviewing the found job;
converting data for at least one of the five steps of the question proposal, the information collection, the planning, the implementation, and the evaluation/review into numeric data; and
evaluating an aptitude of the individual seeking the job based on the obtained numeric data.

19. An information processing device comprising:
identification means for identifying all actions of an employee for accomplishing a task as any one of five steps of: problem proposal for proposing a problem related to the task to be accomplished; information collection for collecting information about the proposed problem; planning of setting a plan of the task to be accomplished based on the collected information; implementation for implementing the set plan; and evaluation/review of evaluating and reviewing the implemented plan;
processing means for converting data for at least one of the five steps of the problem proposal, the information collection, the planning, the implementation, and the evaluation/review into numeric data; and
calculation means for calculating a degree of contribution to sales of the task accomplished by the employee based on the obtained numeric data.
